# EUROPEAN PATENT APPLICATION

(11) **EP 2 011 683 A2**
(43) Date of publication of application: **07.01.2009**
(21) Application number: 08158458.3
(22) Date of filing: 18.06.2008
(51) Int. Cl.: B60K 17/10

(54) **Hydraulic wheel-drive working vehicle**

(30) Priority: 21.06.2007 US 945507 P; 26.07.2007 US 952139 P
(71) Applicant: KANZAKI KOKYUKOKI MFG. CO., LTD., Amagasaki-shi, Hyogo 661-0981 (JP)
(72) Inventor: Nozaki, Takeaki, Hyogo Hyogo 661-0981 (JP); Yasuda, Toshifumi, Hyogo Hyogo 661-0981 (JP)
(74) Representative: Peckmann, Ralf

(57) **Abstract**

A hydraulic wheel-drive working vehicle (1G) according to the present invention makes it possible to change a driving state by a driving-mode switching valve (620G) between a right-left differential-lock driving state in which a pair of driving wheels are driven in an independent manner to each other with hydraulic fluid discharged from a hydraulic pump (420) and having respective amounts defined by a flow dividing/combining mechanism (640G) and a right-left differential driving state in which the pair of left and right driving wheels are driven in a hydraulically differential manner to each other, and also to supply the hydraulic fluid from the hydraulic pump to the pair of hydraulic motors (120) without being subjected to fluid load of the flow dividing/combining mechanism at the right-left differential driving state, thereby enhancing transmission efficiency at the right-left differential driving state.

## Description

### BACKGROUND OF THE INVENTION

### Field of the Invention

The present invention relates to a hydraulic wheel-drive working vehicle in which a pair of left and right driving wheels are respectively driven by rotational power from a pair of left and right hydraulic motors that cooperates with a hydraulic pump.

### Related Art

There has been proposed a hydraulic wheel-drive working vehicle in which a pair of left and right driving wheels are respectively driven by rotational power from a pair of left and right hydraulic motors that cooperates with a hydraulic pump, the working vehicle being capable of switching driving state between a right-left differential driving state in which the pair of left and right driving wheels are driven in a differential manner to each other and a right-left differential-lock driving state in which the pair of left and right driving wheels are driven in an independent manner to each other (see, for example, Japanese unexamined patent publication No. H11-208299, which is hereinafter referred to as patent document 1).

Specifically, the hydraulic wheel-drive working vehicle disclosed in the patent document 1 includes a driving power source, a pair of left and right driving wheels, a hydraulic pump operatively driven by the driving power source, a pair of left and right hydraulic motors fluidly connected to the hydraulic pump so as to output rotational power for respectively driving the pair of driving wheels, a pump-side forward-movement high-pressure line into which the hydraulic pump discharges the hydraulic fluid at the forward movement of the vehicle,
a pump-side forward-movement low-pressure line from which the hydraulic pump suctions the hydraulic fluid at the forward movement of the vehicle, a pair of left and right motor-side forward-movement high-pressure lines fluidly connected to the pump-side forward-movement high-pressure line and supplying the hydraulic fluid towards the pair of left and right hydraulic motors at the forward movement of the vehicle,
a pair of left and right motor-side forward-movement low-pressure lines returning the hydraulic fluid, which has been respectively discharged from the pair of left and right hydraulic motors at the forward movement of the vehicle, to the pump-side forward-movement low-pressure line, a driving-mode switching valve disposed between the pair of left and right motor-side forward-movement high-pressure lines, and a flow dividing/combining mechanism disposed between the pump-side forward-movement high-pressure line and the pair of left and right motor-side forward-movement high-pressure lines, wherein the driving-mode switching valve is configured so as to take a communicating position for fluidly connecting between the pair of left and right motor-side forward-movement high-pressure lines and a shutoff position for fluidly disconnecting between the both lines.

In the working vehicle, when the driving-mode switching valve is positioned at the communicating position, the hydraulic fluid which has been discharged from the hydraulic pump are distributed to the pair of hydraulic motors according to a load proportion between the pair of driving wheels so that the right-left differential driving state is realized.
The right-left differential driving state is suitably selected for a case in which a difference of load between the pair of driving wheels occurs when turning the vehicle or the like.

On the other hand, when the driving-mode switching valve is positioned at the shutoff position, the hydraulic fluid which has been discharged from the hydraulic pump are distributed to the pair of hydraulic motors according to a distribution ration defined by the flow dividing/combining mechanism regardless of the difference of load between the pair of driving wheels, so that the right-left differential-lock driving state is realized.
The right-left differential-lock driving state is suitably selected for a case in which one of the pair of driving wheels falls into a depression, a mud area or the like so that the rotation load of the one of the driving wheels becomes extremely small.

That is, if the rotation load of one driving wheel becomes extremely small in comparison to the other driving wheel, the hydraulic fluid from the hydraulic pump flows in a concentrated manner into the hydraulic motor that operatively drives the one driving wheel, and as a result, the hydraulic fluid will not be supplied to the hydraulic motor that operatively drives the other driving wheel, which may make the working vehicle immovable.
Even in such a case, when the right-left differential-lock driving state is selected, the amount of the hydraulic fluid defined by the flow dividing/combining mechanism is supplied to the hydraulic motor that operatively drives the other driving wheel, thereby effectively preventing the working vehicle from being in an immovable situation.

Although the above-mentioned conventional working vehicle is useful in that the right-left differential driving state and the right-left differential-lock driving state could be selected, it has a following disadvantage.

The conventional hydraulic wheel-drive working vehicle is configured so as to achieve the right-left differential driving state by fluidly connecting between the pair of left and right motor-side forward-movement high-pressure lines by means of the driving-mode switching valve as described above. However, even in the right-left differential driving state, the hydraulic fluid from the hydraulic pump is supplied to the pair of left and right motor-side forward-movement high-pressure lines through the flow dividing/combining mechanism.

That is, the conventional hydraulic wheel-drive working vehicle could achieve the right-left differential driving state only in a state of being subjected to fluid load of the flow dividing/combining mechanism. For this reason, the conventional hydraulic wheel-drive working vehicle could not utilize the performance of the hydraulic motor in an adequate manner, resulting in worsened transmission efficiency.

### SUMMARY OF THE INVENTION

In view of the prior art, it is an object of the present invention to provide a hydraulic wheel-drive working vehicle that is capable of changing between a right-left differential driving state in which a pair of driving wheels are driven in a hydraulically-differential manner to each other and a right-left differential-lock driving state in which the pair of driving wheels are independently driven to each other with respective amount of the hydraulic fluid defined by a flow dividing/combining mechanism, the working vehicle capable of enhancing transmission efficiency in the right-left differential driving state.

The present invention provides, in order to achieve the object, a hydraulic wheel-drive working vehicle including a driving power source; a pair of left and right driving wheels; a hydraulic pump operatively driven by the driving power source; an axle-driving device including a pair of left and right hydraulic motors fluidly connected to the hydraulic pump so as to output rotational power for respectively driving the pair of driving wheels; a pump-side forward-movement high-pressure line into which the hydraulic pump discharges the hydraulic fluid at the forward movement of the vehicle; a pump-side forward-movement low-pressure line from which the hydraulic pump suctions the hydraulic fluid at the forward movement of the vehicle; a pair of left and right motor-side forward-movement high-pressure lines fluidly connected to the pump-side forward-movement high-pressure line in a direct or indirect manner and supplying the hydraulic fluid respectively towards the pair of left and right hydraulic motors at the forward movement of the vehicle; a pair of left and right motor-side forward-movement low-pressure lines returning the hydraulic fluid, which has been discharged from the pair of left and right hydraulic motors at the forward movement of the vehicle, to the pump-side forward-movement low-pressure line in a direct or indirect manner; a driving-mode switching valve for selectively communicating or shutting off between the pair of left and right motor-side forward-movement high-pressure lines; and a flow dividing/combining mechanism disposed between the pump-side forward-movement high-pressure line and the pair of left and right motor-side forward-movement high-pressure lines, wherein at least one of the hydraulic pump and the pair of hydraulic motors are of a variable displacement type, the hydraulic wheel-drive working vehicle further including a motor-side forward-movement high-pressure bypass line having a first end fluidly connected to the pump-side forward-movement high-pressure line on an upstream side than the flow dividing/combining mechanism with the forward movement of the vehicle as a reference, wherein the driving-mode switching valve selectively takes a shutoff position of fluidly disconnecting between the pair of motor-side forward-movement high-pressure lines and also closing a downstream side of the motor-side forward-movement high-pressure bypass line with the forward movement of the vehicle as a reference, and a communicating position of fluidly connecting the downstream side of the motor-side forward-movement high-pressure bypass line with the forward movement of the vehicle as a reference to the pair of pair of motor-side forward-movement high-pressure lines in a direct or indirect manner.

The hydraulic wheel-drive working vehicle according to the present invention makes it possible to selectively realize the right-left differential driving state in which the pair of left and right driving wheels are driven in a hydraulically differential manner to each other and the right-left differential-lock driving state in which the pair of driving wheels are driven in an independent manner to each other with respective amounts of the hydraulic fluid defined by the flow dividing/combining mechanism, and also to supply the hydraulic fluid from the hydraulic pump to the pair of hydraulic motors without being subjected to fluid load of the flow dividing/combining mechanism at the right-left differential driving state, thereby enhancing transmission efficiency at the right-left differential driving state.

In one embodiment, the hydraulic wheel-drive working vehicle further includes a hydraulic pump unit including the hydraulic pump, and a valve unit including the driving-mode switching valve and the flow dividing/combining mechanism, wherein the axle-driving device includes a pair of left and right wheel motor devices which respectively have the pair of left and right hydraulic motors and which are disposed away from the hydraulic pump unit so as to be respectively positioned close to the pair of left and right driving wheels.
In the hydraulic wheel-drive working vehicle, the valve block is formed with a valve unit-side forward-movement high-pressure passage which forms a part of the pump-side forward-movement high-pressure line and which has a first end opened to an outer surface to form a valve unit-side forward-movement high-pressure inlet port 2110(P), a pair of left and right motor-side forward-movement high-pressure passages which forms the pair of left and right motor-side forward-movement high-pressure lines and which has first ends fluidly connected to the valve unit-side forward-movement high-pressure passage through the flow dividing/combining mechanism and second ends opened to an outer surface to form valve unit-side forward-movement high-pressure outlet ports, a motor-side forward-movement high-pressure bypass passage which forms the motor-side forward-movement high-pressure bypass line and which has a first end fluidly connected to the valve unit-side forward-movement high-pressure passage on an upstream side than the flow dividing/combining mechanism with the forward movement as a reference and a second end fluidly connected to the driving-mode switching valve, and a motor-side forward-movement high-pressure connecting passage which fluidly connecting between the pair of left and right motor-side forward-movement high-pressure passages.
The driving-mode switching valve shuts off the motor-side forward-movement high pressure connecting passage and also closes the second end of the motor-side forward-movement high pressure bypass passage when positioned at the shutoff position, and has the motor-side forward-movement high pressure connecting passage in a communicating condition and also fluidly connects the second end of the motor-side forward-movement high pressure bypass passage to the motor-side forward-movement high pressure connecting passage when positioned at the communicating position.

The present invention relates to a novel hydraulic four-wheel-drive working vehicle in which a pair of first driving wheels and a pair of second driving wheels respectively arranged on one side and the other side in a longitudinal direction of a vehicle are driven by rotational power from corresponding hydraulic motors.

Specifically, a hydraulic four-wheel-drive working vehicle in which a pair of first driving wheels and a pair of second driving wheels respectively arranged on one side and the other side in the longitudinal direction of the vehicle are driven by use of hydraulic driving force has been conventionally known.

The hydraulic four-wheel-drive working vehicle includes a hydraulic pump operatively connected to a driving power source and hydraulic motors operatively connecting to the corresponding driving wheels, the hydraulic motors being fluidly connected to the hydraulic pump through hydraulic lines such as conduits, wherein at least one of the hydraulic pump and the hydraulic motors are of a variable displacement type (hereinafter referred to as variable displacement member).
The hydraulic four-wheel-drive working vehicle is useful in that a degree of freedom in designing the working vehicle can be enhanced since the hydraulic pump and the hydraulic motors could be fluidly connected with hydraulic lines such as conduits.

In working vehicles such as tractors, it is desirable to set a variable region of a driving speed/driving torque according to a traveling situation (or usage situation). That is, it is desirable to change the driving speed/driving torque of the driving wheel at a low-speed/high-torque mode when the working vehicle is in a working situation and to change the driving speed/driving torque of the driving wheel at a high-speed/low-torque mode when the working vehicle is in a traveling situation on a road.

However, in the conventional hydraulic four-wheel-drive working vehicle, a variable range of the driving speed/driving torque of the driving wheel depends only on a variable range of suction/discharge amount of the variable displacement member.
That is, in the conventional configuration, the driving speed/driving torque of the driving wheel can only be changed within the variable range of the variable displacement member. There has not existed a hydraulic four-wheel-drive working vehicle capable of changing a driving mode according to the traveling situation.

For example, in Japanese unexamined Patent Publication No. 2002-219959 (hereinafter referred to as patent document 2) discloses a hydraulic four-wheel-drive working vehicle including a hydraulic pump of variable displacement type operatively connected to a driving power source; a pair of first right-side and left-side hydraulic motors that are operatively and respectively connected to a pair of first right-side and left-side driving wheels arranged on one side in the longitudinal direction of the vehicle; and a pair of second right-side and left-side hydraulic motors that are operatively and respectively connected to a pair of second right-side and left-side driving wheels arranged on the other side in the longitudinal direction of the vehicle; wherein the first right-side hydraulic motor and the second right-side hydraulic motor are fluidly connected in series by a right-side hydraulic line, the first left-side hydraulic motor and the second left-side hydraulic motor are fluidly connected in series by a left-side hydraulic line, and the right-side hydraulic line and the left-side hydraulic line are fluidly connected in parallel with respect to the hydraulic pump.

Even if any one of the four driving wheels slips, the thus configured conventional hydraulic four-wheel-drive working vehicle could prevent the pressurized fluid from the hydraulic pump from flowing in a concentrated manner to the hydraulic motor corresponding to the one driving wheel that has slipped, thereby ensuring driving force of the hydraulic motors corresponding to the other three driving wheels.
However, the driving speed/driving torque of the driving wheel can only be changed within a variable range of the suction/discharge amount of the variable displacement type hydraulic pump even in such conventional hydraulic four-wheel-drive working vehicle, and any consideration is not made in changing the driving mode according to the traveling situation.

In view of the prior art, it is a second object of the present invention to provide a hydraulic four-wheel-drive working vehicle capable of changing the variable region of the driving speed/driving torque of the driving wheel according to the traveling situation such as a travel with working or a travel on a road.

The present invention provides, in order to achieve the second object, a hydraulic four-wheel-drive working vehicle including a driving power source; a pair of left and right first driving wheels arranged on one side in a longitudinal direction of the vehicle; a pair of left and right second driving wheels arranged on the other side in the longitudinal direction of the vehicle; a hydraulic pump operatively driven by the driving power source; a first axle-driving device including a first hydraulic motor fluidly connected to the hydraulic pump so as to output rotational power for driving the pair of first driving wheels; and a second axle-driving device including a second hydraulic motor fluidly connected to the hydraulic pump so as to output rotational power for driving the pair of second driving wheels, at least one of the hydraulic pump or the first and second hydraulic motors being of a variable displacement type; the hydraulic four-wheel-drive working vehicle further including a first driving-mode switching valve for selectively switching between a series driving mode of fluidly connecting the first and second hydraulic motors in series with respect to the hydraulic pump, and a parallel driving mode of fluidly connecting the first and second hydraulic motors in parallel with respect to the hydraulic pump.
The working vehicle according to the present invention makes it possible to easily changeover a high-speed/low-torque driving mode that is suitable to the travel on the road or the like and a low-speed/high-torque driving mode that is suitable to the travel with working or the like.

For instance, the working vehicle may include a pump-side forward-movement high-pressure line into which the hydraulic pump discharges the hydraulic fluid at the forward movement, a pump-side forward-movement low-pressure line from which the hydraulic pump suctions the hydraulic fluid at the forward movement, a first-motor-side forward-movement high-pressure line fluidly connected to the pump-side forward-movement high-pressure line and supplying the hydraulic fluid towards the first hydraulic motor at the forward movement, a first-motor-side forward-movement low-pressure line returning the hydraulic fluid, which has been discharged from the first hydraulic motor at the forward movement, to the pump-side forward-movement low-pressure line, a second-motor-side forward-movement high-pressure line fluidly connected to the pump-side forward-movement high-pressure line and supplying the hydraulic fluid towards the second hydraulic motor at the forward movement, a second-motor-side forward-movement low-pressure line returning the hydraulic fluid, which has been discharged from the second hydraulic motor at the forward movement, to the pump-side forward-movement low-pressure line, and the first driving-mode switching valve interposed in both of the second-motor-side forward-movement low-pressure line and the first-motor-side forward-movement high-pressure line so as to respectively divide the two lines into upstream sides and downstream sides with the forward movement as the reference.
The first driving-mode switching valve selectively takes a series connecting position for fluidly connecting the forward-movement upstream side of the second-motor-side forward-movement low-pressure line to the forward-movement downstream side of the first-motor-side forward-movement high-pressure line and closing the forward-movement downstream side of the second-motor-side forward-movement low-pressure line and the forward-movement upstream side of the first-motor-side forward-movement high-pressure line, and a parallel connecting position for fluidly connecting the forward-movement upstream side to the forward-movement downstream side of the second-motor-side forward-movement low-pressure line and fluidly connecting the forward-movement upstream side to the forward-movement downstream side of the first-motor-side forward-movement high-pressure line.

In a first embodiment, the second axle-driving device includes a pair of second left-side and right-side hydraulic motors for respectively driving the left and right second driving wheels as the second hydraulic motor. The working vehicle further includes a pair of second-motor-side connecting lines for fluidly connecting the pair of second left-side and right-side hydraulic motors in parallel, the pair of second-motor-side connecting lines including a second-motor-side forward-movement high-pressure connecting line having a high pressure at the forward movement and a second-motor-side forward-movement low-pressure connecting line having a low pressure at the forward movement, and a second driving-mode switching valve interposed in the second-motor-side forward-movement high-pressure connecting line so as to divide the second-motor-side forward-movement high-pressure connecting line into a forward-movement high-pressure left-side connecting line fluidly connected to a forward-movement suction port of the second left-side hydraulic motor and a forward-movement high-pressure right-side connecting line fluidly connected to a forward-movement suction port of the second right-side hydraulic motor.
In the first embodiment, the second-motor-side forward-movement high-pressure line includes a pair of second left-side and right-side hydraulic motor lines that have first ends fluidly connected to the pump-side forward-movement high-pressure line by way of a first flow dividing/combining mechanism, and second ends fluidly and respectively connected to the forward-movement high-pressure left-side and right-side connecting lines. The second driving-mode switching valve selectively takes a communicating position for fluidly connecting the forward-movement high-pressure left-side connecting line and the forward-movement high-pressure right-side connecting line to each other, and a shutoff position for fluidly disconnecting the forward-movement high-pressure left-side connecting line and the forward-movement high-pressure right-side connecting line to each other.

In the first embodiment, the second-motor-side forward-movement high-pressure line preferably may further include a second hydraulic motor common line having a first end fluidly connected to the pump-side forward-movement high-pressure line.
In the configuration, the second driving-mode switching mode fluidly connects a second end of the second hydraulic motor common line to the second-motor-side forward-movement high-pressure connecting line in a state of fluidly connecting the forward-movement high-pressure left-side connecting line and the forward-movement high-pressure right-side connecting line to each other when being positioned at the communicating position, and fluidly disconnects the second end of the second hydraulic motor common line to the second-motor-side forward-movement high-pressure connecting line in a state of fluidly disconnecting between the forward-movement high-pressure left-side connecting line and the forward-movement high-pressure right-side connecting line to each other when being positioned at the shutoff position.

The present invention provide a second embodiment that further includes, in addition to the components of the first embodiment, a hydraulic line changeover mechanism interposed between the pump-side forward-movement high-pressure line and both of the first-motor-side and second-motor-side forward-movement high-pressure lines.
The hydraulic line changeover mechanism includes a third driving-mode switching valve interposed between the first-motor-side forward-movement high-pressure line and the second-motor-side forward-movement high-pressure line, and a first-motor-side forward-movement supply line and a second-motor-side forward-movement supply line that have first ends fluidly connected to the pump-side forward-movement high-pressure line through a second flow dividing/combining mechanism and second ends fluidly and respectively connected to the first-motor-side and second-motor-side forward-movement high-pressure lines.

In the second embodiment, the hydraulic line changeover mechanism preferably may further include a forward-movement common supply line having a first end fluidly connected to the pump-side forward-movement high-pressure line.
In the preferable configuration, the third driving-mode switching valve fluidly connects a second end of the forward-movement common supply line to the first-motor-side forward-movement high-pressure line or the second-motor-side forward-movement high-pressure line in a state of fluidly connecting the first-motor-side and second-motor-side forward-movement high-pressure lines to each other when being positioned at the communicating position, and fluidly disconnects the second end of the forward-movement common supply line to both of the first-motor-side and second-motor-side forward-movement high-pressure lines in a state of fluidly disconnecting the first-motor-side and second-motor-side forward-movement high-pressure lines to each other when being positioned at the shutoff position.

The present invention further provides a third embodiment that further includes, in addition to the components of the first embodiment, a third driving-mode switching valve interposed in both of the forward-movement upstream side of the first-motor-side forward-movement high-pressure line and one line of the pair of second left-side and right-side hydraulic motor lines so as to divide the forward-movement upstream side of the first-motor-side forward-movement high-pressure line into first and second upstream portions that are respectively positioned on upstream and downstream sides with the forward movement as the reference, and also divide the one line into upstream and downstream sides with the forward movement as the reference.
The third driving-mode switching valve selectively takes a right-left flow dividing/combining position for fluidly connecting the forward-movement upstream side to the forward-movement downstream side of the one line and also fluidly connecting the first upstream portion to the second upstream portion of the first-motor-side forward-movement high-pressure line, a communicating position for fluidly connecting the first upstream portion of the first-motor-side forward-movement high-pressure line to both of the forward-movement downstream side of the one line and the second upstream portion of the first-motor-side forward-movement high-pressure line, and a front-rear flow dividing/combining position for fluidly connecting the forward-movement upstream side of the one line to the second upstream portion of the first-motor-side forward-movement high-pressure line.

The present invention further provides a fourth embodiment in which the second axle-driving device includes a pair of second left-side and right-side hydraulic motors for respectively driving the left and right second driving wheels as the second hydraulic motor, and in which the working vehicle further includes a pair of second-motor-side connecting lines for fluidly connecting the pair of second left-side and right-side hydraulic motors in parallel, the pair of second-motor-side connecting lines including a second-motor-side forward-movement high-pressure connecting line having a high pressure at the forward movement and a second-motor-side forward-movement low-pressure connecting line having a low pressure at the forward movement, and a second driving-mode switching valve interposed in the second-motor-side forward-movement high-pressure connecting line so as to divide the second-motor-side forward-movement high-pressure connecting line into a forward-movement high-pressure left-side connecting line fluidly connected to a forward-movement suction port of the second left-side hydraulic motor and a forward-movement high-pressure right-side connecting line fluidly connected to a forward-movement suction port of the second right-side hydraulic motor.
In the fourth embodiment, the second-motor-side forward-movement high-pressure line includes forward-movement upstream-side first and second lines having first ends fluidly connected to the pump-side forward-movement high-pressure line through a first flow dividing/combining mechanism, a pair of forward-movement upstream-side left-divided and right-divided lines that have first ends fluidly connected to one line of the forward-movement upstream-side first and second lines through a second flow dividing/combining mechanism and second ends fluidly and respectively connected to the forward-movement high-pressure left-side and right-side connecting lines, and a forward-movement upstream-side third line that has a first end fluidly connected to the one line on an upstream side than the second flow dividing/combining mechanism with the forward movement as the reference and a second end fluidly connected to one line of the forward-movement high-pressure left-side and right-side connecting lines.
The working vehicle further includes a third driving-mode switching valve interposed in both of the forward-movement upstream side of the first-motor-side forward-movement high-pressure line and the other one line of the forward-movement upstream-side first and second lines so as to divide the forward-movement upstream side into first and second upstream portions that are respectively positioned on upstream and downstream sides with the forward movement as the reference, and also dived the other one line into upstream and downstream sides with the forward movement as the reference, and a fourth driving-mode switching valve interposed in the forward-movement upstream-side third line.
The second driving-mode switching valve is interposed in the second-motor-side forward-movement high-pressure connecting line 760, and also interposed in one divided line of the forward-movement upstream-side left-divided and right-divided lines that is fluidly connected to the other one line of the forward-movement high-pressure left-side and right-side connecting lines.
The second driving-mode switching valve selectively takes a first position for fluidly connecting the forward-movement high-pressure left-side and right-side connecting lines to each other and shutting off the one divided line, a second position for fluidly disconnecting the forward-movement high-pressure left-side and right-side connecting lines to each other and shutting the one divided line, and a third position for fluidly disconnecting the forward-movement high-pressure left-side and right-side connecting lines to each other and communicating the one divided line.
The third driving-mode switching valve selectively takes a first position for fluidly connecting the forward-movement upstream and downstream sides of the other one line to each other and fluidly disconnecting the first and second upstream portions of the first-motor-side forward-movement high-pressure line to each other, a second position for fluidly connecting the first upstream portion of the first-motor-side forward-movement high-pressure line to both of the forward-movement downstream side of the other one line and the second upstream portion of the first-motor-side forward-movement high-pressure line, and a third position for fluidly connecting the forward-movement upstream side of the other one line to the second upstream portion of the first-motor-side forward-movement high-pressure line.
The fourth driving-mode switching valve selectively takes a communicating position and a shutoff position for communicating and shutting off the forward-movement upstream-side third line, respectively.

The present invention further provides a fifth embodiment in which the second axle-driving device includes the single second hydraulic motor and a mechanical differential mechanism for differentially transmitting the rotational power from the single second hydraulic motor to the pair of second driving wheels.
In the fifth embodiment, the second-motor-side forward-movement high-pressure line includes a pair of second-motor-side first and second lines that have first ends fluidly connected to the pump-side forward-movement high-pressure line by way of a first flow dividing/combining mechanism and second ends fluidly connected to the forward-movement suction port of the single second hydraulic motor.
The working vehicle includes a second driving-mode switching valve interposed in both of the forward-movement upstream side of the first-motor-side forward-movement high-pressure line and one line of the pair of second-motor-side first and second lines so as to divide the forward-movement upstream side of the first-motor-side forward-movement high-pressure line into first and second upstream portions that are respectively positioned on upstream and downstream sides with the forward movement as the reference, and also divide the one line into upstream and downstream sides with the forward movement as the reference.
The second driving-mode switching valve selectively takes a first position for fluidly connecting the first and second upstream portions of the first-motor-side forward-movement high-pressure line to each other, and a second position for fluidly connecting the forward-movement upstream side of the one line to the second upstream portion of the first-motor-side forward-movement high-pressure line.
In the fifth embodiment, preferably, the second driving-mode switching valve fluidly connects the first upstream portion of the first-motor-side forward-movement high-pressure line to both of the second upstream portion and the forward-movement downstream side of the one line when being positioned at the first position.

The present invention further provides, in order to achieve the second object, a hydraulic four-wheel-drive working vehicle including a driving power source; a pair of left and right first driving wheels arranged on one side in a longitudinal direction of the vehicle; a pair of left and right second driving wheels arranged on the other side in the longitudinal direction of the vehicle; a hydraulic pump operatively driven by the driving power source; a first axle-driving device including a pair of first hydraulic motors fluidly connected to the hydraulic pump so as to output rotational power for respectively driving the pair of first driving wheels; and a second axle-driving device including a pair of second hydraulic motors fluidly connected to the hydraulic pump so as to output rotational power for respectively driving the pair of second driving wheels, at least one of the hydraulic pump or the pair of first hydraulic motors and the pair of second hydraulic motors being of a variable displacement type; the hydraulic four-wheel-drive working vehicle further including a first driving-mode switching valve for selectively switching between a series driving mode of fluidly connecting the pair of first hydraulic motors and the pair of second hydraulic motors in series with respect to the hydraulic pump, and a parallel driving mode of fluidly connecting the pair of first hydraulic motors and the pair of second hydraulic motors in parallel with respect to the hydraulic pump.
The working vehicle according to the present invention makes it possible to easily changeover a high-speed/low-torque driving mode that is suitable to the travel on the road or the like and a low-speed/high-torque driving mode that is suitable to the travel with working or the like.

For instance, the working vehicle may include a pump-side forward-movement high-pressure line into which the hydraulic pump discharges the hydraulic fluid at the forward movement, a pump-side forward-movement low-pressure line from which the hydraulic pump suctions the hydraulic fluid at the forward movement, a pair of left and right first-motor-side forward-movement high-pressure lines fluidly connected in a direct or indirect manner to the pump-side forward-movement high-pressure line and respectively supplying the hydraulic fluid towards the pair of left and right first hydraulic motors at the forward movement, a pair of left and right first-motor-side forward-movement low-pressure lines returning the hydraulic fluid, which has been discharged respectively from the pair of left and right first hydraulic motors at the forward movement, to the pump-side forward-movement low-pressure line, a pair of left and right second-motor-side forward-movement high-pressure lines fluidly connected in a direct or indirect manner to the pump-side forward-movement high-pressure line and supplying the hydraulic fluid towards the pair of left and right second hydraulic motors at the forward movement, a pair of left and right second-motor-side forward-movement low-pressure lines returning the hydraulic fluid, which has been discharged respectively from the pair of left and right second hydraulic motors at the forward movement, to the pump-side forward-movement low-pressure line, and a first-motor-side forward-movement high-pressure bypass line fluidly connected in a direct or indirect manner to the pump-side forward-movement high-pressure line.
In the configuration, the first driving-mode switching valve respectively flows the hydraulic fluid of the pair of left and right second-motor-side forward-movement low-pressure lines into the pair of left and right first-motor-side forward-movement high-pressure lines and also closes a forward-movement downstream side of the first-motor-side forward-movement high-pressure bypass line at the series driving mode, and flows the hydraulic fluid of the forward-movement downstream side of the first-motor-side forward-movement high-pressure bypass line into both of the pair of left and right first-motor-side forward-movement high-pressure lines and also flows the hydraulic fluid of the left and right second-motor-side forward-movement low-pressure lines into the pump-side forward-movement low-pressure line.

Preferably, the working vehicle may include a second driving-mode switching valve disposed between the pair of left and right second-motor-side forward-movement low-pressure lines or between the pair of left and right first-motor-side forward-movement high-pressure lines.
The second driving-mode switching valve is configured so as to fluidly connect or disconnects between the corresponding pair of lines.
According to the configuration, it is possible at the series driving mode to selectively take a high-speed/right-left differential-lock state and a high-speed/right-left differential state. At the high-speed/right-left differential-lock state, the second hydraulic motors respectively positioned on the left and right sides are independently driven to each other with respective amounts of the hydraulic fluid that are distributed according to a load proportion between the total rotation load of the first and second hydraulic motors positioned along the longitudinal direction of the vehicle on the left side and the total rotation load of the first and second hydraulic motors positioned along the longitudinal direction on the right side, and the pair of left and right first hydraulic motors are independently driven to each other with the hydraulic fluid respectively supplied from the pair of left and right second hydraulic motors. At the high-speed/right-left differential state, the pair of left and right second hydraulic motors are driven in a hydraulically-differential manner to each other according to a load proportion between the pair of left and right second hydraulic motors, and the pair of left and right first hydraulic motors are driven in a hydraulically-differential manner to each other according to a load proportion between the pair of left and right first hydraulic motors.

Preferably, the working vehicle may include a second-motor-side line having forward-movement downstream sides fluidly connected to the pair of second-motor-side forward-movement high-pressure lines, a first-motor-side line having a forward-movement downstream side fluidly connected to the first-motor-side high-pressure bypass line, a flow dividing/combining mechanism disposed between the pump-side forward-movement high-pressure line and forward-movement upstream sides of the first-motor-side line and the second-motor-side line, a pump-side forward-movement high-pressure bypass line having a first end fluidly connected to the pump-side forward-movement high-pressure line on an upstream side than the flow dividing/combining mechanism with the forward movement as a reference, and a third driving-mode switching valve for fluidly connecting or disconnecting the pump-side forward-movement high-pressure bypass line to the second-motor-side line and the first-motor-side forward-movement high-pressure bypass line.
According to the configuration, it is possible at the parallel driving mode to selectively select a low-speed/front-rear differential/right-left differential state and a low-speed/front-rear differential-lock/right-left differential state. At the low-speed/front-rear differential/right-left differential state, the four hydraulic motors are driven in a hydraulically-differential manner one another by the hydraulic pump. At the low-speed/front-rear differential-lock/right-left differential state, the pair of first hydraulic motors and the pair of second hydraulic motors are independently driven to each other with predefined amounts of the hydraulic fluid defined by the flow dividing/combining mechanism in a state where the pair of first hydraulic motors arranged on one side in the longitudinal direction of the vehicle are driven in a hydraulically-differential manner to each other and the pair of second hydraulic motors arranged on the other side in the longitudinal direction of the vehicle are driven in a hydraulically-differential manner to each other.

In the above various configurations, the first driving-mode switching valve preferably includes a main switching valve and an auxiliary switching valve. The main switching valve selectively takes a first position for fluidly connecting the pair of second-motor-side forward-movement low-pressure lines respectively to the pair of first-motor-side forward-movement high-pressure lines, and a second position for fluidly disconnecting the pair of second-motor-side forward-movement low-pressure lines to the pair of first-motor-side forward-movement high-pressure lines. The auxiliary switching valve is interposed in both of a second-motor-side forward-movement discharge line and the first-motor-side forward-movement high-pressure bypass line, the second-motor-side forward-movement discharge line having a first end fluidly connected to at least one of the pair of second-motor-side forward-movement low-pressure lines and a second end fluidly connected to the pump-side forward-movement low-pressure line.
The auxiliary switching valve is configured so as to selectively take a shutoff position for shutting off both of the second-motor-side forward-movement discharge line and the first-motor-side forward-movement high-pressure bypass line, and a communicating position for communicating both of the second-motor-side forward-movement discharge line and the first-motor-side forward-movement high-pressure bypass line. The auxiliary switching valve is position-controlled so as to be respectively positioned at the shutoff position and the communicating position when the main switching valve is positioned at the first and second positions.
According to the configuration, it is possible to form the first driving-mode switching valve by combining switching valves of four-ports/two-positions type that are commercially available, thereby achieving cost reduction.

More preferably, the first driving-mode switching valve may further include a pilot line having a first end fluidly connected to a hydraulic fluid source, and a solenoid valve selectively opening or closing the pilot line.
The main switching valve and the auxiliary switching valve are configured to operate in conjunction with each other with using a hydraulic pressure of the pilot line as a pilot pressure.
According to the configuration, it is not needed to interpose the solenoid valve within a hydraulic line through which the large amount of the hydraulic fluid are flown, thereby utilizing a commercially available solenoid valve as the solenoid valve. Therefore, it is possible to achieve a further cost reduction of the first driving-mode switching valve.

In one embodiment, the forward-movement downstream side of the first-motor-side forward-movement high-pressure bypass line is fluidly connected to one of the pair of firs-motor-side forward-movement high-pressure lines, and a forward-movement upstream side of the second-motor-side forward-movement discharge line is fluidly connected to one of the pair of second-motor-side forward-movement low-pressure lines.
In the configuration, the main switching valve fluidly connects between the pair of first-motor-side forward-movement high-pressure lines and also fluidly connects between the pair of second-motor-side forward-movement low-pressure lines when being positioned at the second position.

In another embodiment, the forward-movement downstream side of the first-motor-side forward-movement high-pressure bypass line is fluidly connected to both of the pair of firs-motor-side forward-movement high-pressure lines, and forward-movement upstream sides of the second-motor-side forward-movement discharge line are fluidly connected to both of the pair of second-motor-side forward-movement low-pressure lines.
In the configuration, the main switching valve closes forward-movement upstream sides of the pair of first-motor-side forward-movement high-pressure lines and also closes forward-movement downstream sides of the pair of second-motor-side forward-movement low-pressure lines when being positioned at the second position.

### BRIEF DESCRIPTION OF THE DRAWINGS

Fig. 1 is a side view of a working vehicle according to a first embodiment of the present invention.
Fig. 2 is a hydraulic circuit diagram of the working vehicle according to the first embodiment.
Fig. 3 is a vertical cross-sectional view of a wheel motor device in the working vehicle according to the first embodiment.
Fig. 4 is a vertical cross-sectional view of a motor-side port block of a hydraulic motor unit in the wheel motor device, taken along line IV-IV of Fig. 3.
Fig. 5 is an enlarged view of section V of Fig. 3.
Fig. 6 is a vertical cross-sectional view of a modified example of the wheel motor device shown in Fig. 3.
Fig. 7 is an enlarged partial view of the wheel motor device shown in Fig. 6.
Fig. 8 is a vertical cross-sectional front view of a modified example of the wheel motor device shown in Fig. 6.
Fig. 9A is a hydraulic circuit diagram showing the flow of the hydraulic fluid when the working vehicle according to the first embodiment is driven in a high-speed/right-left differential state.
Fig. 9B is a hydraulic circuit diagram showing the flow of the hydraulic fluid when the working vehicle according to the first embodiment is driven in a high-speed/right-left differential-lock state.
Fig. 10A is a hydraulic circuit diagram showing a flow of a hydraulic fluid when the working vehicle according to the first embodiment is driven in a low-speed/right-left differential state.
Fig. 10B is a hydraulic circuit diagram showing the flow of the hydraulic fluid when the working vehicle according to the first embodiment is driven in a low-speed/right-left differential-lock state.
Fig. 11 is a cross-sectional view of a first driving-mode switching valve in the working vehicle according to the first embodiment.
Fig. 12 is a cross-sectional view of a second driving-mode switching valve in the working vehicle according to the first embodiment.
Fig. 13 is a hydraulic circuit diagram of a working vehicle according to a second embodiment of the present invention.
Fig. 14A is a hydraulic circuit diagram showing the flow of the hydraulic fluid when the working vehicle according to the second embodiment is driven in the high-speed/right-left differential state.
Fig. 14B is a hydraulic circuit diagram showing the flow of the hydraulic fluid when the working vehicle according to the second embodiment is driven in the high-speed/right-left differential-lock state.
Fig. 15A is a hydraulic circuit diagram showing the flow of the hydraulic fluid when the working vehicle according to the second embodiment is driven in a low-speed/front-rear differential/right-left differential state.
Fig. 15B is a hydraulic circuit diagram showing the flow of the hydraulic fluid when the working vehicle according to the second embodiment is driven in a low-speed/front-rear differential/right-left differential-lock state.
Fig. 16A is a hydraulic circuit diagram showing the flow of the hydraulic fluid when the working vehicle according to the second embodiment is driven in a low-speed/front-rear differential-lock/right-left differential state.
Fig. 16B is a hydraulic circuit diagram showing the flow of the hydraulic fluid when the working vehicle according to the second embodiment is driven in a low-speed/front-rear differential-lock/right-left differential-lock state.
Fig. 17 is a hydraulic circuit diagram of a working vehicle according to a third embodiment of the present invention.
Fig. 18A is a hydraulic circuit diagram showing the flow of the hydraulic fluid when the working vehicle according to the third embodiment is driven in the high-speed/right-left differential state.
Fig. 18B is a hydraulic circuit diagram showing the flow of the hydraulic fluid when the working vehicle according to the third embodiment is driven in the high-speed/right-left differential-lock state.
Fig. 19A is a hydraulic circuit diagram showing the flow of the hydraulic fluid when the working vehicle according to the third embodiment is driven in the low-speed/front-rear differential/right-left differential state.
Fig. 19B is a hydraulic circuit diagram showing the flow of the hydraulic fluid when the working vehicle according to the third embodiment is driven in the low-speed/front-rear differential/right-left differential-lock state.
Fig. 20 is a hydraulic circuit diagram showing the flow of the hydraulic fluid when the working vehicle according to the third embodiment is driven in the low-speed/front-rear differential-lock/right-left differential state.
Fig. 21 is a hydraulic circuit diagram of a working vehicle according to a fourth embodiment of the present invention.
Fig. 22A is a hydraulic circuit diagram showing the flow of the hydraulic fluid when the working vehicle according to the fourth embodiment is driven in the high-speed/right-left differential state.
Fig. 22B is a hydraulic circuit diagram showing the flow of the hydraulic fluid when the working vehicle according to the fourth embodiment is driven in the high-speed/right-left differential-lock state.
Fig. 23 is a hydraulic circuit diagram showing the flow of the hydraulic fluid when the working vehicle according to the fourth embodiment is driven in the low-speed/front-rear differential/right-left differential state.
Fig. 24A is a hydraulic circuit diagram showing the flow of the hydraulic fluid when the working vehicle according to the fourth embodiment is driven in the low-speed/front-rear differential-lock/right-left differential state.
Fig. 24B is a hydraulic circuit diagram showing the flow of the hydraulic fluid when the working vehicle according to the fourth embodiment is driven in the low-speed/front-rear differential-lock/right-left differential-lock state.
Fig. 25 is a hydraulic circuit diagram of a working vehicle according to a fifth embodiment of the present invention.
Fig. 26 is a hydraulic circuit diagram showing the flow of the hydraulic fluid when the working vehicle according to the fifth embodiment is driven in a high-speed driving state.
Fig. 27A is a hydraulic circuit diagram showing the flow of the hydraulic fluid when the working vehicle according to the fifth embodiment is driven in a low-speed/front-rear differential state.
Fig. 27B is a hydraulic circuit diagram showing the flow of the hydraulic fluid when the working vehicle according to the fifth embodiment is driven in a low-speed/front-rear differential-lock state.
Fig. 28 is a side view of a working vehicle according to a sixth embodiment of the present invention.
Fig. 29 is a hydraulic circuit diagram of the working vehicle according to the sixth embodiment.
Fig. 30 is a vertical cross-sectional view of a wheel motor device in the working vehicle according to the sixth embodiment.
Fig. 31 is a partially cross-sectional view of the wheel motor device taken along a line XXXI-XXXI in Fig. 30.
Fig. 32 is a hydraulic circuit diagram showing the flow of the hydraulic fluid when a series driving mode is selected in the working vehicle according to the sixth embodiment.
Figs. 32A and 32B respectively show the flow of the hydraulic fluid when a second driving-mode switching valve is positioned at a communicating position and a shutoff position at the series driving mode.
Fig. 33 is a hydraulic circuit diagram showing the flow of the hydraulic fluid when a parallel driving mode is selected in the working vehicle according to the sixth embodiment.
Figs. 33A and 33B respectively show the flow of the hydraulic fluid when a third driving-mode switching valve is positioned at a communicating position and a shutoff position at the parallel driving mode.
Fig. 34 is a hydraulic circuit diagram of a working vehicle according to a modification of the sixth embodiment.
Fig. 35 is a hydraulic circuit diagram of a working vehicle according to a seventh embodiment of the present invention.
Fig. 36A is a horizontal cross-sectional view of a valve unit in the working vehicle according to the seventh embodiment.
Fig. 36B is a cross-sectional view taken along a line XXXVI-XXXVI in Fig. 36A.
Fig. 37 is a vertical cross-sectional side view of a modified example of the wheel motor device.

### DETAILED DESCRIPTION OF THE PREFERRED EMBODIMENTS

### First embodiment

A preferred embodiment of the present invention will now be described with reference to the accompanying drawings.

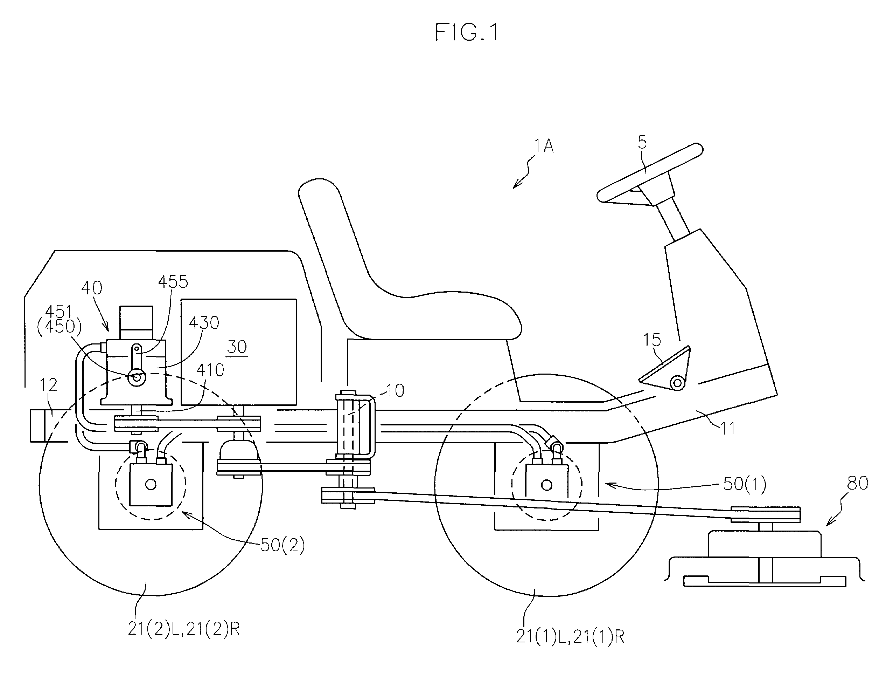

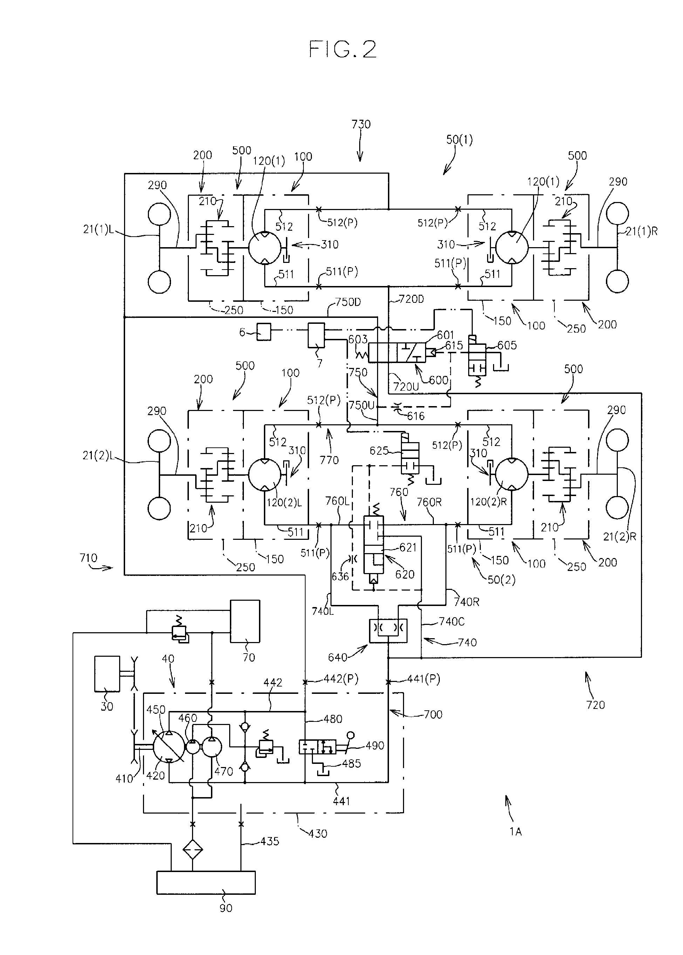

Figs. 1 and 2 respectively show a side view and a hydraulic circuit diagram of a hydraulic four-wheel-drive working vehicle 1A to which the present embodiment is applied.

In the present embodiment, the working vehicle 1A is a riding lawn mower of an articulate type, as shown in Fig. 1.
Specifically, as shown in Figs. 1 and 2, the working vehicle 1A includes a first frame 11 arranged on one side (a front side in the present embodiment) in a longitudinal direction of the vehicle; a second frame 12 arranged on the other side (a rear side in the present embodiment) in the longitudinal direction of the vehicle and connected to the first frame 11 in a swingable manner about a pivot shaft 10 extending in a substantially vertical direction; a pair of left and right first driving wheels 21(1)L, 21(1)R arranged on one side in the longitudinal direction of the vehicle; a pair of left and right second driving wheels 21(2)L, 21(2)R arranged on the other side in the longitudinal direction of the vehicle; a driving power source 30 supported by one of the first and second frames 11, 12 (the second frame 12 in the present embodiment); a hydraulic pump unit 40 including at least one hydraulic pump main body 420 operatively driven by the driving power source 30, the hydraulic pump unit 40 being supported by the one frame; a first axle-driving device 50(1) including at least one first hydraulic motor main body 120(1) for driving the pair of left and right first driving wheels 21(1)L, 21(1)R; and a second axle-driving device 50(2) including at least one second hydraulic motor main body 120(2) for driving the pair of left and right second driving wheels 21(2)L, 21(2)R.

In the present embodiment, as shown in Figs. 1 and 2, the working vehicle 1A further includes a hydraulic steering mechanism 70 that swings the first frame 11 and the second frame 12 relatively to each other about the pivot shaft 10 in conjunction with an steering member 5 capable of being manually operated such as a steering wheel, and a mower device 80 supported by the first frame 11 so as to be positioned on an outer side (a front side in the present embodiment) than the first driving wheel 21(1) in the longitudinal direction of the vehicle.

As shown in Figs. 1 and 2, the hydraulic pump unit 40 includes a pump shaft 410 operatively connected to the driving power source 30, the hydraulic pump main body 420 supported in a relatively non-rotatable manner by the pump shaft 410, and a pump case 430 for supporting the pump shaft 410 and forming a pump space that accommodates the hydraulic pump main body 420.

As shown in Fig. 2, the hydraulic pump main body 420 is fluidly connected to the at least one first hydraulic motor main body 120(1) in the first axle-driving device 50(1) and the at least one second hydraulic motor main body 120(2) in the second axle-driving device 50(2) so as to form HST in cooperation with the hydraulic motor main bodies 120(1) and 120(2).
A hydraulic circuit for fluidly connecting the hydraulic pump main body 420 to the first and second hydraulic motor main bodies 120(1), 120(2) will be later described.

As shown in Fig. 2, the pump case 430 is provided with a pump-side first hydraulic fluid passage 441 and a pump-side second hydraulic fluid passage 442 both of which are fluidly connected to the hydraulic pump main body 420.
Each of the pump-side first hydraulic fluid passage 441 and the pump-side second hydraulic fluid passage 442 has at least a first end opened to an outer surface of the pump case. The opened ends of the pump-side first hydraulic fluid passage 441 and the pump-side second hydraulic fluid passage 442 respectively form a hydraulic fluid port 441(P) and a hydraulic fluid port 442(P).

In the present embodiment, the hydraulic pump main body 420 is of a variable displacement type in which the suction/discharge amount can be varied.
That is, the hydraulic pump unit 40 includes, in addition to the above components, an output adjusting member 450 (see Fig. 2) for changing the suction/discharge amount of the hydraulic pump main body 420 based on an operation from outsides.
The output adjusting member 450 includes, for example, a movable swash plate (not shown) for defining a reciprocating movement range of pistons in the hydraulic pump main body 420, and a control shaft 451 (see Fig. 1) operatively connected to the movable swash plate so as to slant the movable swash plate.

As shown in Fig. 1, the control shaft 451 is operatively connected to a traveling speed-change operation member 15 capable of being manually operated by way of a control arm 455 and a connecting member (not shown).
In the present embodiment, the movable swash plate is capable of slanting in both forward and rearward directions with a neutral position in between.
In other words, the movable swash plate slants in the forward direction when the traveling speed-change operation member 15 is operated in the forward direction, and the movable swash plate slants in the rearward direction when the traveling speed-change operation member 15 is operated in the rearward direction. In the present embodiment, the speed-change operation member 15 is of a seesaw pedal type, but may be of a two-pedal type including a dedicated forward pedal and a dedicated rearward pedal.

As shown in Fig. 2, the pump case 430 is provided with a bypass fluid passage 480 for fluidly connecting between the pump-side first and second hydraulic fluid passages 441 and 442, a drain fluid passage 485 having a first end opened to an internal space of the pump case 430, and a rotary valve 490, which is capable of externally operated, interposed in the bypass fluid passage 480.
The rotary valve 490 is configured to take a shutoff position of shutting off the bypass fluid passage 480 and fluidly disconnecting the drain fluid passage 485 to the bypass fluid passage 480, and a communicating position of communicating the bypass fluid passage 480 and fluidly connecting the drain fluid passage 485 to the bypass fluid passage 480.

Furthermore, in the present embodiment, the hydraulic pump unit 40 includes, in addition to the above components, a first auxiliary pump main body 460 and a second auxiliary pump main body 470, both of which are operatively driven by the pump shaft 410.
As shown in Fig. 2, the first auxiliary pump main body 460 functions as a charge pump for replenishing the HST with hydraulic fluid.
The second auxiliary pump main body 470 supplies hydraulic fluid to the hydraulic steering mechanism 70.
The first auxiliary pump main body 460 may be, for example, a trochoidal pump, and the second auxiliary pump main body 470 may be, for example, a gear pump.

As shown in Fig. 2, the working vehicle 1A includes an external reservoir tank 90, and the first and second auxiliary pump main bodies 460, 470 operate with the external tank 90 as the fluid source.
Reference numeral 435 in Fig. 2 designates a drain conduit for fluidly connecting the internal space of the pump case 430 to the external tank 90.

The first axle-driving device 50(1) and the second axle-driving device 50(2) will now be described.
In the present embodiment, the first axle-driving device 50(1) and the second axle-driving device 50(2) have the same configuration to each other.
Therefore, the following description is made on the second axle-driving device 50(2), and the same reference numerals or the same reference numerals with replacing the parenthetical reference (2) with (1) are denoted for the same components as those of the first axle-driving device 50(1) to omit the description thereof.

The second axle-driving device 50(2) includes a pair of wheel motor devices 500 for respectively driving the left and right second driving wheels 21(2)L, 21(2)R.
The pair of wheel motor devices 500 are mounted to the corresponding second frame 12 with one wheel motor device being reversed by 180 degrees with respect to the other wheel motor device.
In Fig. 2, a reference numeral 120(2)L is denoted for the second hydraulic motor main body in the wheel motor device 500 for driving the left-side second driving wheel 21(2)L, and a reference numeral 120(2)R is denoted for the second hydraulic motor main body in the wheel motor device 500 for driving the second right-side driving wheel 21(2)R.

The detailed configuration of the wheel motor device 500 will now be described.

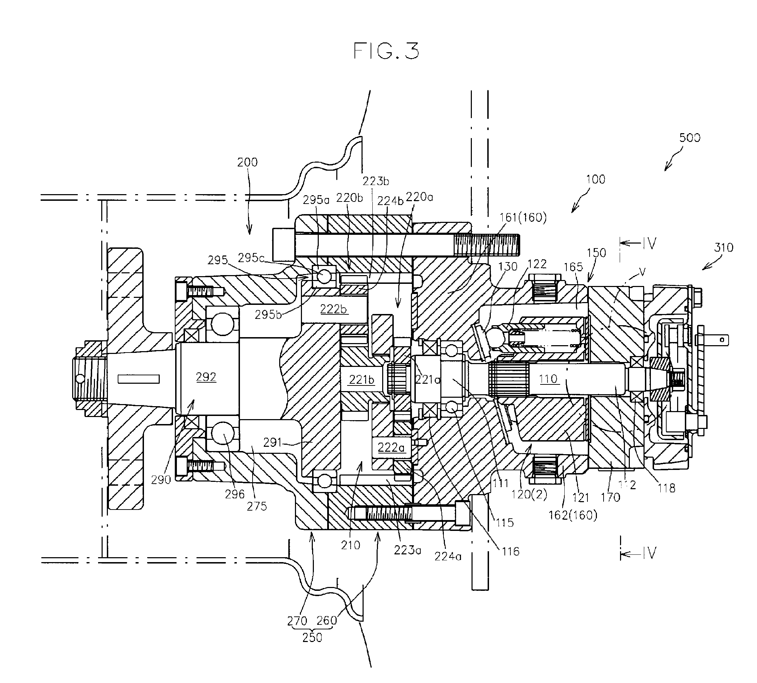

Fig. 3 shows a vertical cross-sectional view of the wheel motor device 500.
As shown in Fig. 3, the wheel motor device 500 includes a hydraulic motor unit 100 including the second hydraulic motor main body 120(2) fluidly connected to the hydraulic pump main body 420, a reduction gear unit 200 including a reduction gear mechanism 210 for reducing a speed of a rotational power output by the second hydraulic motor main body 120(2), and an output member 290 for outputting the rotational power whose speed has been reduced by the reduction gear mechanism 210 towards the corresponding driving wheel 21(2).

As shown in Figs. 2 and 3, the hydraulic motor unit 100 includes the second hydraulic motor main body 120(2), a motor case 150 forming a motor space for accommodating the second hydraulic motor main body 120(2), and a motor shaft 110 supported in a rotatable manner about the axis line by the motor case 150 while supporting the second hydraulic motor main body 120(2) in a relatively non-rotatable manner.

As shown in Fig. 3, the second hydraulic motor main body 120(2) includes a motor-side cylinder block 121 supported by the motor shaft 110 in a relatively non-rotatable manner, and a plurality of motor-side pistons 122 supported by the motor-side cylinder block 121 in a relatively non-rotatable about the axis line and in a reciprocating manner along the axis line.

In the present embodiment, the second hydraulic motor main body 120(2) is of a fixed displacement type in which the suction/discharge amount is constant.
Therefore, the hydraulic motor unit 100 includes a fixed swash plate 130 that directly or indirectly engages with free ends of the motor-side pistons 122 to define a reciprocating range of the motor-side pistons 122, in addition to the above components.
In the present embodiment, the motor-side pistons 122 are engaged to the fixed swash plate 130 by way of shoes.

The motor case 150 includes a hollow motor case main body 160 formed with an opening 165 that has a size allowing the second hydraulic motor main body 120(2) to pass therethrough, and a motor-side port block 170 detachably connected to the motor case main body 160 so as to close the opening 165 to form the motor space.

As shown in Fig. 2, the motor case 150 is formed with a motor-side first hydraulic fluid passage 511 fluidly connected to the second hydraulic motor main body 120(2), the motor-side first hydraulic fluid passage 511 having at least a first end opening to the outer side to form a motor-side hydraulic fluid port 511(P); and a motor-side second hydraulic fluid passage 512 fluidly connected to the second hydraulic motor main body 120(2), the motor-side second hydraulic fluid passage 512 having at least a first end opening to the outer side to form a motor-side hydraulic fluid port 512(P).

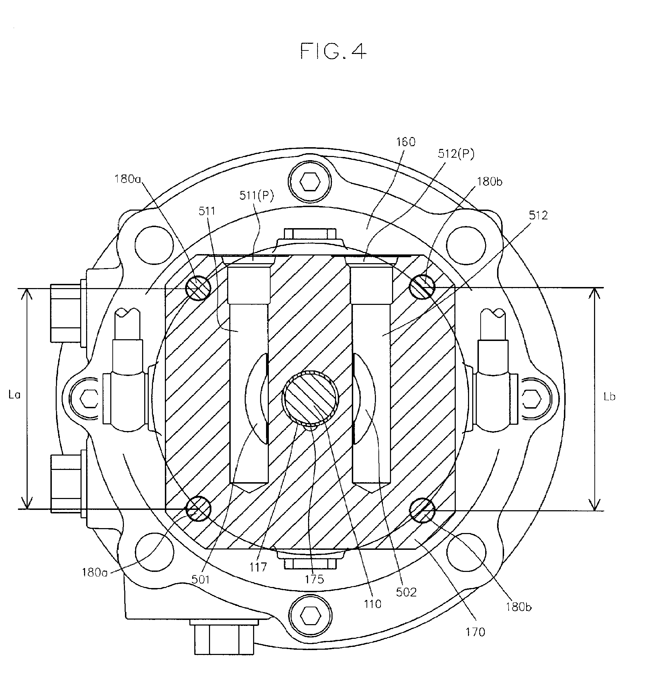

Fig. 4 shows a cross-sectional view of the motor-side port block 170 taken along line IV-IV of Fig. 3.
As shown in Fig. 4, the motor-side first and second hydraulic fluid passages 511, 512 are formed in the motor-side port block 170 in the present embodiment.

Specifically, as shown in Fig. 4, the motor-side port block 170 is formed with a first kidney port 501 opened to a motor sliding surface to which the second hydraulic motor main body 120(2) contacts in a sliding manner around the axis direction, a second kidney port 502 opened to the motor sliding surface on a side opposite to the first kidney port 501 with the motor shaft 110 in between, the motor-side first hydraulic fluid passage 511 fluidly connected to the first kidney port 501 and the motor-side second hydraulic fluid passage 512 fluidly connected to the second kidney port 502.

As shown in Fig. 3, the motor case main body 160 includes an end wall 161 extending in a direction substantially orthogonal to the motor shaft 110, and a peripheral wall 162 extending in the axis line of the motor shaft 110 from the end wall 161, wherein a free end side of the peripheral wall 162 forming the opening 165.
In the present embodiment, the motor case main body 160 is configured so that the end wall 161 has a peripheral edge extending radially outward than the peripheral wall 162, where the peripheral edge of the end wall 161 acts as an attachment flange for attaching the wheel motor device 500 to the vehicle frame 12.

As shown in Fig. 3, the motor shaft 110 is supported in a rotatable manner about the axis line by the motor case 150 in a state of supporting the second hydraulic motor main body 120(2) in a relatively non-rotatable manner within the motor space defined by the motor case main body 160 and the motor-side port block 170 and having a first end 111 on an outer side in a width direction of the vehicle extending outward from the motor case 150.

Specifically, the end wall 161 of the motor case main body 160 is formed with a first supporting hole for supporting the first end 111 of the motor shaft 110.
As described above, the first end 111 of the motor shaft 110 is extended outward from the motor case main body 160. Therefore, the first supporting hole is formed as a pass-through hole. The motor shaft 110 is supported in a rotatable manner about the axis line by the end wall 161 through a bearing member 115 arranged in the first supporting hole in a state that the first end 111 extends outward through the first supporting hole. A reference numeral 116 in Fig. 3 is a motor case main body-side sealing member for liquid-tightly sealing the first supporting hole.

A second end 112 of the motor shaft 110 on an inner side in the width direction of the vehicle is supported in a rotatable manner about the axis line by the motor-side port block 170.
Specifically, the motor-side port block 170 is formed with a second supporting hole for supporting the second end 112 of the motor shaft 110.

In the present embodiment, the second end 112 of the motor shaft 110 also extends outward from the motor case 150 as shown in Fig. 3, and a below mentioned brake unit 310 acts on the second end 112.
In other words, the second supporting hole in the motor-side port block 170 is formed as a pass-through hole, and the motor shaft 110 is supported in a rotatable manner about the axis line by the motor-side port block 170 through a bush 117 (see Fig. 4) arranged in the second supporting hole with the second end 112 extending outward through the second supporting hole. A reference numeral 118 in Fig. 3 is a port block-side sealing member for liquid tightly sealing the second supporting hole.

Since the motor shaft 110 slidably contacts the bush 117 securely arranged in the second supporting hole of the motor-side port block 170, leakage fluid from the portion where the second hydraulic motor main body 120(2) slidably contacts the motor-side port block 170 and reservoir fluid in the motor space may enter into a gap between an outer peripheral surface of the motor shaft 110 and an inner peripheral surface 117 of the bush, which may produce hydraulic pressure that pushes the port block-side sealing member 118 outward from the second supporting hole.
In view of this point, the following configuration is adopted in the present embodiment to effectively prevent unintentional hydraulic pressure from acting on the port block-side sealing member 118.

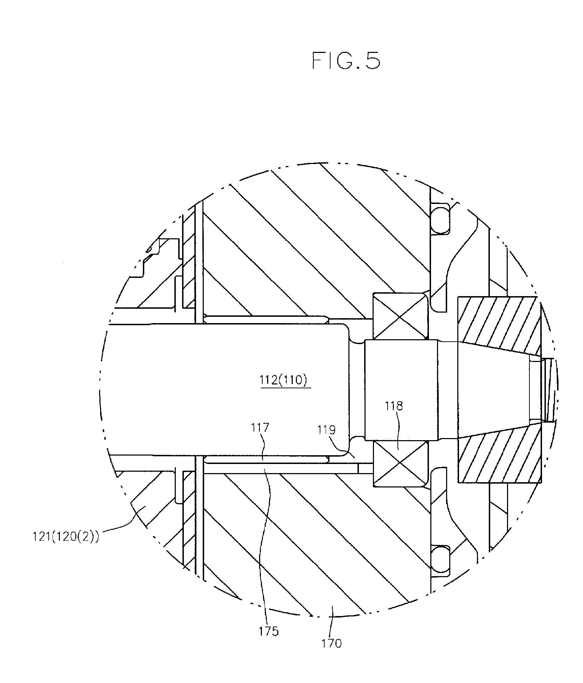

Fig. 5 shows an enlarged view of section V of Fig. 3.
As shown in Fig. 5, the port block-side sealing member 118 is inserted in the second supporting hole from an outer surface of the motor-side port block 170.
The bush 117, on the other hand, is inserted in the second supporting hole from an inner surface (a surface to which the second hydraulic motor main body 120(2) slidably contacts) of the motor-side port block 170.
That is, the port block side-sealing member 118 is arranged on the outer side than the bush 117 in the width direction of the vehicle while existing a gap 119 between the sealing member 118 and the bush 117, as shown in Fig. 5.
In the configuration, when the leakage fluid or the reservoir fluid enters between the outer peripheral surface of the motor shaft 110 and the inner peripheral surface of the bush 117, hydraulic pressure generates in the gap 119, and the port block side sealing member 18 is pushed outward by such hydraulic pressure.

Regarding this aspect, in the present embodiment, the motor-side port block 170a is formed with a fluid groove 175 for fluidly connecting the gap 119 to the motor space as shown in Figs. 4 and 5, and the hydraulic pressure is effectively prevented from being generated in the gap 119 by the fluid groove 175.
Specifically, the fluid groove 117 is formed along the axis line of the motor shaft 110 at one part in the circumferential direction of the second supporting hole in a state of being opened to the inner circumferential surface of the second supporting hole

The fluid groove 175 is preferably arranged at a position (hereinafter referred to as motor bottom dead point) where the motor-side piston 122 is most deeply entered into the motor-side cylinder block 121 with respect to the rotating direction of the motor shaft 110.
According to the configuration, the rotation torque of the motor shaft 110 when the second hydraulic motor main body 120(2) and the motor shaft 110 are rotatably driven by the hydraulic pressure from the hydraulic pump main body 120 is prevented from acting on the fluid groove 175, whereby the fluid that has been flowed into the gap 119 is effectively flowed to the motor space through the fluid groove 175.

In the present embodiment, the motor-side port block 170 is detachably connected to the motor case main body 160, as described above.
In the configuration in which the motor case main body 160 and the motor-side port block 170 are detachably connected to each other, attachment holes 180 for connecting the motor case main body 160 and the motor-side port block 170 are formed at an unequal pitch, so that the motor-side port block 170 can connect to the motor case main body 160 only in a state that the fluid groove 175 is positioned on the bottom dead point of the motor-side piston 122 with respect to the rotating direction of the motor shaft 110.

In the present embodiment, as shown in Fig. 4, the motor case main body 160 and the motor-side port block 170 are detachably connected by way of four attachment holes 180 arranged around the axis line of the motor shaft 110.
In the configuration, for instance, a relative orientation of the motor-side port block 170 with respect to the motor case main body 160 is uniquely determined by making a pitch La between two attachment holes 180a, 180a on the side close to the motor-side first hydraulic fluid passage 511 with the motor shaft 110 as the reference out of the four attachment holes 180 different from a pitch Lb between two other attachment holes 180b, 180b on the side close to the motor-side second hydraulic fluid passage 512 with the motor shaft 110 as the reference, whereby the motor-side port block 170 can connect to the motor case main body 160 only in the orientation where the fluid groove 175 is positioned on the bottom dead point of the motor-side piston 122 with respect to the rotating direction of the motor shaft 110, and the assembly mistake of the motor-side port block 170 with respect to the motor case main body 160 could be reliably prevented.

The reduction gear unit 200 will now be described.
As shown in Figs. 2 and 3, the reduction gear unit 200 includes the reduction gear mechanism 210, and a gear case 250 detachably connected to the motor case 150 so as to form a gear space for accommodating the reduction gear mechanism 210.

In the present embodiment, the reduction gear mechanism 210 includes first and second planetary gear mechanisms 220a, 220b arranged in series with each other.

Specifically, the first supporting hole of the motor case 150 is a pass-through hole for allowing the first end 111 (the end on the outer side in the width direction of the vehicle in the present embodiment) of the motor shaft 110 to project into the gear space, as described above.
The reduction gear mechanism 210 is configured to reduce the speed of the rotational power output from the first end 111 of the motor shaft 110 and transmit the rotational power whose speed has been reduced toward the output member 290.
The gear space and the motor space are liquid tightly divided from each other by the motor-side sealing member 116, as shown in Fig. 3.

The first planetary gear mechanism 220a includes a first sun gear 221a supported in a relatively non-rotatable manner by the first end 111 of the motor shaft 110, a first planetary gear 224a that engages with the first sun gear 221a so as to revolve around the first sun gear 221a, a first carrier 222a that supports the first planetary gear 224a in a relatively rotatable manner and that revolves around the first sun gear 221a according to the revolution of the first planetary gear 224a, and a first internal gear 223a that engages with the first planetary gear 224a.
The second planetary gear mechanism 220b includes a second sun gear 221b operatively connected to the first carrier 222a, a second planetary gear 224b that engages with the second sun gear 221b so as to revolve around the second sun gear 221b, a second carrier 222b that supports the second planetary gear 224b in a relatively rotatable manner and that revolves around the second sun gear 221b according to the revolution of the second planetary gear 224b, and a second internal gear 223b that engages with the second planetary gear 224b.
The first and second internal gears 223a, 223b are preferably made by sintering in order to reduce the manufacturing cost.

As shown in Fig. 3, the gear case 250 includes a first gear case 260 connected to the motor case 150, and a second gear case 270 connected to the motor case 150 with the first gear case 260 in between.

The first gear case 260 has a hollow shape in which both the inner side in the width direction of the vehicle that contacts the motor case 150 and the outer side in the width direction of the vehicle on a side opposite to the motor case 150 are opened, and has an inner circumferential surface with which the first and second internal gears 223a, 223b are integrally formed.

As described above, in terms of manufacturing cost, the first and second internal gears 223a, 223b are preferably made by sintering. Therefore, in a case
where the first and second internal gears 223a, 223b are integrally formed with the first gear case 260 as in the present embodiment, the first gear case 260 is formed by sintering while integrally including the first and second internal gears 223a, 223b on the inner circumferential surface.
However, if the first gear case 260 is formed by sintering, the fluid in the gear space may leak out through the first gear case 260.
Therefore, a membrane for preventing fluid leakage is more preferably coated on an outer circumferential surface of the first gear case 260 facing outside.

The second gear case 270 has a hollow shape in which an inner side in the width direction of the vehicle that contacts the first gear case 260 is opened and an outer side in the width direction of the vehicle on a side opposite to the first gear case 260 is closed by an end wall.
The end wall of the second gear case 270A is formed with a pass-through hole 275 through which the output member 290 is passed.

As shown in Fig. 3, the output member 290 includes a flange part 291 connected to the second carrier 222b so as to rotate about the axis line according to the revolution of the second carrier 222b about the second sun gear 221b, and an output shaft part 292 extending outward in the width direction of the vehicle from the flange part 291.
In the present embodiment, the output member 290 is supported at two points including a first bearing member 295 arranged between an inner circumferential surface of the second gear case 270 and an outer circumferential surface of the flange part 291, and a second bearing member 296 arranged between an inner circumferential surface of the pass-through hole 275 formed in the end wall of the second gear case 270 and an outer circumferential surface of the output shaft part 292, so that the output member 290 could be stably rotated about the axis line.

More preferably, the first bearing member 295 is arranged so that its outer ring body 295a is arranged across the first and second gear cases 260, 270.
Specifically, as shown in Fig. 3, the first gear case 260a is formed, at a surface facing the second gear case 270, with a first concave part in which an inner end of the outer ring body 295a in the width direction of the vehicle is engaged, and the second gear case 270a is formed, at a surface facing the first gear case 260, with a concave part in which an outer end of the outer ring body 295a in the width direction of the vehicle is engaged.
Specifically, the first bearing member 295 includes the outer ring body 295a that is engaged into the first and second concave parts, an inner ring body 295b that is engages to an outer circumferential surface of the flange part 291, and rolling elements 295c such as a ball arranged between the outer ring body 295a and the inner ring body 295b.

The arrangement where the outer ring body 295a of the first bearing member 295 is engaged into the first and second concave parts respectively formed in the first and second gear case 260, 270 makes it possible to use the first bearing member 295 as a positioning member for the first and second internal gears 223a, 223b integrally formed with the first gear case 260.

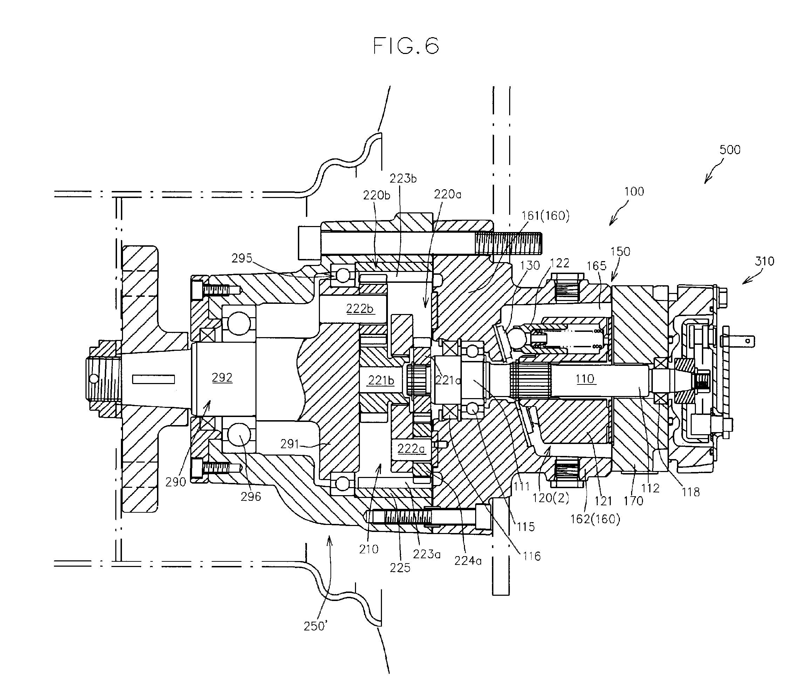

The first and second internal gears 223a, 223b are integrally formed with the gear case 250 (the first gear case 260) in the present embodiment as described above, but the present invention is obviously not limited to the configuration.
For instance, the first and second internal gears 223a, 223b may be formed separately from a gear case 250', as shown in Fig. 6.
The wheel motor device shown in Fig. 6 includes the gear case 250' with which the first and second gear cases 260, 270 are integrally formed.

Specifically, the gear case 250' has a hollow shape including an end wall formed with the pass-through hole 275, and a peripheral wall that extends from a peripheral edge of the end wall 275 towards the motor case and that has a free end contacting with the motor case 150, and has an opening at a free end of the peripheral wall.
The first and second internal gears 223a, 223b are integrally formed by a tubular member 225 that is arranged in the gear case 250' from the opening.

The arrangement where the first and second internal gears 223a, 223b are formed as separate bodies from the gear case 250' and the first and second internal gears 223a, 223b are surrounded by the gear case 250' makes it possible to effectively prevent the fluid in the gear space from being leaked outside even if the first and second internal gears 223a, 223b are made by sintering.

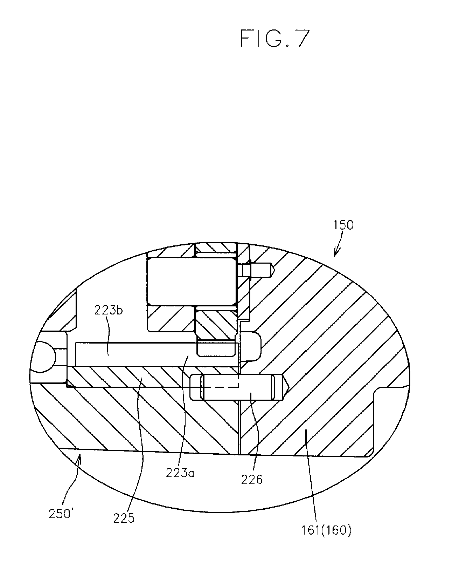

Furthermore, in the arrangement where the first and second internal gears 223a, 223b are separate from the gear case 250', it is preferable to form engagement holes at opposing surfaces of the tubular member 225 integrally formed with the first and second internal gears 223a, 223b and the motor case 150, as shown in Fig. 7, and to insert a pin 226 into the engagement holes. The preferable arrangement makes it possible to reliably and easily prevent the first and second internal gears 223a, 223b from being unintentionally rotated.

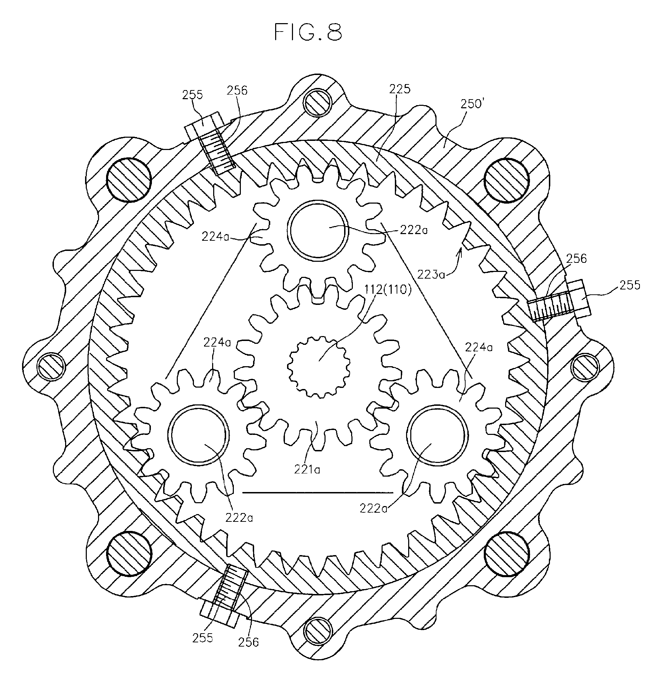

Alternatively, as shown in Fig. 8, by forming a mounting hole 256 through which a bolt or a pin 255 is inserted at a circumferential wall of the gear case 250', and engaging a free end of the bolt or the pin 225, which has been inserted in the mounting hole 256, into an outer circumferential surface of the tubular member 226 integrally formed with the first and second internal gears 223a, 223b, it is also possible to reliably and easily prevent the first and second internal gears 223a, 223b from being unintentionally rotated.

As described above, in the present embodiment, the reduction gear mechanism 210 reduces the speed of the rotational power output by the hydraulic motor main body 120 and the rotational power whose speed has been reduced by the reduction gear mechanism 210 is transmitted to the corresponding driving wheel 21(2), and therefore a low-torque/ high-rotation hydraulic motor main body can be used as the second hydraulic motor main body 120(2). The arrangement makes it possible to achieve miniaturization of the second hydraulic motor main body 120(2) and reduction of hydraulic fluid leakage amount from the second hydraulic motor main body 120(2) so that the transmission efficiency of the HST could be enhanced.

Furthermore, in the present embodiment, the wheel motor device 500 includes a brake unit 310.
The brake unit 310 is configured to apply the braking force to the motor shaft 110, which is in a state before the speed of the rotational power is reduced by the reduction gear mechanism 210.

Specifically, as shown in Fig. 3, the motor shaft 110 has the second end 112, which is on a side opposite to the first end 111 on the outer side in the width direction of the vehicle, projecting to the inner side in the width direction of the vehicle from the motor case 150 as described above, and a brake rotor of the brake unit 310 is mounted to the second end 112.
The brake unit 310 is connected to the motor case 150 so as to selectively apply the braking force to the second end 112 of the motor shaft 110 based on an operation from outside.
In the present embodiment, the brake unit 310 is of an internal expanding drum brake that is internally mounted in a brake case, but in place thereof, may be of a band brake in which having a drum type brake rotor is exposed to the outside or of a disc brake.

The hydraulic circuit of the working vehicle 1A will now be described by taking, as an example, a case where the pump-side first hydraulic fluid passage 441 has a high pressure at a forward movement of the vehicle and the second hydraulic fluid passage 442 has a low pressure at the forward movement.

The working vehicle 1A includes a first driving-mode switching valve 600 for selectively switching between a series driving mode in which at least one first hydraulic motor main body 120(1) provided in the first axle-driving device 50(1) and at least one second hydraulic motor main body 120(2) provided in the second axle-driving device 50(2) are connected in series with respect to the hydraulic pump main body 420, and a parallel driving mode in which the first and second hydraulic motor main bodies 120(1) and 120(2) are connected in parallel with respect to the hydraulic pump main body 420.

Specifically, as shown in Fig. 2, the working vehicle 1A includes a pump-side forward-movement high-pressure line 700 including the pump-side first hydraulic fluid passage 441 into which the hydraulic pump main body 420 discharges the hydraulic fluid at the forward movement; a pump-side forward-movement low-pressure line 710 including the pump-side second hydraulic fluid passage 442 from which the hydraulic pump main body 420 suctions the hydraulic fluid at the forward movement; a first-motor-side forward-movement high-pressure line 720 fluidly connected to the pump-side forward-movement high-pressure line 700 and supplying the hydraulic fluid towards the first hydraulic motor main body 120(1) at the forward movement; a first-motor-side forward-movement low-pressure line 730 for returning the hydraulic fluid, which has been discharged from the first hydraulic motor main body 120(1), to the pump-side forward-movement low-pressure line 710 at the forward movement; a second-motor-side forward-movement high-pressure line 740 fluidly connected to the pump-side forward-movement high-pressure line 700 and supplying the hydraulic fluid towards the second hydraulic motor main body 120(2) at the forward movement; a second-motor-side forward-movement low-pressure line 750 for returning the hydraulic fluid, which has been discharged from the second hydraulic motor main body 120(2), to the pump-side forward-movement low-pressure line 710 at the forward movement; and the first driving-mode switching valve 600 interposed in both of the second-motor-side forward-movement low-pressure line 750 and the first-motor-side forward-movement high-pressure line 720 so as to respectively divide the two lines 750, 720 into upstream sides 750U, 720U and downstream sides 750D, 720D with the forward movement as the reference.

The first driving-mode switching valve 600 is configured to selectively take a series connecting position for fluidly connecting the forward-movement upstream side 750U of the second-motor-side forward-movement low-pressure line 750 to the forward-movement downstream side 720D of the first-motor-side forward-movement high-pressure line 720 and closing the forward-movement downstream side 750D of the second-motor-side forward-movement low-pressure line 750 and the forward-movement upstream side 720U of the first-motor-side forward-movement high-pressure line 720, and a parallel connecting position for fluidly connecting the forward-movement upstream side 750U to the forward-movement downstream side 750D of the second-motor-side forward-movement low-pressure line 750 and fluidly connecting the forward-movement upstream side 720U to the forward-movement downstream side 720D of the first-motor-side forward-movement high-pressure line 720.

As described above, the working vehicle 1A according to the present embodiment is capable of switching the series driving mode in which the first and second hydraulic motor main bodies 120(1) and 120(2) are fluidly connected in series with respect to the hydraulic pump main body 420, and the parallel driving mode in which the first and second hydraulic motor main bodies 120(1) and 120(2) are fluidly connected in parallel with respect to the hydraulic pump main body 420 by the first driving-mode switching valve 600, thereby obtaining following effects.

Specifically, in the hydraulic four-wheel-drive working vehicle, the rotation speed and the rotation torque of the hydraulic motor main body are changed by changing the suction/discharge amount of the hydraulic pump main body and/or the hydraulic motor main body that is of variable displacement type (hereinafter referred to as variable displacement member).
For instance, in the hydraulic four-wheel-drive working vehicle in which the hydraulic pump main body is of the variable displacement type, the hydraulic motor main body is rotated at high-speed/low-torque state by increasing the suction/discharge amount of the hydraulic pump main body, and the hydraulic motor main body is rotated at low-speed/high-torque state by decreasing the suction/discharge amount of the hydraulic pump main body.

In the conventional hydraulic four-wheel-drive working vehicle, the variable range of the rotation speed/rotation torque of the hydraulic motor main body depends only on the variable range of the suction/discharge amount of the variable displacement member since the hydraulic pump main body and the hydraulic motor main body are fluidly connected by a single hydraulic circuit.
For instance, it is possible to enlarge the variable range of the rotation speed/rotation torque of the hydraulic motor main body by enlarging the variable range of he suction/discharge amount of the variable displacement member. However, this method results in enlarging the variable displacement member in size.

The hydraulic four-wheel-drive working vehicle 1A according to the present embodiment, on the other hand, can switch between the series driving mode in which the first and second hydraulic motor main bodies 120(1) and 120(2) are fluidly connected in series with respect to the hydraulic pump main body 420, and the parallel driving mode in which the first and second hydraulic motor main bodies 120(1), 120(2) are fluidly connected in parallel with respect to the pump main body 420 by the first driving-mode switching valve 600, as described above.
According to such configuration, it is possible to supply the total amount of the hydraulic fluid discharged from the hydraulic pump main body 420 to each of the first and second hydraulic motor main bodies 120(1), 120(2) by selecting the series driving mode, thereby rotating the first and second hydraulic motor main bodies 120(1), 120(2) at the high-speed/low-torque driving mode.
It is also possible to supply the hydraulic fluid discharged from the hydraulic pump main body 420 in a distributed manner to the first and second hydraulic motor main bodies 120(1), 120(2) by selecting the parallel driving mode, thereby rotating the first and second hydraulic motor main bodies 120(1), 120(2) at the low-speed/high-torque driving mode.
Therefore, the first and second hydraulic motor main bodies 120(1), 120(2) can be driven at the high-speed driving state at the time when the working vehicle travels on road or the like, and at the high-torque driving state at the time when the working vehicle travels with working or the like, without enlarging the hydraulic pump main body 420 nor the first and second hydraulic motor main bodies 120(1), 120(2).

In the present embodiment, the second axle-driving device 50(2) includes the pair of wheel motor devices 500 for respectively driving the left and right second driving wheels 21(2)L, 21(2)R, as described above.
That is, the working vehicle 1A according to the present embodiment includes a pair of second left-side and right-side hydraulic motor main bodies 120(2)L, 120(2)R for operatively and respectively driving the left and right second driving wheels 21(2)L, 21(2)R, as shown in Fig. 2.

In the configuration in which the pair of second left-side and right-side hydraulic motor main bodies 120(2)L, 120(2) R for operatively and respectively driving the pair of left and right second driving wheels 21(2)L, 21(2)R are included, the pair of second left-side and right-side hydraulic motor main bodies 120(2)L, 120(2)R may be fluidly connected in parallel to the hydraulic pump main body 420, as shown in Fig. 2.
According to the configuration, the pair of second left-side and right-side hydraulic motor main bodies 120(2)L, 120(2)R are driven in a hydraulically-differential manner by the hydraulic fluid from the hydraulic pump main body 420.

Specifically, the working vehicle 1A includes a pair of second-motor-side connecting lines 760, 770 for fluidly connecting the pair of second left-side and right-side hydraulic motor main bodies 120(2)L, 120(2)R in parallel, in addition to the various hydraulic lines.
As shown in Fig. 2, the pair of second-motor-side connecting lines 760, 770 includes a second-motor-side forward-movement high-pressure connecting line 760 that has a high pressure at the forward movement and a second-motor-side forward-movement low-pressure connecting line 770 that has a low pressure at the forward movement.

The second left-side and right-side hydraulic motor main bodies 120(2)L, 120(2)R can be driven in a differential manner to each other by utilizing function of the hydraulic fluid by connecting the pair of second left-side and right-side hydraulic motor main bodies 120(2)L, 120(2)R in parallel. However, on the other hand, if one of the pair of second driving wheels 21(2)L, 21(2)R falls into a depression or a mud area so that the rotation load of the one of the second driving wheels becomes extremely small, the hydraulic fluid from the hydraulic pump main body 420 flows in a concentrated manner into the second hydraulic motor main body that operatively drives the one of the second driving wheels, and as a result, the hydraulic fluid will not be supplied to the second hydraulic motor main body that operatively drives the other one of the second driving wheels, which may make the working vehicle immovable.

Specifically, in a case where the series driving mode is selected by the first driving-mode switching valve 600, the hydraulic fluid from the hydraulic pump main body 420 is always supplied to the first hydraulic motor main body 120(1) that drives the first driving wheel even if the rotation load of one or both of the pair of second driving wheels 21(2) becomes extremely small. Therefore, the working vehicle will not be in an immovable state.

However, if the rotation load of one of the pair of second driving wheels 21(2) becomes extremely small when the parallel driving mode is selected by the first driving-mode switching valve 600, the hydraulic fluid from the hydraulic pump main body 420 flows in a concentrated manner to the pair of second hydraulic motor main bodies 120(2) rather than to the pair of first hydraulic motor main bodies 120(1), and furthermore, flows in a concentrated manner to the second hydraulic motor main body 120(2) that drives the one of the second driving wheels 120(2) having a small rotation load. When such situation occurs, the remaining driving wheels other than the one of the second driving wheels are in lack of the driving force.
The event that any of the driving wheels falls into a depression or a mud area is likely to occur at the time when the working vehicle travels with working in a farm field where the parallel driving mode is frequently selected (i.e., where the high-torque drive is necessary).

In view of this point, the working vehicle 1A according to the present embodiment includes a following configuration so as to selectively select a right-left differential driving state in which the pair of second driving wheels 21(2) are driven in a differential manner to each other, and a right-left differential-lock driving state in which the differential drive of the pair of second driving wheels 21(2) is locked so that the pair of second driving wheels 21(2) are independently driven with respect to each other regardless of the difference in rotation load between the pair of second driving wheels 21(2).

That is, as shown in Fig. 2, the working vehicle 1A includes a second driving-mode switching valve 620 interposed in the second-motor-side forward-movement high-pressure connecting line 760.
The second driving-mode switching valve 620 is interposed in the second-motor-side forward-movement high-pressure connecting line 760 so as to divide the second-motor-side forward-movement high-pressure connecting line 760 into a forward-movement high-pressure left-side connecting line 760L fluidly connected to a forward-movement suction port of the second left-side hydraulic motor main body 120(2)L and a forward-movement high-pressure right-side connecting line 760R fluidly connected to a forward-movement suction port of the second right-side hydraulic motor main body 120(2)R.

In the present embodiment, the forward-movement high-pressure left-side connecting line 760L includes the motor-side first hydraulic fluid passage 511 in the hydraulic motor unit 100 for driving the second driving wheel 21(2) on the left side.
Similarly, the forward-movement high-pressure right-side connecting line 760R includes the motor-side first hydraulic fluid passage 511 in the hydraulic motor unit 100 for driving the second driving wheel 21(2) on the right side.

Furthermore, the working vehicle 1A includes a pair of second left-side and right-side hydraulic motor main body lines 740L, 740R as the second-motor-side forward-movement high-pressure line 740.

The pair of second left-side and right-side hydraulic motor main body lines 740L, 740R have first ends fluidly connected to the pump-side forward-movement high-pressure line 700 by way of a first flow dividing/combining mechanism 640, and second ends fluidly and respectively connected to the forward-movement high-pressure left-side and right-side connecting lines 760L, 760R.

The second driving-mode switching valve 620 is configured so as to selectively take a communicating position of fluidly connecting the forward-movement high-pressure left-side connecting line 760L and the forward-movement high-pressure right-side connecting line 760R to each other, and a shutoff position of fluidly disconnecting between the forward-movement high-pressure left-side connecting line 760L and the forward-movement high-pressure right-side connecting line 760R from each other.

According to the working vehicle 1A with the configuration, it is possible to obtain the right-left differential driving state in which the pair of second hydraulic motor main bodies 120(2) are driven in a hydraulically-differential manner by positioning the second driving-mode switching valve 620 at the communicating position, and the right-left differential-lock driving state in which the pair of second hydraulic motor main bodies 120(2) are independently driven with the hydraulic fluid amount defined by the first flow dividing/combining mechanism 640 by positioning the second driving-mode switching valve 620 at the shutoff position.
Therefore, even if one of the pair of second driving wheels 21(2) falls into the depression or the mud area when the parallel driving mode is selected, the other one of the second driving wheels can be effectively driven by positioning the second driving-mode switching valve 620 at the shutoff position.

More preferably, the second-motor-side forward-movement high-pressure line 740 further includes a second hydraulic motor main body common line 740C having a first end fluidly connected to the pump-side forward-movement high-pressure line 700.
In the preferred configuration, the second driving-mode switching mode 620 is configured to fluidly connect a second end of the second hydraulic motor main body common line 740C to the second-motor-side forward-movement high-pressure connecting line 760 in a state of fluidly connecting the forward-movement high-pressure left-side connecting line 760L and the forward-movement high-pressure right-side connecting line 760R when positioned at the communicating position, and to fluidly disconnect the second end of the second hydraulic motor main body common line 740C to the second-motor-side forward-movement high-pressure connecting line 760 in a state of fluidly disconnecting between the forward-movement high-pressure left-side connecting line 760L and the forward-movement high-pressure right-side connecting line 760R when positioned at the shutoff state.
According to the configuration, the hydraulic fluid from the hydraulic pump main body 420 is supplied to the second-motor-side forward-movement high-pressure connecting line 760 through the second hydraulic motor main body common line 740C in a state of bypassing the first flow dividing/combining mechanism 640 when the second driving-mode switching valve 620 is positioned at the communicating position so that the pair of second hydraulic motor main bodies 120(2) are driven in the right-left differential driving state.
Therefore, the pressure loss of the hydraulic fluid in the right-left differential driving state can be effectively reduced.

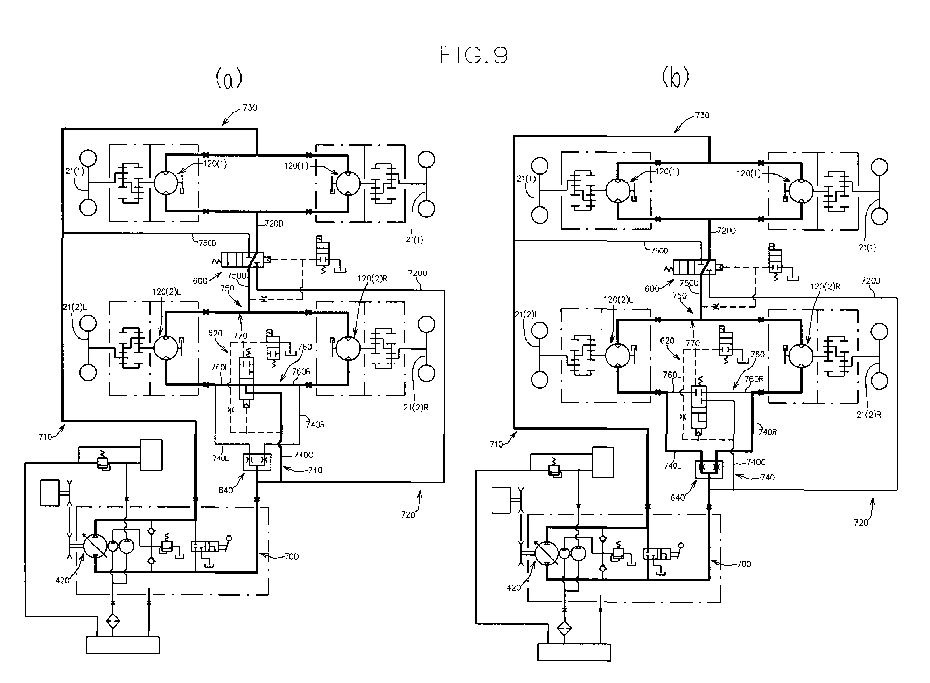

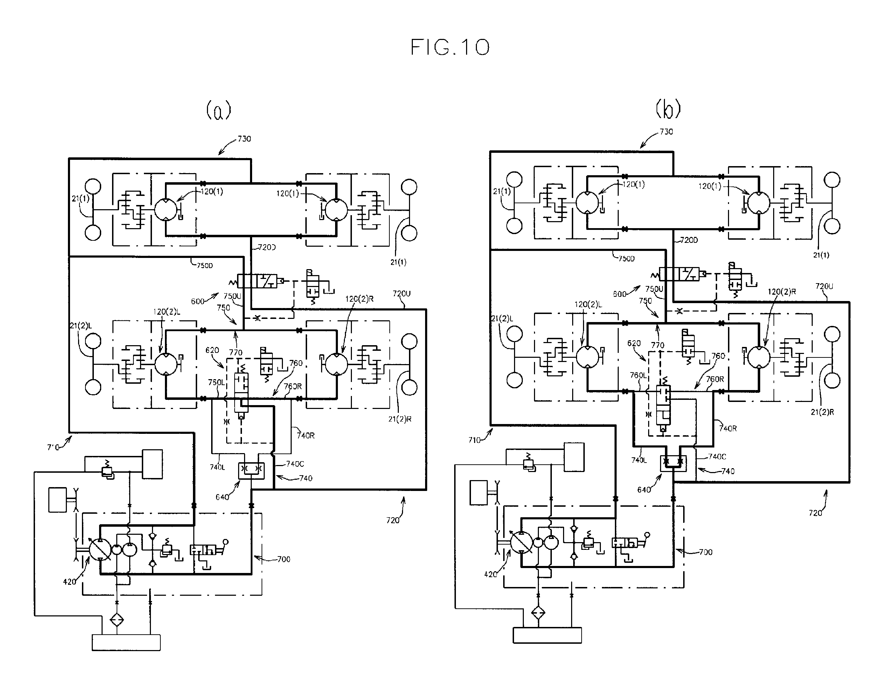

The flow of hydraulic fluid in various driving modes that the working vehicle 1A according to the present embodiment could select will now be described with reference to Figs. 9 and 10.
Fig. 9 shows the hydraulic circuit diagram when the first driving-mode switching valve 600 is positioned at the series connecting position. Figs. 9A and 9B respectively show the states when the second driving-mode switching valve 620 is positioned at the communicating position and the shutoff position.
Fig. 10 shows the hydraulic circuit when the first driving-mode switching valve 600 is positioned at the parallel connecting position. Figs. 10A and 10B respectively show the states when the second driving-mode switching valve 620 is positioned at the communicating position and the shutoff position.
The flow channel through which the hydraulic fluid flows is shown with a heavy line in Figs. 9 and 10.

First, a case where the first driving-mode switching valve 600 is positioned at the series connecting position will be described.
When the first driving-mode switching valve 600 is positioned at the series connecting position, the forward-movement upstream side 750U of the second-motor-side forward-movement low-pressure line 750 is fluidly connected to the forward-movement downstream side 720D of the first-motor-side forward-movement high-pressure line 720 by the first driving-mode switching valve 600, as shown in Figs. 9A and 9B. Therefore, the pair of second hydraulic motor main bodies 120(2) and the pair of first hydraulic motor main bodies 120(1) are connected in series with respect to the hydraulic pump main body 420 so that the working vehicle 1A travels in the high-speed/low-torque driving state.

When the second driving-mode switching valve 620 is positioned at the communicating position in this state, the second driving-mode switching valve 620 fluidly connects the forward-movement high-pressure left-side connecting line 760L and the forward-movement high-pressure right-side connecting line 760R to each other, and fluidly connects the second motor main body common line 740C to the second-motor-side forward-movement high-pressure connecting line 760. Therefore, the working vehicle 1A travels in the differential driving state in which the pair of second hydraulic motor main bodies 120(2) are driven in a hydraulically-differential manner.

That is, as shown in Fig. 9A, when the first driving-mode switching valve 600 is positioned at the series connecting position and the second driving-mode switching mode 620 is positioned at the communicating position, the first and second driving wheels 21(1) and 21(2) are driven in the high-speed/low-torque driving state and the pair of second driving wheels are driven in the differential driving state (hereinafter referred to as high-speed/right-left differential state).

As shown in Fig. 9A, in the high-speed/right-left differential state, the hydraulic fluid discharged from the hydraulic pump main body 420 flows through the pump-side forward-movement high-pressure line 700 → the second hydraulic motor main body common line 740C → the second driving-mode switching valve 620 → the second-motor-side forward-movement high-pressure connecting line 760 → the pair of second hydraulic motor main bodies 120(2) → the second-motor-side forward-movement low-pressure connecting line 770 → the forward-movement upstream side 750U of the second-motor-side forward-movement low-pressure line 750 → the first driving-mode switching valve 600 → the downstream side 720D of the first-motor-side forward-movement high-pressure line 720 → the pair of first hydraulic motor main bodies 120(1) → the first-motor-side forward-movement low-pressure line 730 → the pump-side forward-movement low-pressure line 710, and then returns to the hydraulic pump main body 420.

In the present embodiment, when the second driving-mode switching valve 620 is positioned at the communicating position so that the pair of second hydraulic motor main bodies 120(2) are driven in the right-left differential driving state, the hydraulic fluid from the hydraulic pump main body 420 is supplied to the second-motor-side forward-movement high-pressure connecting line 760 through the second hydraulic motor main body common line 740C in a state of bypassing the first flow dividing/combining mechanism 640, as shown in Fig. 9A. Therefore, the pressure loss of the hydraulic fluid in the right-left differential driving state could be effectively reduced.

In the present embodiment, the pair of first hydraulic motor main bodies 120(1) are connected in parallel to each other, as shown in Figs. 2, 9, and 10. Therefore, the pair of first hydraulic motor main bodies 120(1) are driven in a hydraulically-differential manner to each other.
Obviously, the second driving-mode switching valve 620 may be arranged on a side of the first driving wheel 21(1) in place of or in addition to the second driving wheel 21(2), so as to be capable of switching between a state in which the pair of first hydraulic motor main bodies 120(1) are independently driven from each other and a state in which the pair of first hydraulic motor main bodies 120(1) are driven in a hydraulically-differential manner to each other.

When the second driving-mode switching valve 620 is positioned at the shutoff position in a case where the first driving-mode switching valve 600 is positioned at the series connecting position, the second driving-mode switching valve 620 fluidly disconnects the forward-movement high-pressure left-side connecting line 760L and the forward-movement high-pressure right-side connecting line 760R to each other and fluidly disconnects the second hydraulic motor main body common line 740C to the second-motor-side forward-movement high-pressure connecting line 760 in the high-speed/low-torque driving state, as shown in Fig. 9B. Therefore, the pair of second hydraulic motor main bodies 120(2) are driven in the differential-lock driving state in which they are independently driven with respect to each other with the fluid amount defined by the first flow dividing/combining mechanism 640.

That is, as shown in Fig. 9B, the first and second driving wheels 21(1) and 21(2) are driven in the high-speed/low-torque driving state and the pair of second driving wheels 21(2) are driven in the differential-lock driving state (hereinafter referred to as high-speed/right-left differential-lock state) when the first driving-mode switching valve 600 is positioned at the series connecting position and the second driving mode switching mode 620 is positioned at the shutoff position.

As shown in Fig. 9B, in the high-speed/right-left differential-lock state, the hydraulic fluid discharged from the hydraulic pump main body 420 flows through the pump-side forward-movement high-pressure line 700 → the first flow dividing/combining mechanism 640 → the pair of second left-side and right-side hydraulic motor main body lines 740L, 740R → the forward-movement high-pressure left side and right-side connecting lines 760L, 760R → the pair of second hydraulic motor main bodies 120(2) → the second-motor-side forward-movement low-pressure connecting line 770 → the forward-movement upstream side 750U of the second-motor-side forward-movement low-pressure line 750 → the first driving-mode switching valve 600 → the downstream side 720D of the first-motor-side forward-movement high-pressure line 720 → the pair of first hydraulic motor main bodies 120(1) → the first-motor-side forward-movement low-pressure line 730 → the pump-side forward-movement low-pressure line 710 and then returns to the hydraulic pump main body 420.

Next, a case where the first driving-mode switching valve 600 is positioned at the parallel connecting position will be described.
When the first driving-mode switching valve 600 is positioned at the parallel connecting position, the first driving-mode switching valve 600 fluidly connects the forward-movement upstream side 750U to the forward-movement downstream side 750D of the second-motor-side forward-movement low-pressure line 750 and fluidly connects the forward-movement upstream side 720U to the forward-movement downstream side 720D of the first-motor-side forward-movement high-pressure line 720, as shown in Figs. 10A and 10B. Therefore, the pair of second hydraulic motor main bodies 120(2) and the pair of first hydraulic motor main bodies 120(1) are connected in parallel with respect to the hydraulic pump main body 420 so that the working vehicle 1A travels in the low-speed/high-torque driving state.

Specifically, the hydraulic fluid discharged from the hydraulic pump main body 420 is branched to the second-motor-side forward-movement high-pressure line 740 and the first-motor-side forward-movement high-pressure line 720 from the pump-side forward-movement high-pressure line 700, as shown in Figs. 10A and 10B. That is, a part of the hydraulic fluid discharged from the hydraulic pump main body 420 flows towards the pair of second hydraulic motor main bodies 120(2) through the second-motor-side forward-movement high-pressure line 740, and the remaining hydraulic fluid flows towards the pair of first hydraulic motor main bodies 120(1) through the first-motor-side forward-movement high-pressure line 720.

When the second driving-mode switching valve 620 is positioned at the communicating position in this state, the second driving-mode switching valve 620 fluidly connects the forward-movement high-pressure left-side connecting line 760L and the forward-movement high-pressure right-side connecting line 760R to each other and fluidly connects the second motor main body common line 740C to the second-motor-side forward-movement high-pressure connecting line 760. Therefore, the working vehicle 1A travels in the differential driving state in which the pair of second hydraulic motor main bodies 120(2) are driven in a hydraulically-differential manner to each other.
That is, as shown in Fig. 10A, the first and second driving wheels 21(1) and 21(2) are driven in the low-speed/high-torque driving state in a state where the first and second hydraulic motor main bodies 120(1), 120(2) are driven in a hydraulically-differential manner to each other, and the pair of second driving wheels are driven in the differential driving state (hereinafter referred to as low-speed/front-rear differential/right-left differential state), when the first driving-mode switching valve 600 is positioned at the parallel connecting position and the second driving-mode switching mode 620 is positioned at the communicating position.

As shown in Fig. 10A, in the low-speed/front-rear differential/right-left differential state, the hydraulic fluid for driving the pair of second hydraulic motor main bodies 120(2) flows through the pump-side forward-movement high-pressure line 700 → the second hydraulic motor main body common line 740C → the second driving-mode switching valve 620 → the second-motor-side forward-movement high-pressure connecting line 760 → the pair of second hydraulic motor main bodies 120(2) → the second-motor-side forward-movement low-pressure connecting line 770 → the forward-movement upstream side 750U of the second-motor-side forward-movement low-pressure line 750 → the first driving-mode switching valve 600 → the forward-movement downstream side 750D of the second-motor-side forward-movement low-pressure line 750 → the pump-side forward-movement low-pressure line 710, and then returns to the hydraulic pump main body 420.

In the present embodiment, when the second driving-mode switching valve 620 is positioned at the communicating position so that the pair of second hydraulic motor main bodies 120(2) are driven in the right-left differential driving state, the hydraulic fluid from the hydraulic pump main body 420 is supplied to the second-motor-side forward-movement high-pressure connecting line 760 through the second hydraulic motor main body common line 740C in a state of bypassing the first flow dividing/combining mechanism 640. Therefore, the pressure loss of the hydraulic fluid in the right-left differential driving state is effectively reduced.

Next, when the second driving-mode switching valve 620 is positioned at the shutoff position, the second driving-mode switching valve 620 fluidly disconnects the forward-movement high-pressure left-side connecting line 760L and the forward-movement high-pressure right-side connecting line 760R to each other and fluidly disconnects the second hydraulic motor main body common line 740C to the second-motor-side forward-movement high-pressure connecting line 760. Therefore, the working vehicle 1A travels in the differential-lock driving state in which the pair of second hydraulic motor main bodies 120(2) are independently driven from each other.

That is, as shown in Fig. 10B, the first and second driving wheels 21(1) and 21(2) are driven in the low-speed/high-torque driving state in a state where the first and second hydraulic motor main bodies 120(1), 120(2) are driven in a hydraulically-differential manner to each other, and the pair of second driving wheels 21(2) are driven in the differential-lock driving state (hereinafter referred to as low-speed/front-rear differential/right-left differential-lock state), when the first driving-mode switching valve 600 is positioned at the parallel connecting position and the second driving mode switching mode 620 is positioned at the shutoff position.

As shown in Fig. 10B, in the low-speed/front-rear differential/right-left differential-lock state, the hydraulic fluid for driving the pair of second hydraulic motor main bodies 120(2) flows through the pump-side forward-movement high-pressure line 700 → the first flow dividing/combining mechanism 640 → the pair of second left-side and right-side hydraulic motor main body lines 740L, 740R → the forward-movement high-pressure left side and right-side connecting lines 760L, 760R → the pair of second hydraulic motor main bodies 120(2) → the second-motor-side forward-movement low-pressure connecting line 770 → the forward-movement upstream side 750U of the second-motor-side forward-movement low-pressure line 750 → the first driving-mode switching valve 600 → the forward-movement downstream side 750D of the second-motor-side forward-movement low-pressure line 750 → the pump-side forward-movement low-pressure line 710, and then returns to the hydraulic pump main body 420.

As shown in Figs. 10A and 10B, in the low-speed/front-rear differential/right-left differential state and the low-speed/front-rear differential/right-left differential-lock state, the hydraulic fluid for driving the first hydraulic motor main bodies 120(1) flows through the pump-side forward-movement high-pressure line 700 → the forward-movement upstream side 720U of the first-motor-side forward-movement high-pressure line 720 → the first driving-mode switching valve 600 → the forward-movement downstream side 720D of the first-motor-side forward-movement high-pressure line 720 → the pair of first hydraulic motor main bodies 120(1) → the first-motor-side forward-movement low-pressure line 730 → the pump-side forward-movement low-pressure line 710, and then returns to the hydraulic pump main body 420.

The detailed configuration of the first driving-mode switching valve 600 and the second driving-mode switching valve 620 will now be described.
As shown in Figs. 2, 9, and 10, the first and second driving-mode switching valves 600, 620 in the present embodiment are of a pilot-pressure operation type that is capable of being position-controlled by a commercially available solenoid valve, thereby reducing the cost.

The first driving-mode switching valve 600 will be first described.

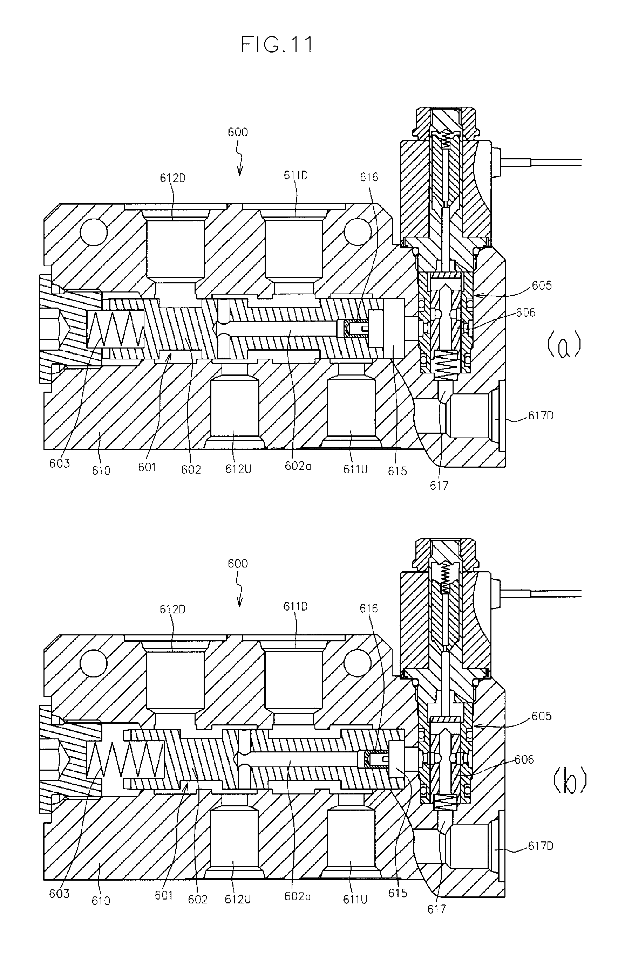

Fig. 11 shows a cross-sectional view of the first driving-mode switching valve 600.
As shown in Fig. 11, the first driving-mode switching valve 600 includes a first switching valve 601 of pilot-pressure operation type and a first solenoid valve 605 that controls the pilot pressure for the first switching valve 601.

In the present embodiment, the first switching valve 601 and the first solenoid valve 605 are mounted in a first valve case 610.
As shown in Fig. 11, the first valve case 610 includes an upstream-side first port 611U and an upstream-side second port 612U to which the forward-movement upstream side 720U of the first-motor-side forward-movement high-pressure line 720 and the forward-movement upstream side 750U of the second-motor-side forward-movement low-pressure line 750 are fluidly and respectively connected, and a downstream-side first port 611D and a downstream-side second port 612D to which the forward-movement downstream side 720D of the first-motor-side forward-movement high-pressure line 720 and the forward-movement downstream side 750D of the second-motor-side forward-movement low-pressure line 750 are fluidly and respectively connected.

The first switching valve 601 includes a first switching valve main body 602 accommodated in a movable manner in the axis line within the first valve case 610 and a first biasing member 603 for biasing the first switching valve main body 602 towards one side (a right side in Fig. 11) in the axis line.

As shown in Fig. 11, the first switching valve main body 602 is accommodated in a movable manner in the axial direction within a valve hole formed in the first valve case 610 in a state of defining a first fluid chamber 615 on a side opposite to the first biasing member 603 with respect to the axis line.
The first switching valve main body 602 is configured to take the series connecting position (see Fig. 11A) for fluidly connecting the upstream-side second port 612U to the downstream-side first port 612D, and closing the upstream-side first port 611U and the downstream-side second port 612D when pushed towards the other side (a left side in Fig. 11) in the axis line against the biasing force of the first biasing member 603 by the hydraulic pressure in the first fluid chamber 615, and the parallel connecting position (see Fig. 11(b)) for fluidly connecting the upstream-side first port 611U and the downstream-side first port 611D to each other and fluidly connecting the upstream-side second port 612 and the downstream-side second port 612D to each other when pushed towards the one side (the right side in Fig. 11) in the axis line by the biasing force of the first biasing member 603.

As shown in Fig. 2, the first fluid chamber 615 is fluidly connected to the upstream side 750U of the second-motor-side forward-movement low-pressure line 750 by way of an orifice or a throttle 616.
In the present embodiment, the first switching valve main body 602 is formed with a first communication fluid passage 602a having a first end fluidly connected to the upstream-side second port 612U and a second end fluidly connected to the first fluid chamber 615, and the throttle 616 is interposed in the first communication fluid passage 602a, as shown in Fig. 11.

The first solenoid valve 605 includes a first solenoid valve main body 606 for selectively opening or closing the first fluid chamber 615.
In the present embodiment, the first valve case 610 is formed with a first drain fluid passage 617 having a first end fluidly connected to the first fluid chamber 615 and a second end opened to an outer surface to form a first drain port 617D, as shown in Fig. 11.
The first solenoid main body 606 is mounted in the first valve case 610 so as to selectively take a communicating position of communicating the first drain fluid passage 617 and a shutoff position of shutting off the first drain fluid passage 617.

The thus configured first driving-mode switching valve 600 operates in the following manner.
When the first fluid chamber 615 is closed by the first solenoid valve 605, the hydraulic pressure of the first fluid chamber 615 rises by the hydraulic fluid flowing in from the upstream side 750U of the second-motor-side forward-movement low-pressure line 750 through the first communication fluid passage 602a, and then the first switching valve main body 602 is pushed towards the other side in the axis line by the hydraulic pressure against the biasing force of the first biasing member 603 to take the series connecting position (see Fig. 11A).
On the other hand, when the first fluid chamber 615 is opened by the first solenoid valve 605, the first switching valve main body 602 is pushed towards the one side in the axis line by the biasing force of the first biasing member 603 to take the parallel connecting position (see Fig. 11B).

As described above, the first driving-mode switching valve 600 is configured such that the first switching valve 601 of pilot-pressure operation type changeovers the fluid channel of the first-motor-side forward-movement high-pressure line 720 and the second-motor-side forward-movement low-pressure line 750 through which the hydraulic fluid of large flow volume flows, and the first solenoid valve 605 controls the pilot pressure for the first switching valve 601.
Therefore, the solenoid valve does not need to be interposed in the hydraulic line through which the hydraulic fluid of large flow volume flows so that the commercially available solenoid valve can be used as the first solenoid valve 605, thereby reducing the cost of the first driving-mode switching valve 600.

The second driving-mode switching valve 620 will now be described.

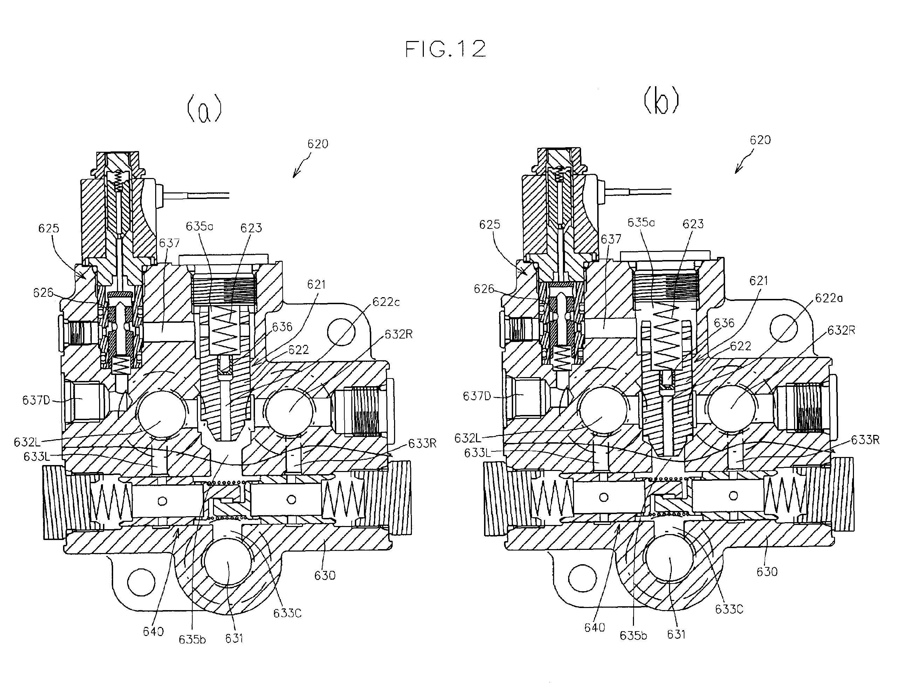

Fig. 12 shows a cross-sectional view of the second driving-mode switching valve 620.
As shown in Fig. 12, the second driving-mode switching valve 620 includes a second switching valve 621 of a pilot-pressure operation type and a second solenoid valve 625 that controls the pilot pressure for the second switching valve 621.

The second switching valve 621 and the second solenoid valve 625 are mounted in a second valve case 630.
In the present embodiment, the first flow dividing/combining mechanism 640 is also mounted in the second valve case 630, as shown in Fig. 12.

Specifically, the second valve case 630 includes a second motor upstream-side port 631 to which the pump-side forward-movement high-pressure line 700 is fluidly connected, a left-side connecting fluid passage 632L forming a part of the forward-movement high-pressure left-side connecting line 760L; a right-side connecting fluid passage 632R forming a part of the forward-movement high-pressure right-side connecting line 760R; a pair of second left-side and right-side hydraulic motor main body fluid passages 633L, 633R having a first end fluidly connected to the second motor upstream-side port 631 by way of the first flow dividing/combining mechanism 640 and second ends respectively and fluidly connected to the left-side connecting fluid passage 632L and the right-side connecting fluid passage 632R, the pair of second left-side and right-side hydraulic motor main body fluid passages 633L, 633R forming the pair of second left-side and right-side hydraulic motor main body lines 740L, 740R; and a second hydraulic motor main body common fluid passage 633C having a first end fluidly connected to the second motor upstream-side port 631, the second hydraulic motor main body common fluid passage 633C forming the second hydraulic motor main body common line 740C.

The second switching valve 621 includes a second switching valve main body 622 accommodated in the second valve case 630 in a movable manner in the axis line so as to selectively fluidly connect or disconnect the left-side and right-side connecting fluid passages 632L, 632R to each other, and a second biasing member 623 for biasing the second switching valve main body 622 towards one side (a lower side in Fig. 12 in the axis line).

The second switching valve main body 622 is arranged such that a second end on a side opposite to a first end that engages to the second biasing member 623 receives the hydraulic pressure of the second hydraulic motor main body common fluid passage 633C.
That is, the second switching valve main body 622 is mounted in the second valve case 630 in a movable manner in the axis line in a state where a spring chamber 635a in which the second biasing member 623 is accommodated is formed on the first end side and a pressure receiving chamber 635b to which the second hydraulic motor main body common fluid passage 633C is fluidly connected is formed on the second end side.
The second switching valve main body 622A is formed with a second communication fluid passage 622a for fluidly connecting the pressure receiving chamber 635b and the spring chamber 635a, the second communication fluid passage 622a being interposed with an orifice or a throttle 636.

The second solenoid valve 625 includes a second solenoid valve main body 626 for selectively opening or closing the spring chamber 635a.
In the present embodiment, the second valve case 630 is formed with a second drain fluid passage 637 having a first end fluidly connected to the spring chamber 635a and a second end opened to the outer surface to form a second drain port 637D, as shown in Fig. 12.
The second solenoid main body 626 is mounted in the second valve case 630 so as to selectively take a communicating position of communicating the second drain fluid passage 637 and a shutoff position of shutting off the second drain fluid passage 637.

The thus configured second driving-mode switching valve 620 operates in the following manner.
The spring chamber 635a is fluidly connected to the pressure receiving chamber 635b by way of the second communication fluid passage 622 in which the throttle 636 is interposed.
Therefore, when the spring chamber 635a is closed by the second solenoid valve 625, the second switching valve main body 622 is pushed towards the one side (a lower side in Fig. 12) in the axis line by the biasing force of the second biasing member 623 to take the shutoff position (see Fig. 12B) of fluidly disconnecting the left-side and right-side connecting fluid passages 632L, 632R to each other and fluidly disconnecting the second hydraulic motor main body common fluid passage 633C to the left-side and right-side connecting fluid passages 632L, 632R.

On the other hand, when the spring chamber 635a is opened by the second solenoid valve 625, the hydraulic pressure is substantially not generated in the spring chamber 635a, and thus second switching valve main body 622 is pushed towards the other side (an upper side in Fig. 12) in the axial direction against the biasing force of the second biasing member 623 by the hydraulic pressure of the pressure receiving chamber 635b to take the communicating position (see Fig. 12A) for fluidly connecting the left-side and right-side connecting fluid passages 632L, 632R to each other and fluidly connecting the second hydraulic motor main body common fluid passage 633C to the left-side and right-side connecting fluid passages 632L, 632R.

As described above, the second driving-mode switching valve 620 is configured such that the second switching valve 621 of a pilot-pressure operation type changeovers the fluid channel of the second hydraulic motor main body common fluid passage 633C, the left-side connecting fluid passage 632L and the right-side connecting fluid passage 633R through which hydraulic fluid of large amount flows, and the second solenoid valve 625 controls the pilot pressure for the second switching valve 621.
Therefore, the solenoid valve does not need to be interposed in the hydraulic line through which the hydraulic fluid of large amount flows so that the commercially available solenoid valve can be used as the second solenoid valve 625, thereby reducing the cost of the second driving-mode switching valve 620.

As shown in Fig. 2, the first and second solenoid valves 605, 625 are position-controlled by a control device 7 arranged in the working vehicle 1A based on a manual operation on a driving-mode changeover switch 6 arranged in vicinity of a driver's seat.
That is, the driving-mode changeover switch 6 is configured to selectively take a high-speed/right-left differential position, a high-speed/right-left differential-lock position, a low-speed/front-rear differential/right-left differential position or a low-speed/front-rear differential/right-left differential-lock position, according to the manual operation.
When the driving-mode changeover switch 6 is operated to the high-speed/right-left differential position, the control device 7 positions the first solenoid valve 605 at the shutoff position and positions the second solenoid valve 625 at the communicating position, thereby achieving the high-speed/right-left differential state.
When the driving-mode changeover switch 6 is operated to the high-speed/right-left differential-lock position, the control device 7 positions the first solenoid valve 605 at the shutoff position and positions the second solenoid valve 625 at the shutoff position, thereby achieving the high-speed/ right-left differential-lock state.
When the driving-mode changeover switch 6 is operated to the low-speed/right-left differential position, the control device 7 positions the first solenoid valve 605 at the communicating position and positions the second solenoid valve 625 at the communicating position, thereby achieving the low-speed/right-left differential state.
When the driving-mode changeover switch 6 is operated to the low-speed/right-left differential-lock position, the control device 7 positions the first solenoid valve 605 at the communicating position and positions the second solenoid valve 625 at the shutoff position, thereby achieving the low-speed/right-left differential-lock state.

### Second embodiment

Another embodiment of the present invention will now be described with reference to the accompanying drawings.

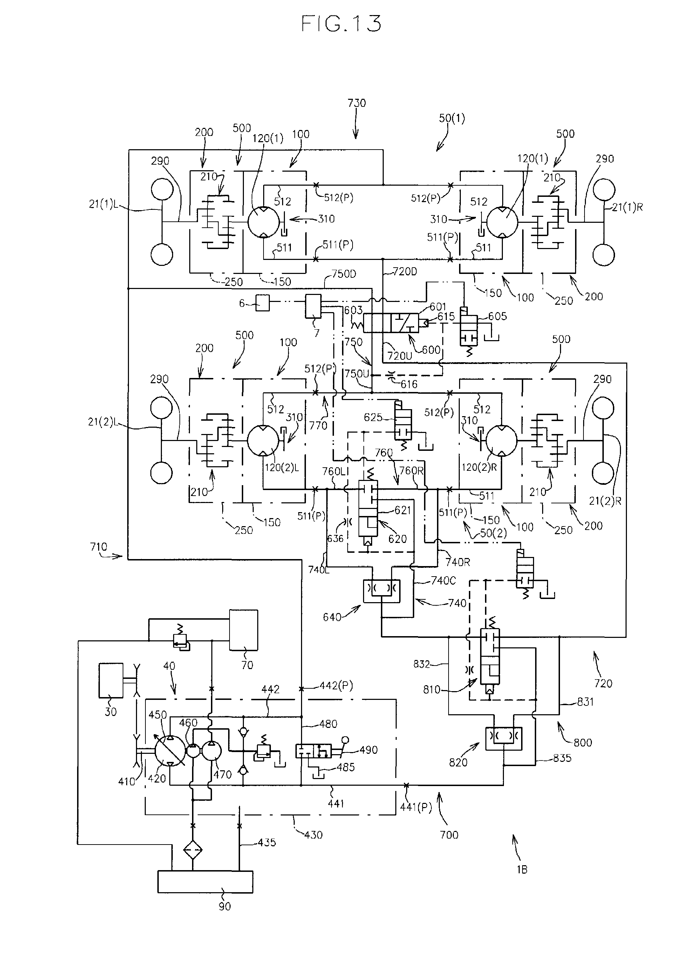

Fig. 13 shows a hydraulic circuit diagram of a hydraulic four-wheel-drive working vehicle 1B to which the present embodiment is applied.
In the figure, the same reference characters denote the same members as in the first embodiment, and thus the description thereof will be omitted.

The working vehicle 1B is configured so as to take, in addition to the high-speed/right-left differential state, the high-speed/right-left differential-lock state, the low-speed/front-rear differential/right-left differential and the low-speed/front-rear differential/right-left differential-lock state, a front-rear differential-lock state in which the first and second hydraulic motor main bodies 120(1), 120(2) are fluidly connected in parallel with respect to the hydraulic pump main body 420, and the first and second hydraulic motor main bodies 120(1), 120(2) are driven independently from each other by hydraulic fluid from the hydraulic pump main body 420.

Specifically, the working vehicle 1B further includes a hydraulic line changeover mechanism 800 interposed between the pump-side forward-movement high-pressure line 700 and both of the first-motor-side forward-movement high-pressure line 720 and the second-motor-side forward-movement high-pressure line 740, in addition to the components of the working vehicle 1A according to the first embodiment, as shown in Fig. 13.

The hydraulic line changeover mechanism 800 includes a third driving-mode switching valve 810 interposed between the first-motor-side forward-movement high-pressure line 720 and the second-motor-side forward-movement high-pressure line 740, a second flow dividing/combining mechanism 820, and a first-motor-side forward-movement supply line 831 and a second-motor-side forward-movement supply line 832 that have first ends fluidly connected to the pump-side forward-movement high-pressure line 700 through the second flow dividing/combining mechanism 820 and second ends fluidly and respectively connected to the first-motor-side and second-motor-side forward-movement high-pressure lines 720, 740, as shown in Fig. 13.

The third driving-mode switching valve 810 is configured so as to selectively take a communicating position of fluidly connecting the first-motor-side and second-motor-side forward-movement high-pressure lines 720, 740 to each other, and a shutoff position of fluidly disconnecting the first-motor-side and second-motor-side forward-movement high-pressure lines 720, 740 to each other.

The hydraulic line changeover mechanism 800 preferably further includes a forward-movement common supply line 835 having a first end fluidly connected to the pump-side forward-movement high-pressure line 700 on an upstream side than the second flow dividing/combining mechanism 820 with respect to the flow direction at the forward movement, as shown in Fig. 13.
The third driving-mode switching valve 810 is configured so as to fluidly connect a second end of the forward-movement common supply line 835 to the first-motor-side forward-movement high-pressure line 720 or the second-motor-side forward-movement high-pressure line 740 in a state of fluidly connecting the first-motor-side and second-motor-side forward-movement high-pressure lines 720, 740 to each other when being positioned at the communicating position, and fluidly disconnect the second end of the forward-movement common supply line 835 to both of the first-motor-side and second-motor-side forward-movement high-pressure lines 720, 740 in a state of fluidly disconnecting the first-motor-side and second-motor-side forward-movement high-pressure lines 720, 740 to each other when being positioned at the shutoff position.

According to the preferable configuration, it is possible to supply the hydraulic fluid from the hydraulic pump main body 420 to the first-motor-side and second-motor-side forward-movement high-pressure lines 720, 740 through the forward-movement common supply line 865 in a state of bypassing the second flow dividing/combining mechanism 820 when the third driving-mode switching valve 810 is positioned at the communicating position so that the first and second hydraulic motor main bodies 120(1), 120(2) are driven in a hydraulically-differential manner to each other.
Therefore, the pressure loss of the hydraulic fluid in the front-rear differential driving state can be effectively reduced.

The third driving-mode switching valve 810 may be of a pilot-pressure operation type in the same manner as the first and second driving-mode switching valves 600, 620, thereby reducing cost of the third driving-mode switching valve 810.
The first to third driving-mode switching valves 600, 620, 810 are position-controlled by the control device 7 (see Fig. 2) based on a manual operation on the driving-mode changeover switch 6 (see Fig. 2), as in the first embodiment.

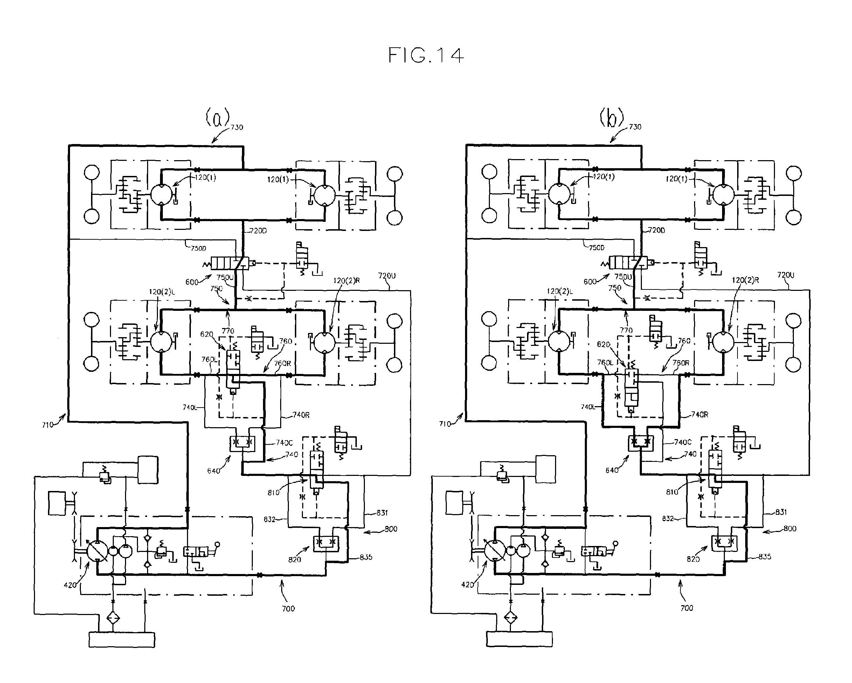

The thus configured working vehicle 1B could select the following driving modes.
Specifically, the working vehicle 1B respectively achieves the high-speed/right-left differential state (see Fig. 14A) and the high-speed/right-left differential-lock state (Fig. 14B) when the second driving-mode switching valve is positioned at the communicating position and the shutoff position in a state
where the first driving-mode switching valve 600 is positioned at the series connecting position so that the working vehicle is in the high-speed/low-torque driving mode.

When the first driving-mode switching valve 600 is positioned at the series connecting position, the third driving-mode switching valve 810 is preferably positioned at the communicating position (see Fig. 14).
According to the preferably configuration, it is possible to supply the hydraulic fluid from the hydraulic pump main body 420 to the second-motor-side forward-movement high-pressure line 740 through the forward-movement common supply line 835 in a state of bypassing the second flow dividing/combining mechanism 820 when the first and second hydraulic motor main bodies 120(1), 120(2) are fluidly connected in series, thereby effectively reducing the pressure loss of the hydraulic fluid in the high-speed/low-torque driving state.

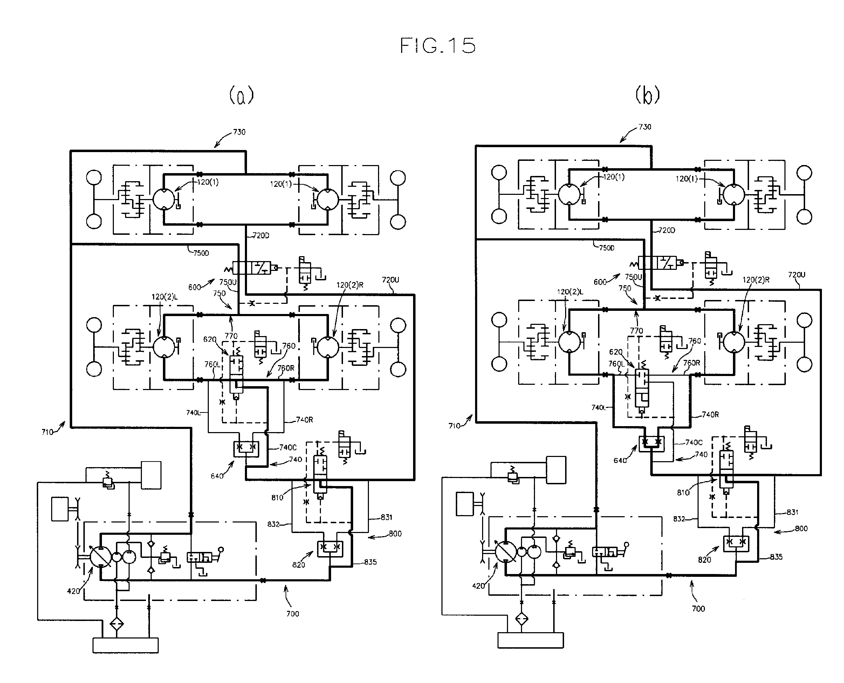

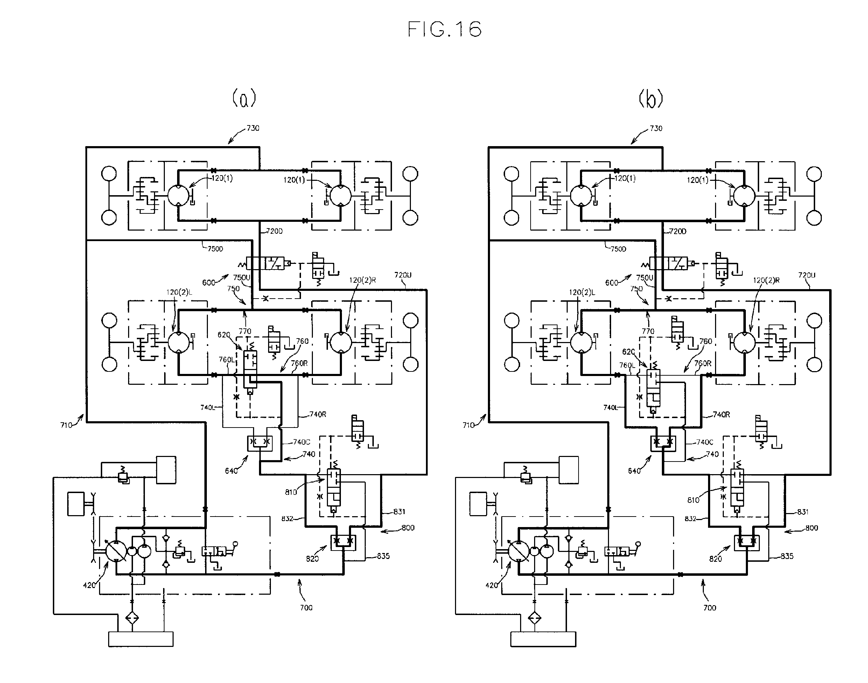

The working vehicle 1B could select a front-rear differential driving state (see Fig. 15) in which the first and second hydraulic motor main bodies 120(1), 120(2) are driven in a hydraulically-differential manner to each other, and a front-rear differential-lock driving state (see Fig. 16) in which the first and second hydraulic motor main bodies 120(1), 120(2) are driven in an independent manner from each other by position-controlling the third driving-mode switching valve 810 in a state where the first driving-mode switching valve 600 is positioned at the parallel connecting position so that the working vehicle is in the low-speed/high-torque driving state.

That is, the working vehicle 1B could select the right-left differential driving state (see Fig. 15A, hereinafter referred to as low-speed/front-rear differential/right-left differential state) in which the pair of second hydraulic motor main bodies 120(2) are driven in a hydraulically-differential manner to each other, and the right-left differential-lock driving state (see Fig. 15B, hereinafter referred to as low-speed/front-rear differential/right-left differential-lock state) in which the pair of second hydraulic motor main bodies 120(2) are driven in a independent manner from each other, by position-controlling the second driving-mode switching valve 620 in a state where the working vehicle is in the low-speed/high-torque driving state and in the front-rear differential driving state.

Further, the working vehicle 1B could also select the right-left differential driving state (see Fig. 16A, hereinafter referred to as low-speed/front-rear differential-lock/right-left differential state) in which the pair of second hydraulic motor main bodies 120(2) are driven in a hydraulically-differential manner to each other, and the right-left differential-lock driving state (see Fig. 16B, hereinafter referred to as low-speed/front-rear differential-lock/right-left differential-lock state) in which the pair of second hydraulic motor main bodies 120(2) are driven in a independent manner from each other, by position-controlling the second driving-mode switching valve 620 in a state where the working vehicle is in the low-speed/high-torque driving state and in the front-rear differential-lock driving state.
The flow channel through which the hydraulic fluid flows is shown with a heavy line in each of Figs. 14 to 16.

### Third embodiment

Still another embodiment of the present invention will now be described with reference to the accompanying drawings.

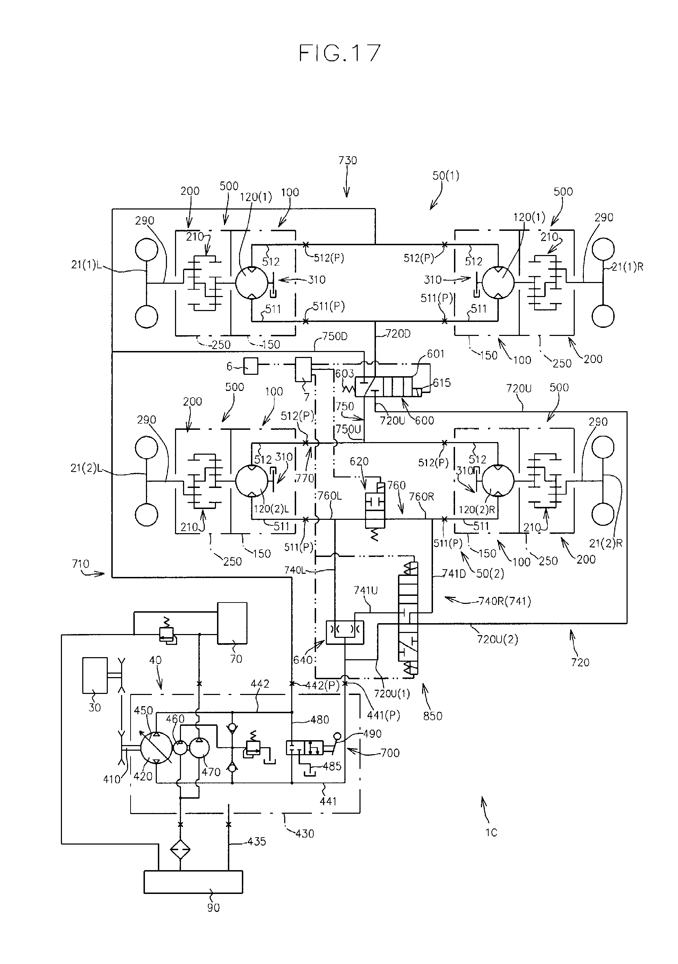

Fig. 17 shows a hydraulic circuit diagram of a hydraulic four-wheel-drive working vehicle 1C to which the present embodiment is applied.
In the figure, the same reference characters denote the same members as in the first and second embodiments, and thus the description thereof will be omitted.

The working vehicle 1C is configured so as to take, in addition to the high-speed/right-left differential state, the high-speed/right-left differential-lock state, the low-speed/front-rear differential/right-left differential and the low-speed/front-rear differential/right-left differential-lock state, the front-rear differential-lock state in which the first and second hydraulic motor main bodies 120(1), 120(2) are fluidly connected in parallel with respect to the hydraulic pump main body 420, and the first and second hydraulic motor main bodies 120(1), 120(2) are driven in a independent manner to each other by hydraulic fluid from the hydraulic pump main body 420 while including only the first flow dividing/combining mechanism 640 as a flow dividing/combining mechanism.

Specifically, the working vehicle 1C according to the present embodiment omits the second hydraulic motor main body common line 740C and includes a third driving-mode switching valve 850 with the working vehicle 1A according to the first embodiment as the reference.
Since the second hydraulic motor main body common line 740C is omitted, the second driving-mode switching valve 620 in the present embodiment is configured to fluidly connect the forward-movement high-pressure left-side connecting line 760L and the forward-movement high-pressure right-side connecting line 760R to each other at the communicating position and fluidly disconnecting the forward-movement high-pressure left-side connecting line 760L and the forward-movement high-pressure right-side connecting line 760R to each other at the shutoff position, as shown in Fig. 17.

The third driving-mode switching valve 850 is interposed in both of the forward-movement upstream side 720U of the first-motor-side forward-movement high-pressure line 720 and one line 741 (the second right-side hydraulic motor main body line 740R in the present embodiment) of the pair of second left-side and right-side hydraulic motor main body lines 740L, 740R so as to divide the forward-movement upstream side 720U of the first-motor-side forward-movement high-pressure line 720 into first and second upstream portions 720U(1), 720U(2) that are respectively positioned on upstream and downstream sides with the forward movement as the reference, and also divide the one line 741 into upstream and downstream sides 741U, 741D with the forward movement as the reference, as shown in Fig. 17.

The third driving-mode switching valve 850 is configured so as to selectively take a right-left flow dividing/combining position of fluidly connecting the forward-movement upstream side 741U to the forward-movement downstream side 741D of the one line 741 and also fluidly connecting the first upstream portion 720U(1) to the second upstream portions 720U(2) of the first-motor-side forward-movement high-pressure line 720, a communicating position of fluidly connecting the first upstream portion 720U(1) of the first-motor-side forward-movement high-pressure line 720 to both of the forward-movement downstream side 741D of the one line 741 and the second upstream portion 720U(2) of the first-motor-side forward-movement high-pressure line 720, and a front-rear flow dividing/combining position of fluidly connecting the forward-movement upstream side 741U of the one line 741 to the second upstream portion 720U(2) of the first-motor-side forward-movement high-pressure line 720, as shown in Fig. 17.

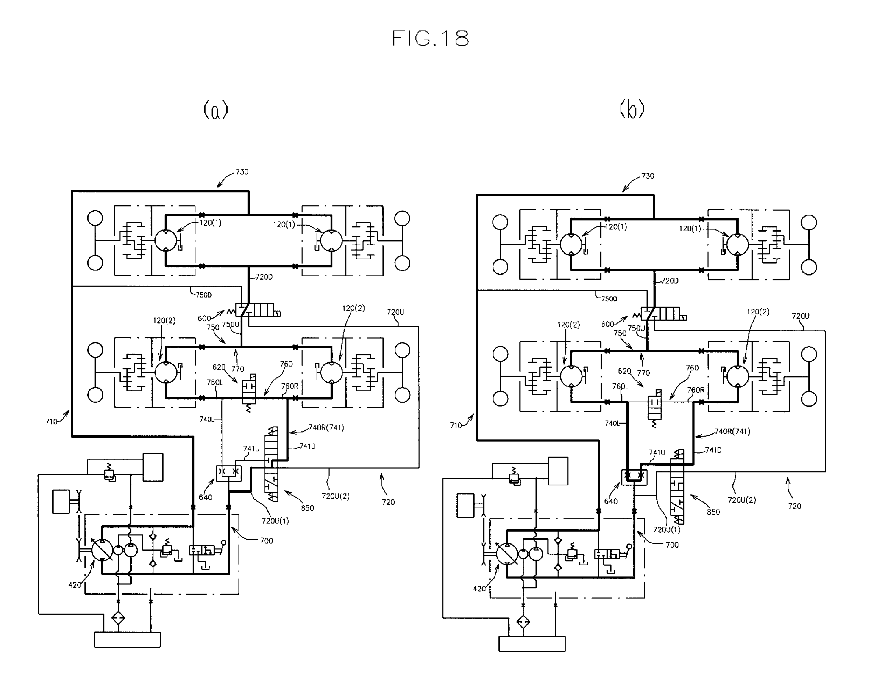

The thus configured working vehicle 1C could select the following driving modes.
Specifically, the working vehicle 1C could achieve the high-speed/right-left differential state (see Fig. 18A) by positioning the second driving-mode switching valve 620 at the communicating position in a state where the first driving-mode switching valve 600 is positioned at the series connecting position so that the working vehicle is in the high-speed/low-torque driving state.
In the high-speed/right-left differential state, the third driving-mode switching valve 850 is preferably positioned at the communicating position, as shown in Fig. 18A.
According to the configuration, it is possible to supply the hydraulic fluid from the hydraulic pump main body 420 to the second hydraulic motor main body 120(2) with bypassing the first flow dividing/combining mechanism 640, thereby effectively preventing the pressure loss of the hydraulic fluid.

The working vehicle 1C could also achieve the high-speed/right-left differential-lock state (see Fig. 18B) by positioning the second driving-mode switching valve 620 at the shutoff position and positioning the third driving-mode switching valve 850 at the right-left flow dividing/combining position in a state where the first driving-mode switching valve 600 is positioned at the series connecting position so that the working vehicle is in the high-speed/low-torque driving state.

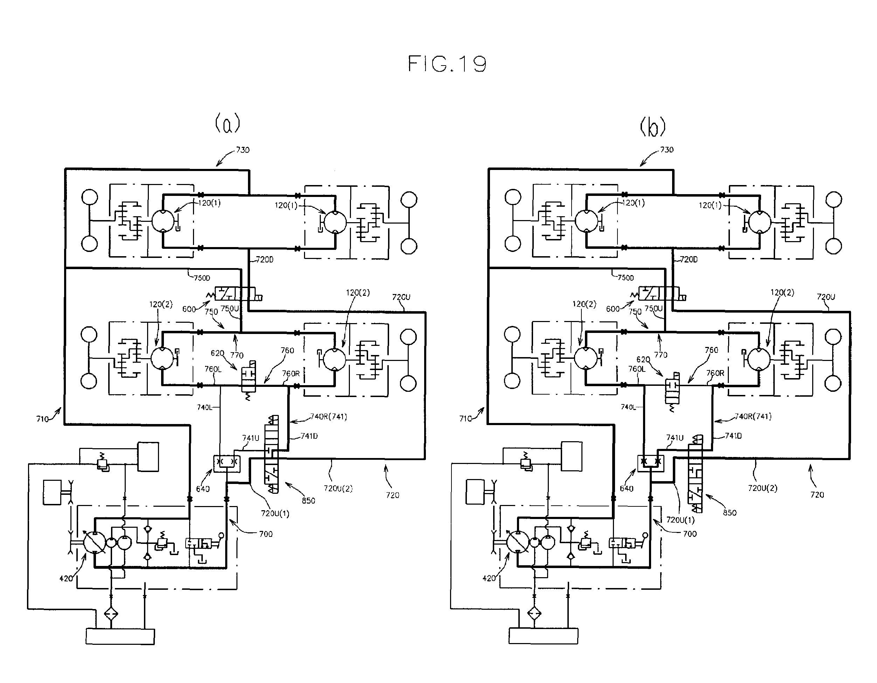

Further, the working vehicle 1C cloud achieve the low-speed/front-rear differential/right-left differential state (see Fig. 19A) by positioning the second driving-mode switching valve 620 at the communicating position and positioning the third driving-mode switching valve 850 at the right-left flow dividing/combining position or the communication position in a state where the first driving-mode switching valve 600 is positioned at the parallel connecting position so that the working vehicle is in the low-speed/high-torque driving state.
In the low-speed/front-rear differential/right-left differential state, the third driving-mode switching valve 850 is preferably positioned at the communicating position, as shown in Fig. 19A.
According to the configuration, it is possible to supply the hydraulic fluid from the hydraulic pump main body 420 to the first and second hydraulic motor main bodies 120(1), 120(2) with bypassing the first flow dividing/combining mechanism 640, thereby effectively preventing the pressure loss of the hydraulic fluid.

Further, the working vehicle 1C cloud achieve the low-speed/front-rear differential/right-left differential-lock state (see Fig. 19B) by positioning the second driving-mode switching valve 620 at the shutoff position and positioning the third driving-mode switching valve 850 at the right-left flow dividing/combining position in a state where the first driving-mode switching valve 600 is positioned at the parallel connecting position so that the working vehicle is in the low-speed/high-torque driving state.

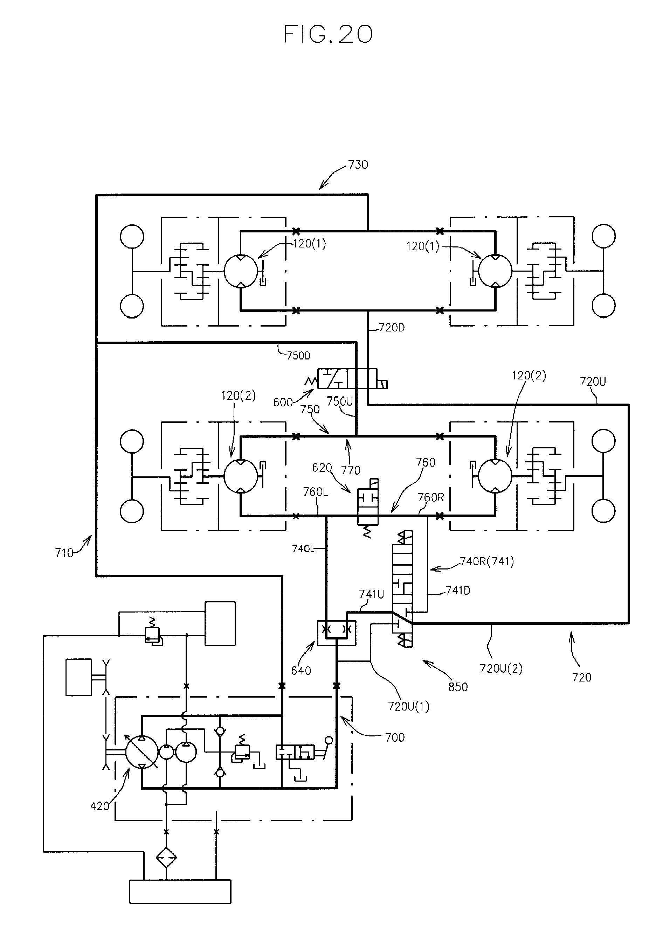

Furthermore, the working vehicle 1C cloud achieve the low-speed/front-rear differential-lock/right-left differential state (see Fig. 20) by positioning the second driving-mode switching valve 620 at the communicating position and positioning the third driving-mode switching valve 850 at the front-rear flow dividing/combining position in a state where the first driving-mode switching valve 600 is positioned at the parallel connecting position so that the working vehicle is in the low-speed/high-torque driving state.
In each of Figs. 17-20, the flow channel through which the hydraulic fluid flows is shown with a heavy line.

However the first to third driving-mode switching valves 600, 620, 850 are shown as an electromagnetic operation type in Figs. 17 to 20, the first to third driving-mode switching valves 600, 620, 850 may be of a pilot-pressure operation type, thereby achieving cost reduction of the first to third driving-mode switching valves 600, 620, 850.
The first to third driving-mode switching valves 600, 620, 850 are position-controlled by the control device 7 based on a manual operation on the driving-mode changeover switch 6, as in the first and second embodiments.

### Fourth embodiment

Still another embodiment of the present invention will now be described with reference to the accompanying drawings.

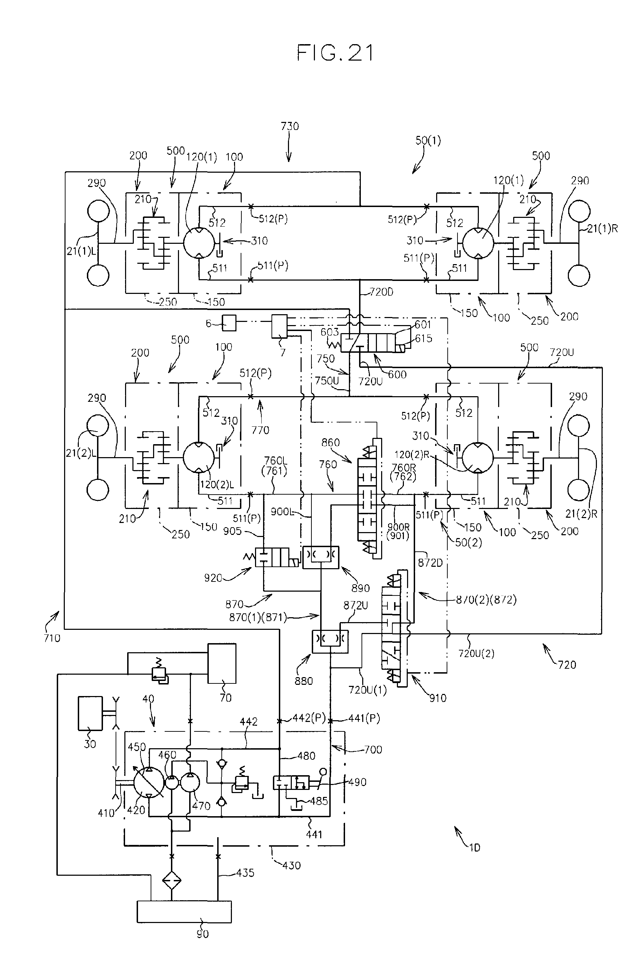

Fig. 21 shows a hydraulic circuit diagram of a hydraulic four-wheel-drive working vehicle 1D to which the present embodiment is applied.
In the figure, the same reference characters denote the same members as in the first to third embodiments, and thus the description thereof will be omitted.

The working vehicle 1D according to the present embodiment includes a second driving-mode switching valve 860 instead of the second driving-mode switching valve 620, and a second-motor-side forward-movement high-pressure line 870 instead of the second-motor-side forward-movement high-pressure line 740, with the working vehicle 1A according to the first embodiment as the reference.

The second driving-mode switching valve 860 is interposed in the second-motor-side forward-movement high-pressure connecting line 760 so as to divide the second-motor-side forward-movement high-pressure connecting line 760 into the forward-movement high-pressure left-side connecting line 760L fluidly connected to the forward-movement suction port of the second left-side hydraulic motor main body 120(2)L and the forward-movement high-pressure right-side connecting line 760R fluidly connected to the forward-movement suction port of the second right-side hydraulic motor main body 120(2)R.

The second-motor-side forward-movement high-pressure line 870 includes forward-movement upstream-side first and second lines 870(1), 870(2) that have first ends fluidly connected to the pump-side forward-movement high-pressure line 700 through a first flow dividing/combining mechanism 880, a pair of forward-movement upstream-side left-divided and right-divided lines 900L, 900R that have first ends fluidly connected to one line 871 (the forward-movement upstream-side first line 870(1) in the present embodiment) of the forward-movement upstream-side first and second lines 870(1), 870(2) through a second flow dividing/combining mechanism 890 and second ends fluidly and respectively connected to the forward-movement high-pressure left-side and right-side connecting lines 760L, 760R, and a forward-movement upstream-side third line 905 that has a first end fluidly connected to the one line 871 on an upstream side than the second flow dividing/combining mechanism 890 with the forward movement as the reference and a second end fluidly connected to one line 761 (the forward-movement high-pressure left-side connecting line 760L in the present embodiment) of the forward-movement high-pressure left-side and right-side connecting lines 760L, 760R, as shown in Fig. 21.

The working vehicle 1D according to the present embodiment further includes a third driving-mode switching valve 910 interposed in both of the forward-movement upstream side 720U of the first-motor-side forward-movement high-pressure line 720 and the other one line 872 (the forward-movement upstream-side second line 870(2) in the present embodiment) of the forward-movement upstream-side first and second lines 870(1), 870(2) so as to divide the forward-movement upstream side 720U into first and second upstream portions 720U(1), 720U(2) that are respectively positioned on upstream and downstream sides with the forward movement as the reference, and also dived the other one line 872 into upstream and downstream sides 872U, 872D with the forward movement as the reference, and a fourth driving-mode switching valve 920 interposed in the forward-movement upstream-side third line 905, as shown in Fig. 21.

The second driving-mode switching valve 860 is interposed in the second-motor-side forward-movement high-pressure connecting line 760, and also interposed in one divided line 901 (the forward-movement upstream-side right-divided line 900R in the present embodiment) of the forward-movement upstream-side left-divided and right-divided lines 900L, 900R that is fluidly connected to the other one line 762 (the forward-movement high-pressure right-side connecting line 760R in the present embodiment) of the forward-movement high-pressure left-side and right-side connecting lines 760L, 760R, as shown in Fig. 21.
The second driving-mode switching valve 860 is configured so as to selectively take a first position of fluidly connecting the forward-movement high-pressure left-side and right-side connecting lines 760L, 760R to each other and shutting off the one divided line 901, a second position of fluidly disconnecting the forward-movement high-pressure left-side and right-side connecting lines 760L, 760R to each other and shutting off the one divided line 901, and a third position of fluidly disconnecting the forward-movement high-pressure left-side and right-side connecting lines 760L, 760R to each other and communicating the one divided line 901, as shown in Fig. 21.

The third driving-mode switching valve 910 is configured so as to take a first position of fluidly connecting the forward-movement upstream and downstream sides 872U, 872D of the other one line 872 to each other and fluidly disconnecting the first and second upstream portions 720U(1), 720U(2) of the first-motor-side forward-movement high-pressure line 720 to each other, a second position of fluidly connecting the first upstream portion 720U(1) of the first-motor-side forward-movement high-pressure line 720 to both of the forward-movement downstream side 872D of the other one line 872 and the second upstream portion 720U(2) of the first-motor-side forward-movement high-pressure line 720, and a third position of fluidly connecting the forward-movement upstream side 872U of the other one line 872 to the second upstream portion 720U(2) of the first-motor-side forward-movement high-pressure line 720, as shown in Fig. 21.

As shown in Fig. 21, the fourth driving-mode switching valve 920 is configured so as to selectively take a communicating position and a shutoff position of communicating and shutting off the forward-movement upstream-side third line 905, respectively.

However the first to fourth driving-mode switching valves 600, 860, 910, 920 are shown as an electromagnetic operation type in Fig. 21, the first to fourth driving-mode switching valves 600, 860, 910, 920 may be of a pilot-pressure operation type, thereby achieving cost reduction of the first to fourth driving-mode switching valves 600, 860, 910, 920.
The first to fourth driving-mode switching valves 600, 860, 910, 920 are position-controlled by the control device 7 based on a manual operation on the driving-mode changeover switch 6, as in the first to third embodiments.

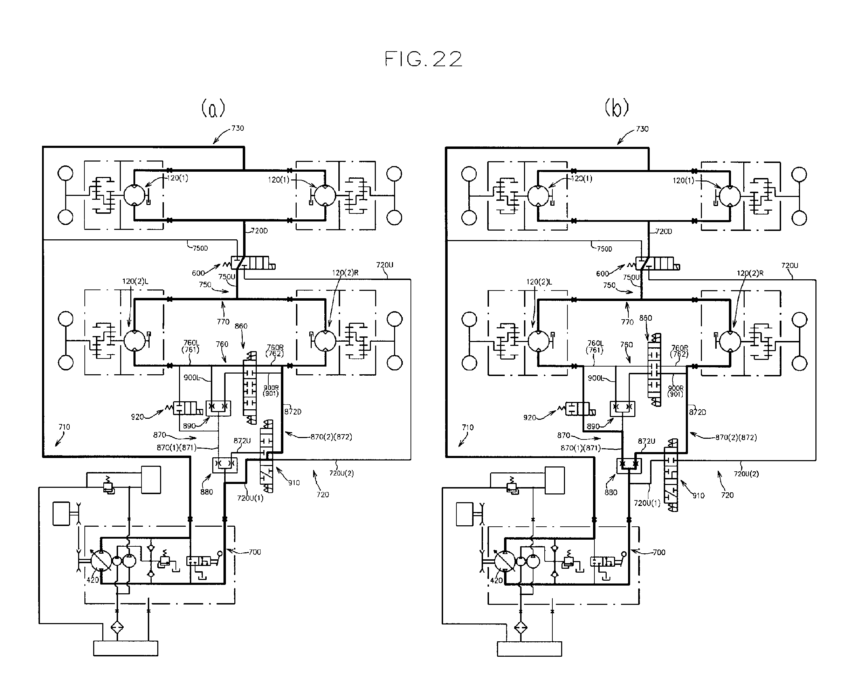

The thus configured working vehicle 1D could select the following driving modes.
Specifically, the working vehicle 1D could achieve the high-speed/right-left differential state (see Fig. 22A) by positioning the second driving-mode switching valve 860 at the first position and positioning the third driving-mode switching valve 910 at the second position in a state where the first driving-mode switching valve 600 is positioned at the series connecting position so that the working vehicle is in the high-speed/low-torque driving state.
In the high-speed/right-left differential state, the hydraulic fluid from the hydraulic pump main body 420 is supplied to the first and second hydraulic motor main bodies 120(1), 120(2) with bypassing the first and second flow dividing/combining mechanism 880, 890 (see Fig. 22A), thereby effectively preventing the pressure loss of the hydraulic fluid.

The working vehicle 1D could also achieve the high-speed/right-left differential-lock state (see Fig. 22B) by positioning the second driving-mode switching valve 860 at the second position, positioning the third driving-mode switching valve 910 at the first position and positioning the fourth driving-mode switching valve 920 at the communicating position in a state where the first driving-mode switching valve 600 is positioned at the series connecting position so that the working vehicle is in the high-speed/low-torque driving state.
In the high-speed/right-left differential-lock state, the hydraulic fluid from the hydraulic pump main body 420 flows with bypassing the second flow dividing/combining mechanism 890, although the hydraulic fluid passes through the first flow dividing/combining mechanism 880, as shown in Fig. 22B. Therefore, the pressure loss of the hydraulic fluid could be effectively reduced.

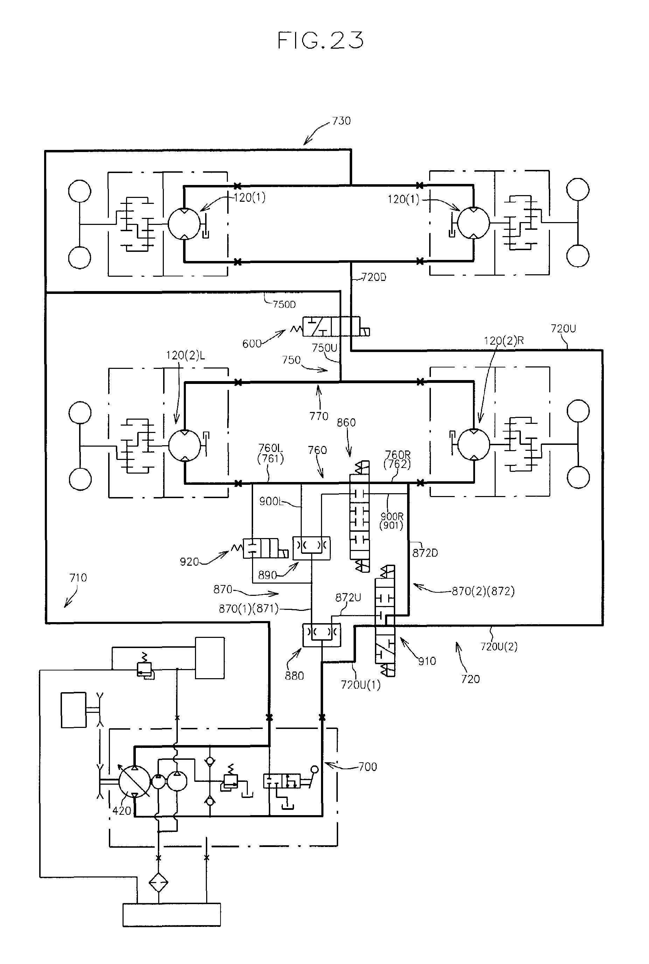

Further, the working vehicle 1D cloud achieve the low-speed/front-rear differential/right-left differential state (see Fig. 23) by positioning the second driving-mode switching valve 860 at the first position and positioning the third driving-mode switching valve 910 at the second position in a state where the first driving-mode switching valve 600 is positioned at the parallel connecting position so that the working vehicle is in the low-speed/high-torque driving state.
In the low-speed/front-rear differential/right-left differential state, the hydraulic fluid from the hydraulic pump main body 420 is supplied to the first and second hydraulic motor main bodies 120(1), 120(2) with bypassing the first and second flow dividing/combining mechanism 880, 890 (see Fig. 23), thereby effectively preventing the pressure loss of the hydraulic fluid.

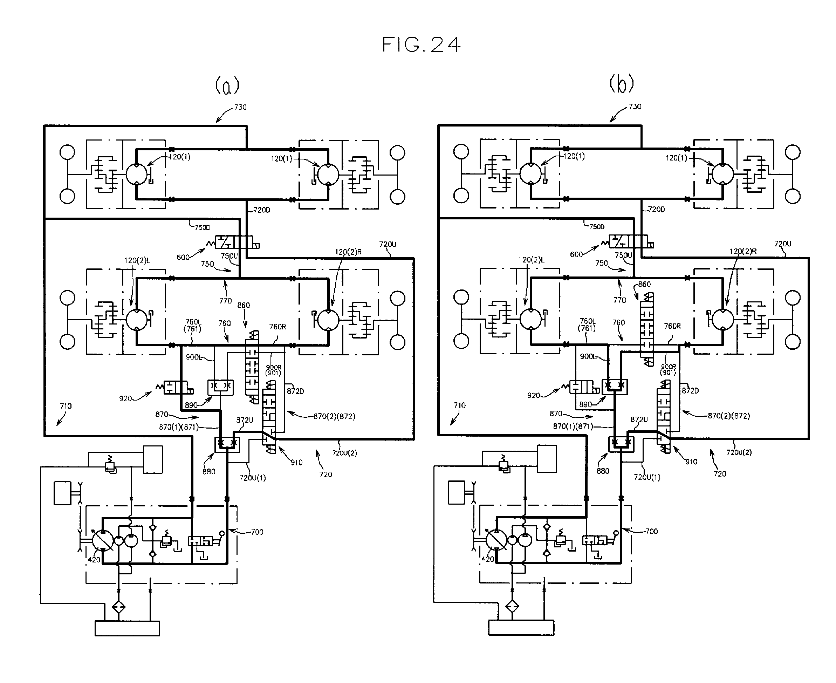

Furthermore, the working vehicle 1D cloud achieve the low-speed/front-rear differential-lock/right-left differential state (see Fig. 24A) by positioning the second driving-mode switching valve 860 at the first position, positioning the third driving-mode switching valve 910 at the third position and positioning the fourth driving-mode switching valve 920 at the communicating position in a state
where the first driving-mode switching valve 600 is positioned at the parallel connecting position so that the working vehicle is in the low-speed/high-torque driving state.
In the low-speed/front-rear differential-lock/right-left differential state, the hydraulic fluid from the hydraulic pump main body 420 flows with bypassing the second flow dividing/combining mechanism 890, although the hydraulic fluid passes through the first flow dividing/combining mechanism 880, as shown in Fig. 24A. Therefore, the pressure loss of the hydraulic fluid could be effectively reduced.

Furthermore, the working vehicle 1D cloud achieve the low-speed/front-rear differential-lock/right-left differential-lock state (see Fig. 24B) by positioning the second driving-mode switching valve 860 at the third position, positioning the third driving-mode switching valve 910 at the third position and positioning the fourth driving-mode switching valve 920 at the shutoff position in a state where the first driving-mode switching valve 600 is positioned at the parallel connecting position so that the working vehicle is in the low-speed/high-torque driving state.
In each of Figs. 22-24, the flow channel through which the hydraulic fluid flows is shown with a heavy line.

### Fifth embodiment

Still another embodiment of the present invention will now be described with reference to the accompanying drawings.

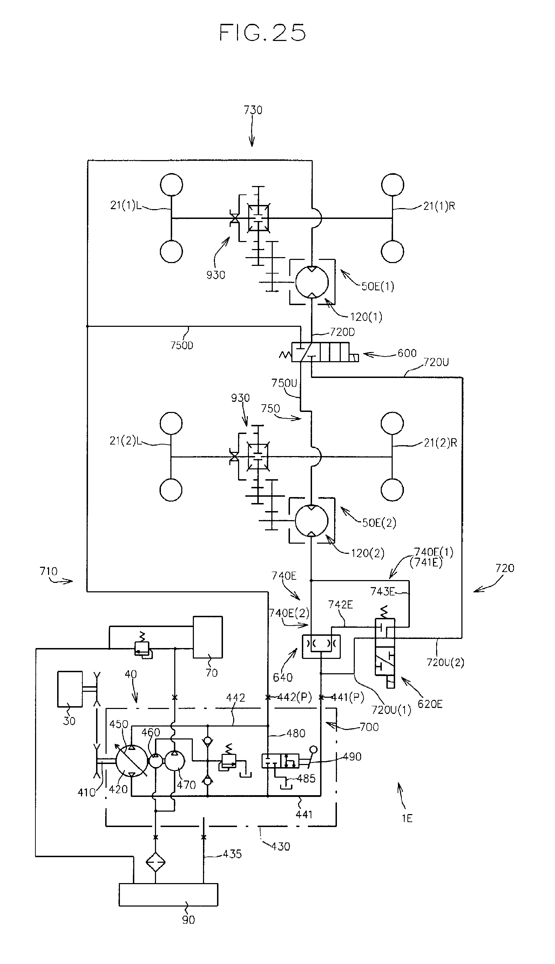

Fig. 25 shows a hydraulic circuit diagram of a hydraulic four-wheel-drive working vehicle 1E to which the present embodiment is applied.
In the figure, the same reference characters denote the same members as in the first to fourth embodiments, and thus the description thereof will be omitted.

Each of the working vehicles 1A to 1D according to the first and fourth embodiments has the second axle-driving device 50(2) including the pair of second hydraulic motor main bodies 120(2) fluidly connected to each other in parallel, and is configured so as to drive the pair of second driving wheels 21(2) in a differential manner by use of hydraulic fluid.

On the other hand, the working vehicle 1E according to the present embodiment is configured so as to drive the pair of second driving wheels in a differential manner, using a mechanical differential mechanism 930.

Specifically, the working vehicle 1E includes a second axle-driving device 50E(2) instead of the second axle-driving device 50(2), as shown in Fig. 25.
The working vehicle 1E is also configured so as to drive the pair of first driving wheels 21(1), using the mechanical differential mechanism 930.
That is, the working vehicle 1E includes a first axle-driving device 50E(1) instead of the first axle-driving device 50(1).

The first and second axle-driving devices 50E(1), 50E(2) have the substantially same configurations to each other. Therefore, following explanation regarding the second axle-driving device 50E(2) could be applied to the first axle-driving device 50E(1).

The second axle-driving device 50E(2) includes the single second hydraulic motor main body 120(2) and the mechanical differential mechanism 930 for differentially transmitting the rotational power from the single second hydraulic motor main body 120(2) to the pair of second driving wheels 21(2), as shown in Fig. 25.

The working vehicle 1E includes a second-motor-side forward-movement high-pressure line 740E and a second driving-mode switching valve 620E instead of the second-motor-side forward-movement high-pressure line 740 and the second driving-mode switching valve 620 with the working vehicle 1A according to the first embodiment as the reference.
That is, the working vehicle 1E includes the pump-side forward-movement high-pressure line 700, the pump-side forward-movement low-pressure line 710, the first-motor-side forward-movement high-pressure line 720, the first-motor-side forward-movement low-pressure line 730, the second-motor-side forward-movement high-pressure line 740E which is fluidly connected to the pump-side forward-movement high-pressure line 700 and which supplies hydraulic fluid toward the second hydraulic motor main body 120(2) at the forward movement of the vehicle, the second-motor-side forward-movement low-pressure line 750, the first driving-mode switching valve 600 and the second driving-mode switching valve 620E, as shown in Fig. 25.

The second-motor-side forward-movement high-pressure line 740E includes a pair of second-motor-side first and second lines 740E(1), 740E(2) that have first ends fluidly connected to the pump-side forward-movement high-pressure line 700 by way of the first flow dividing/combining mechanism 640 and second ends fluidly connected to the forward-movement suction port of the single second hydraulic motor main body 120(2).

The second driving-mode switching valve 620E is interposed in both of the forward-movement upstream side 720U of the first-motor-side forward-movement high-pressure line 720 and one line 741E of the pair of second-motor-side first and second lines 740E(1), 740E(2) so as to divide the forward-movement upstream side 720U of the first-motor-side forward-movement high-pressure line 720 into the first and second upstream portions 720U(1), 720U(2) and also divide the one line 741E into upstream and downstream sides 742E, 743E with the forward movement as the reference.
The second driving-mode switching valve 620E is configures so as to selectively take a first position of fluidly connecting the first and second upstream portions 720U(1), 720U(2) of the first-motor-side forward-movement high-pressure line 720 to each other, and a second position of fluidly connecting the forward-movement upstream side 742E of the one line 741E to the second upstream portion 720U(2) of the first-motor-side forward-movement high-pressure line 720, as shown in Fig. 25.

However the first and second driving-mode switching valves 600, 620E are shown as an electromagnetic operation type in Fig. 25, the first and second driving-mode switching valves 600, 620E may be of a pilot-pressure operation type, thereby achieving cost reduction of these valves.
The first and second driving-mode switching valves 600, 620E are position-controlled by the control device 7 based on a manual operation on the driving-mode changeover switch 6, as in the first to fourth embodiments.

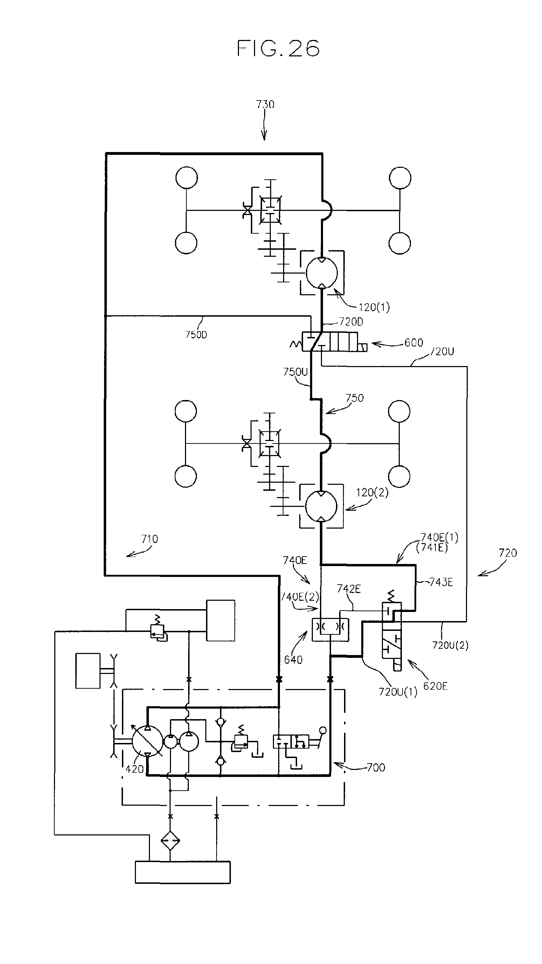

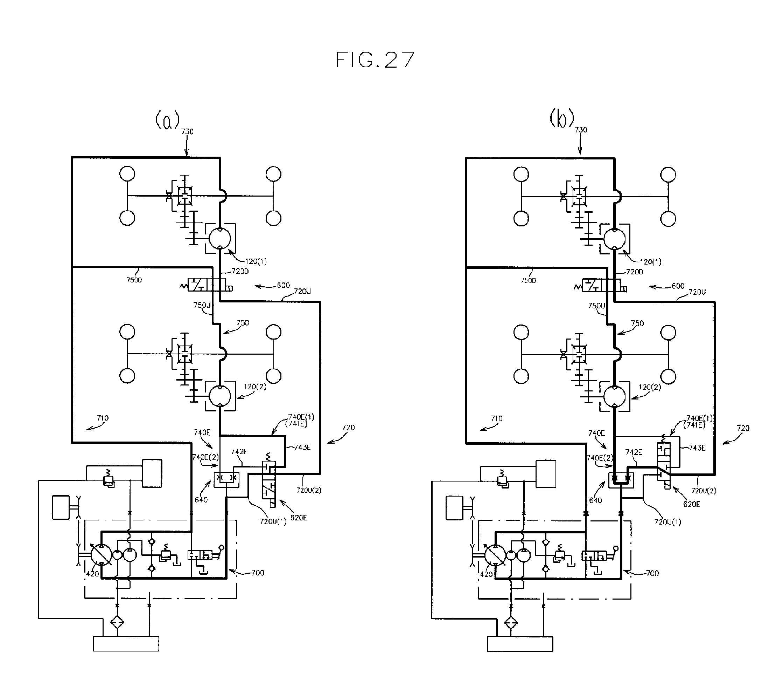

The thus configured working vehicle 1E could select the following driving modes.
Specifically, the working vehicle 1E could respectively achieve the high-speed/low-torque driving state (see Fig. 26) and the low-speed/high-torque driving state (Fig. 27) by positioning the first driving-mode switching valve 600 at the series connecting position and the parallel connecting position.

In the present embodiment, the second driving-mode switching valve 620E is configured so as to fluidly connect the first upstream portion 720U(1) of the first-motor-side forward-movement high-pressure line 720 to both of the second upstream portion 720U(2) and the forward-movement downstream side 743E of the one line 741E when being positioned at the first position, as shown in Figs. 25 to 27.
According to the configuration, it is possible to supply the hydraulic fluid from the hydraulic pump main body 420 to the first and second hydraulic motor main bodies 120(1), 120(2) with bypassing the first flow dividing/combining mechanism 640 in the high-speed/low-torque driving state (see Fig. 26), thereby effectively preventing the pressure loss of the hydraulic fluid.
The changeover of the differential driving state and the differential-lock driving state between the pair of first driving wheels 21(1) and/or between the pair of second driving wheels 21(2) is performed by a differential-lock mechanism (not shown) provided in the differential mechanism 930.

Further, the working vehicle 1E could achieve the low-speed/front-rear differential state (see Fig. 27A) by positioning the second driving-mode switching valve 620E at the first position in a state where the first driving-mode switching valve 600 is positioned at the parallel connecting position so that the working vehicle is in the low-speed/high-torque driving state.
As described above, in the present embodiment, the second driving-mode switching valve 620E fluidly connects the first upstream portion 720U(1) of the first-motor-side forward-movement high-pressure line 720 to both of the second upstream portion 720U(2) and the forward-movement downstream side 743E of the one line 741E when being positioned on the first position.
Therefore, it is possible to supply the hydraulic fluid from the hydraulic pump main body 420 to the first and second hydraulic motor main bodies 120(1), 120(2) with bypassing the first flow dividing/combining mechanism 640 in the low-speed/front-rear differential state (see Fig. 27A), thereby effectively preventing the pressure loss of the hydraulic fluid

Furthermore, the working vehicle 1E could achieve the low-speed/front-rear differential-lock state (see Fig. 27B) by positioning the second driving-mode switching valve 620E at the second position in a state where the first driving-mode switching valve 600 is positioned at the parallel connecting position so that the working vehicle is in the low-speed/high-torque driving state.

### Sixth embodiment

Still another embodiment of the present invention will now be described with reference to the accompanying drawings.

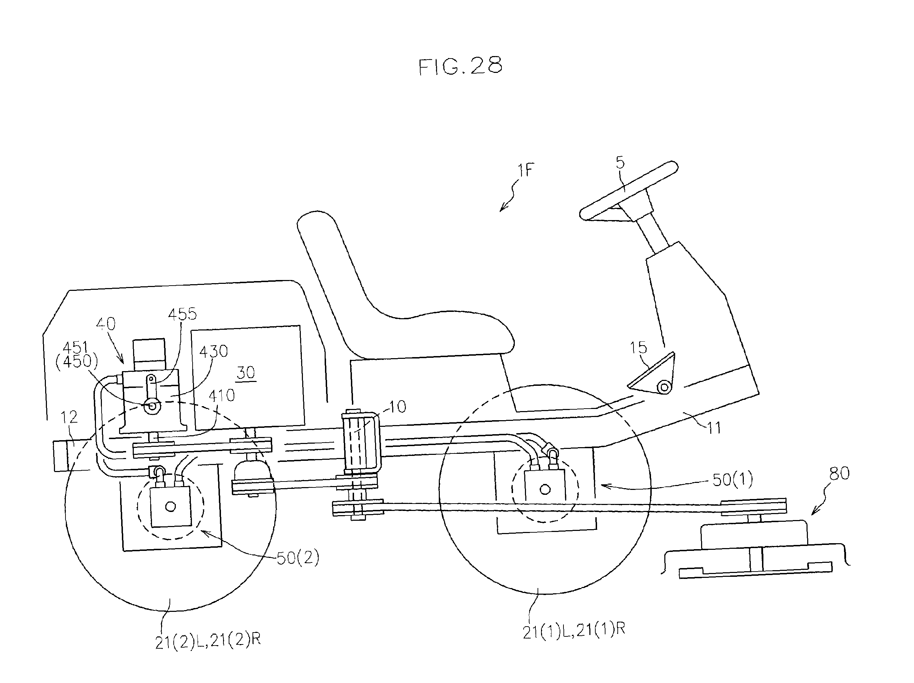

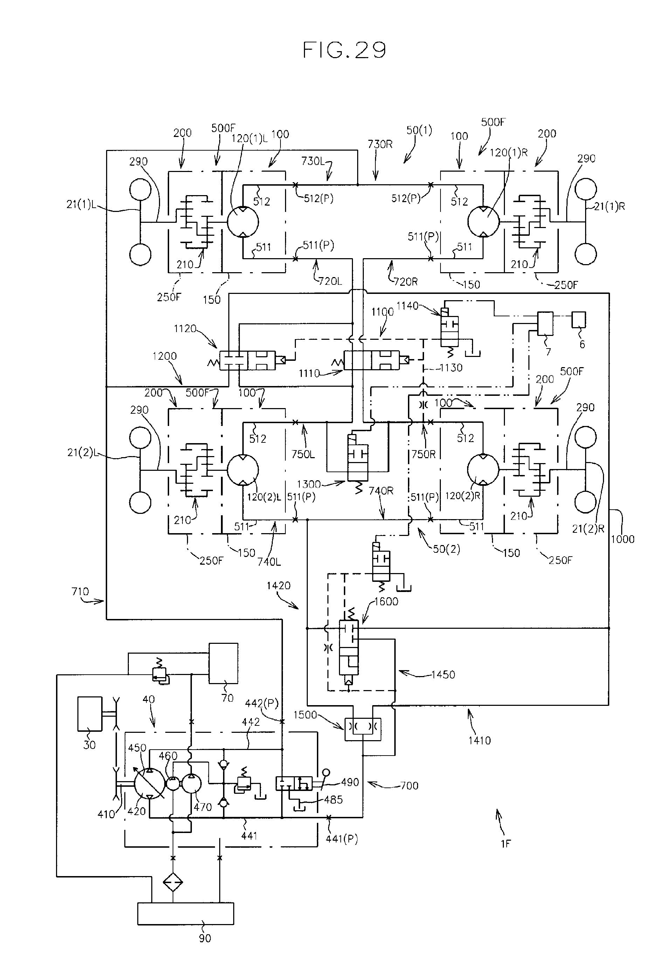

Figs. 28 and 29 respectively show a side view and a hydraulic circuit diagram of a hydraulic four-wheel-drive working vehicle 1F to which the present embodiment is applied.
In the figure, the same reference characters denote the same members as in the first to fifth embodiments, and thus the description thereof will be omitted.

As similar to each of the above embodiments, the working vehicle 1F is a riding lawn mower of an articulate type, as shown in Fig. 28.

Specifically, as shown in Figs. 28 and 29, the working vehicle 1F includes the first frame 11, the second frame 12, the pair of left and right first driving wheels 21(1)L, 21(1)R, the pair of left and right second driving wheels 21(2)L, 21(2)R, the driving power source 30, the hydraulic pump unit 40, the first axle-driving device 50(1) and the second axle-driving device 50(2).

In the present embodiment, the first axle-driving device 50(1) includes the pair of left and right first hydraulic motor main bodies 120(1)L, 120(1)R that respectively drives the pair of left and right first driving wheels 21(1)L, 21(1)R, and the second axle-driving device 50(2) includes the pair of left and right second hydraulic motor main bodies 120(2)L, 120(2)R that respectively drives the pair of left and right second driving wheels 21(2)L, 21(2)R, as shown in Fig. 29.

The hydraulic pump main body 420 is, as shown in Fig. 29, fluidly connected to the pair of left and right first hydraulic motor main bodies 120(1) in the first axle-driving device 50(1) and the pair of left and right second hydraulic motor main bodies 120(2) in the second axle-driving device 50(2) so as to form an HST in cooperation with the hydraulic motor main bodies 120(1) and 120(2).
A hydraulic circuit for fluidly connecting the hydraulic pump main body 420 to the first and second hydraulic motor main bodies 120(1), 120(2) will be later described.

As shown in Fig. 29, the pump case 430 is provided with a pump-side first hydraulic fluid passage 441 and a pump-side second hydraulic fluid passage 442.

In the present embodiment, the hydraulic pump main body 420 is of a variable displacement type in which the suction/discharge amount can be varied as in the each of the above embodiments.
That is, the hydraulic pump unit 40 includes the output adjusting member 450 (see Fig. 29).
As in each of the above embodiments, the hydraulic pump unit 40 is of an axial piston type. Therefore, the output adjusting member 450 includes the movable swash plate and the control shaft 451 (see Fig. 28).

Similarly to each of the above embodiments, the pump case 430 is further provided with the bypass fluid passage 480, the drain fluid passage 485 and the rotary valve 490, as shown in Fig. 29.

Furthermore, the hydraulic pump unit 40 includes, in addition to the above components, the first auxiliary pump main body 460 and the second auxiliary pump main body 470 in a similar manner as in each of the above embodiments.

The first axle-driving device 50(1) and the second axle-driving device 50(2) will now be described.
The first axle-driving device 50(1) and the second axle-driving device 50(2) have the same configuration to each other.
Therefore, the following description is made on the second axle-driving device 50(2), and the same reference numerals or the same reference numerals with replacing the parenthetical reference (2) with (1) are denoted for the same components as those of the first axle-driving device 50(1) to omit the description thereof.

The second axle-driving device 50(2) includes a pair of wheel motor devices 500F for respectively driving the left and right second driving wheels 21(2)L, 21(2)R.
The pair of wheel motor devices 500F are mounted to the corresponding second frame 12 with one wheel motor device being reversed by 180 degrees with respect to the other wheel motor device.
In Fig. 29, a reference numeral 120(2)L is denoted for the second hydraulic motor main body in the wheel motor device 500F for driving the left-side second driving wheel 21(2)L, and a reference numeral 120(2)R is denoted for the second hydraulic motor main body in the wheel motor device 500F for driving the second right-side driving wheel 21(2)R.

The detailed configuration of the wheel motor device 500F will now be described.

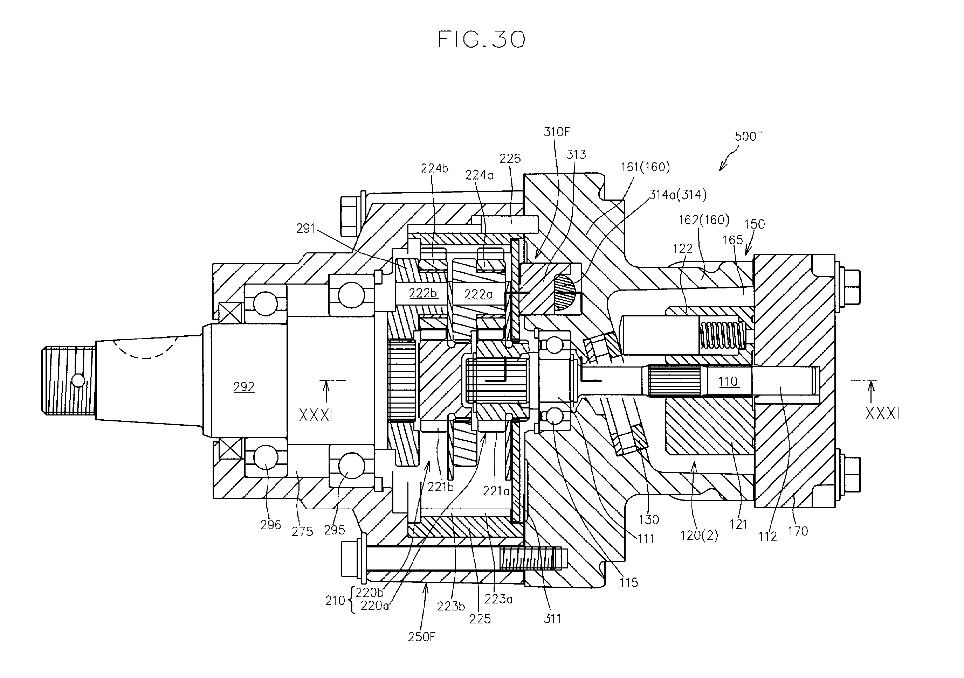

Fig. 30 shows a vertical cross-sectional view of the wheel motor device 500F.
As shown in Fig. 3, the wheel motor device 500F includes the hydraulic motor unit 100 including the second hydraulic motor main body 120(2) fluidly connected to the hydraulic pump main body 420, the reduction gear unit 200 including the reduction gear mechanism 210 for reducing a speed of a rotational power output by the second hydraulic motor main body 120(2), and the output member 290 for outputting the rotational power whose speed has been reduced by the reduction gear mechanism 210 towards the corresponding driving wheel 21(2).

As shown in Figs. 29 and 30, the hydraulic motor unit 100 includes the second hydraulic motor main body 120(2), the motor case 150 and the motor shaft 110 in a similar manner as in each of the above embodiments.

Similarly to each of the above embodiments, the second hydraulic motor main body 120(2) is of a fixed displacement type in which the suction/discharge amount is constant.
Therefore, the hydraulic motor unit 100 includes the fixed swash plate 130 in addition to the above components.
In the present embodiment, the free ends of the motor-side pistons 122 are directly engaged with the fixed swash plate 130.

The motor case 150 includes the motor case main body 160 and the motor-side port block 170.

As shown in Fig. 29, the motor case 150 is formed with the motor-side first hydraulic fluid passage 511 and the motor-side second hydraulic fluid passage 512.
The motor-side first and second hydraulic fluid passages 511, 512 are formed in the motor-side port block 170.

Specifically, the motor-side port block 170 is formed with the first kidney, the second kidney port, the motor-side first hydraulic fluid passage 511 fluidly connected to the first kidney port and the motor-side second hydraulic fluid passage 512 fluidly connected to the second kidney port, in a same manner as in each of the above embodiments.

As shown in Fig. 30, the motor shaft 110 is supported in a rotatable manner about the axis line by the motor case 150 in a state of supporting the second hydraulic motor main body 120(2) in a relatively non-rotatable manner within the motor space defined by the motor case main body 160 and the motor-side port block 170 and having the first end 111 on an outer side in a width direction of the vehicle extending outward from the motor case 150, in a similar manner as in each of the above embodiments.

The end wall 161 of the motor case main body 160 is formed with a first supporting hole for supporting the first end 111 of the motor shaft 110.
As described above, the first end 111 of the motor shaft 110 is extended outward from the motor case main body 160. Therefore, the first supporting hole is formed as a pass-through hole. The motor shaft 110 is supported in a rotatable manner about the axis line by the end wall 161 through a bearing member 115 arranged in the first supporting hole in a state that the first end 111 extends outward through the first supporting hole.

The second end 112 of the motor shaft 110 on an inner side in the width direction of the vehicle is supported in a rotatable manner about the axis line by the motor-side port block 170.
Specifically, the motor-side port block 170 is formed with a second supporting hole for supporting the second end 112 of the motor shaft 110.

In the present embodiment, the second end 112 of the motor shaft 110 is positioned in the motor-side port block 170.
In other words, the second supporting hole in the motor-side port block 170 has an inner end in the width direction of the vehicle opened to an outer surface and an outer end in the width direction of the vehicle terminated in the motor-side port block 170, and the motor shaft 110 is supported by the second supporting hole with the second end 112 being positioned within the motor-side port block 170.

While not shown in the Figures, the motor case main body 160 is formed with a drain port for fluidly connecting the internal fluid sump to the external tank 90 through a conduit. A bearing member with a sealing member is used as the bearing member 115 to prevent oil within the motor case main body 160 from flowing into the reduction gear unit 200, which is later described.

The reduction gear unit 200 will now be described.
As shown in Figs. 29 and 30, the reduction gear unit 200 includes the reduction gear mechanism 210, and a gear case 250F detachably connected to the motor case 150 so as to form a gear space for accommodating the reduction gear mechanism 210.

In a similar manner as in each of the above embodiments, the reduction gear mechanism 210 includes the first and second planetary gear mechanisms 220a, 220b arranged in series to each other.

Specifically, the first planetary gear mechanism 220a includes the first sun gear 221a supported in a relatively non-rotatable manner by the first end 111 of the motor shaft 110, the first planetary gear 224a that engages with the first sun gear 221a so as to revolve around the first sun gear 221a, the first carrier 222a that supports the first planetary gear 224a in a relatively rotatable manner and that revolves around the first sun gear 221a according to the revolution of the first planetary gear 224a, and the first internal gear 223a that engages with the first planetary gear 224a.

The second planetary gear mechanism 220b includes the second sun gear 221b operatively connected to the first carrier 222a, the second planetary gear 224b that engages with the second sun gear 221b so as to revolve around the second sun gear 221b, the second carrier 222b that supports the second planetary gear 224b in a relatively rotatable manner and that revolves around the second sun gear 221b according to the revolution of the second planetary gear 224b, and the second internal gear 223b that engages with the second planetary gear 224b.

The first and second internal gear 223a, 223b is fixed in a non-rotatable manner.
In the present embodiment, as shown in Fig. 30, the first and second internal gear 223a, 223b are integrally formed by a single tubular member 225.
Specifically, at opposed surfaces of the gear case 250F, the tubular member 225 and motor case 150, an engagement hole or an engagement groove is formed so as to be arranged across the inner circumferential surface of the gear case 250F and the outer circumferential surface of the tubular member 225. A common pin 226 that is inserted in the engagement hole or groove fixes the tubular member 225 in a non-rotatable manner within the gear case 250F, and also arranges the output member 290 and the tubular member 225 coaxially with the motor shaft 110.
The tubular member 225 integrally including the first and second internal gears 223a, 223b is preferably made by sintering in order to reduce the manufacturing cost.

The gear case 250F has a hollow shape in which an inner side in the width direction of the vehicle that is brought into contact with the motor case 150 is opened and an outer side in the width direction of the vehicle on a side opposite to the motor case 150 is closed by an end wall.
The tubular member 225 integrally including the first and second internal gears 223a, 223b is arranged in the gear case 250 through the opening.
With the configuration in which the first and second internal gears 223a, 223b are surrounded by the gear case 250F, it is possible to effectively prevent oil in the gear space from being leaked outside even if the first and second internal gears 223a, 223b are made by sintering.
The end wall of the gear case 250F is formed with a pass-through hole 275 through which the output member 290 is passed.

As shown in Fig. 30, the output member 290 includes a flange part 291 connected to the second carrier 222b so as to rotate about the axis line according to the revolution of the second carrier 222b about the second sun gear 221b, and an output shaft part 292 extending outward in the width direction of the vehicle from the flange part 291.
In the illustrated embodiment, the flange part 291 and the output shaft part 292 are formed separately to each other, and the flange part 291 is supported in a relatively non-rotatable manner by the output shaft part 292.

In the present embodiment, the output member 290 is supported at two points by first and second bearing members 295, 296 arranged between an inner circumferential surface of the gear case 250F and an outer circumferential surface of the output shaft part 292, so that the output member 290 could be stably rotated about the axis line.

According to the arrangement in which the speed of the rotational power output by the hydraulic motor main body 120 is reduced by the reduction gear mechanism 210 and the rotational power whose speed has been reduced by the reduction gear mechanism 210 is transmitted to the corresponding driving wheel 21(2) as described above, it is possible to utilize a low-torque/ high-rotation hydraulic motor main body such as an axial piston type as the second hydraulic motor main body 120(2), thereby miniaturizing the second hydraulic motor main body 120(2) and also reducing the amount of the hydraulic fluid that is leaked from the second hydraulic motor main body 120(2) to enhance the transmission efficiency of the HST.

Furthermore, in the present embodiment, the wheel motor device 500F includes a brake unit 310F.

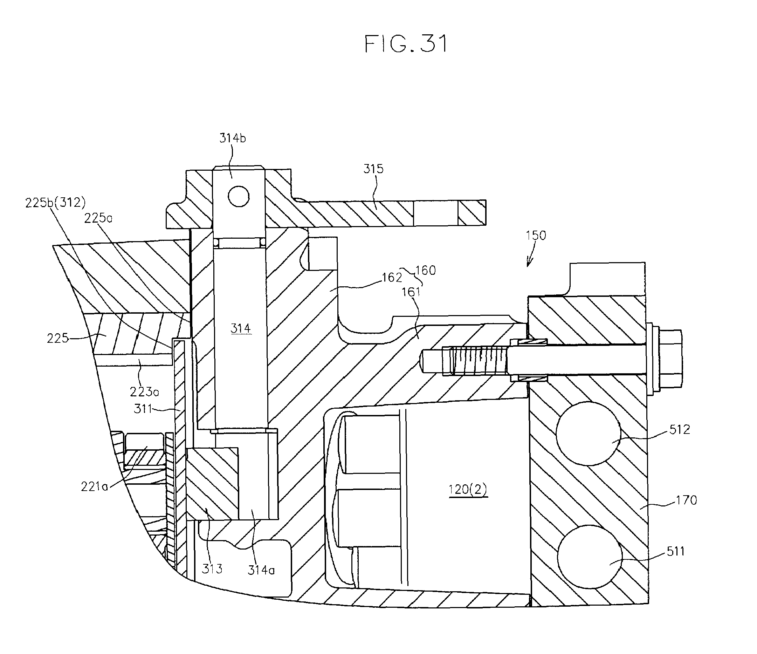

Fig. 31 shows a partially sectional view of the wheel motor device 500F taken along a line XXXI-XXXI in Fig. 30.

The brake unit 310F is configured to apply the braking force to the motor shaft 110, which is in a state before the speed of the rotational power is reduced by the reduction gear mechanism 210.
Specifically, as shown in Figs. 30 and 31, the brake unit 310F includes a brake disc 311 which is relatively non-rotatable with respect to the motor shaft 110, a brake actuating member 313 for forcing the brake disc 311 onto a braking surface 312, and a brake shaft 314 for operating the brake actuating member 313.

In the present embodiment, as shown in Figs. 30 and 31, the brake disc 311 is supported in a relatively non-rotatable manner by a member forming the first sun gear 221a so that the brake disc 311 is relatively non-rotatable with respect to the motor shaft 110.

In the present embodiment, an end surface of the tubular member 225 forming the first and second internal gears 223a, 223b is utilized as the braking surface 312.
Specifically, as shown in Fig. 31, the tubular member 225 is configured such that its end surface on a side close to the motor case 150 includes a radially-outward end surface 225a brought into contact with the motor case 150, and a radially-inward end surface 225b positioned radially inward than the radially-outward end surface 225a and spaced away from the motor case 150 than the radially-outward end surface 225a so that a gap is existed between the radially-inward end surface 225b and the motor case 150, wherein the radially-inward end surface 225b functions as the braking surface 312.
In other words, the tubular member 225 is formed with a concave part at an area, which is positioned radially inward, of the end surface on the side close to the motor case 150, and a bottom surface of the concave part forms the radially-inward end surface 225b functioning as the braking surface 312.

The brake disc 311 is supported in a relatively non-rotatable manner by the member forming the first sun gear 221 in a state where its radially-outward peripheral edge is extended into the gap between the radially-inward end surface 225b and the motor case 150.
The brake actuating member 313 is disposed on a side opposite to the braking surface 312 across the brake disc 311.
The brake shaft 314 is supported by the motor case 150 in a rotatable manner about its axis line that is parallel to the brake disc 311 in a state where its inner end 314a is disposed so as to face to the brake disc 311 with the brake actuating member 313 sandwiched therebetween and its outer end 314b is extended outward from the motor case 150.

Specifically, the inner end 314a of the brake shaft 314 is provided with a cam surface, and the brake actuating member 313 is disposed between the cam surface and the brake disc 311.
The cam surface has such a shape that a distance between the cam surface and the brake disc 311 is changed in accordance with the rotation about the axis line of the brake shaft 314, so that the brake actuating member 313 pushes the brake disc 311 towards the braking surface 312 as the brake shaft 314 is rotated about the axis line.

In the present embodiment, as shown in Figs. 30 and 31, the inner end 314a of the brake shaft 314 is provided with a cutout part extending axially outward from an end surface of the brake shaft with a predefined length, the cutout part forming the cam surface.

A reference numeral 315 in Fig. 31 designates a brake arm supported in a relatively non-rotatable manner by the outer end 314b of the brake shaft 314, wherein a free end of the brake arm 315 is operatively connected through a suitable link mechanism to a brake operating member (not shown) arranged in vicinity of a driver's seat.

The hydraulic circuit of the working vehicle 1F will now be described by taking, as an example, a case where the pump-side first hydraulic fluid passage 441 has a high pressure at a forward movement of the vehicle and the second hydraulic fluid passage 442 has a low pressure at the forward movement.

The working vehicle 1F includes a first driving-mode switching valve 1100 for selectively switching between a series driving mode in which the pair of left and right first hydraulic motor main bodies 120(1) provided in the first axle-driving device 50(1) and the pair of left and right second hydraulic motor main bodies 120(2) provided in the second axle-driving device 50(2) are fluidly connected in series with respect to the hydraulic pump main body 420, and a parallel driving mode in which the pair of first hydraulic motor main bodies 120(1) and the pair of second hydraulic motor main bodies 120(2) are fluidly connected in parallel with respect to the hydraulic pump main body 420.

Specifically, as shown in Fig. 29, the working vehicle 1F includes a pump-side forward-movement high-pressure line 700 including the pump-side first hydraulic fluid passage 441 into which the hydraulic pump main body 420 discharges the hydraulic fluid at the forward movement; a pump-side forward-movement low-pressure line 710 including the pump-side second hydraulic fluid passage 442 from which the hydraulic pump main body 420 suctions the hydraulic fluid at the forward movement; a pair of left and right first-motor-side forward-movement high-pressure lines 720L, 720R fluidly connected in a direct or indirect manner to the pump-side forward-movement high-pressure line 700 and respectively supplying the hydraulic fluid towards the pair of left and right first hydraulic motor main bodies 120(1)L, 120(1)R at the forward movement; a pair of left and right first-motor-side forward-movement low-pressure lines 730L,730R for returning the hydraulic fluid, which has been respectively discharged from the pair of left and right first hydraulic motor main bodies 120(1)L, 120(1)R, to the pump-side forward-movement low-pressure line 710 at the forward movement; a pair of left and right second-motor-side forward-movement high-pressure lines 740L, 740R fluidly connected in a direct or indirect manner to the pump-side forward-movement high-pressure line 700 and respectively supplying the hydraulic fluid towards the pair of left and right second hydraulic motor main bodies 120(2)L, 120(2)R at the forward movement; a pair of left and right second-motor-side forward-movement low-pressure lines 750L, 750R respectively receiving the hydraulic fluid, which has been discharged from the pair of left and right second hydraulic motor main bodies 120(2)L, 120(2)R at the forward movement; and a first-motor-side forward-movement high-pressure bypass line 1000 fluidly connected in a direct or indirect manner to the pump-side forward-movement high-pressure line 700.

In the configuration, the first driving-mode switching valve 1100 is configured so as to respectively flow the hydraulic fluid of the pair of left and right second-motor-side forward-movement low-pressure lines 750L, 750R to the pair of left and right first-motor-side forward-movement high-pressure lines 720L, 720R and to also close a forward-movement downstream side of the first-motor-side forward-movement high-pressure bypass line 1000 when the series driving mode is selected, and is also configured so as to flow the hydraulic fluid of the first-motor-side forward-movement high-pressure bypass line 1000 to both of the pair of left and right first-motor-side forward-movement high-pressure lines 720L, 720R and to also flow the hydraulic fluid of the pair of left and right second-motor-side forward-movement low-pressure lines 750L, 750R to the pump-side forward-movement low-pressure line 710 when the parallel driving mode is selected.

That is, in the present embodiment, when the series driving mode is selected by the first driving-mode switching valve 1100, the left second-motor-side forward-movement low-pressure line 750L is fluidly connected in series to the left first-motor-side forward-movement high-pressure line 720L and the right second-motor-side forward-movement low-pressure line 750R is fluidly connected in series to the right first-motor-side forward-movement high-pressure line 720R in a state where the pair of left and right second-motor-side forward-movement high-pressure lines 740L, 740R is fluidly connected in parallel to the pump-side forward-movement high-pressure line 700.
Specifically, when the series driving mode is selected, the left second hydraulic motor main body 120(2)L and the left first hydraulic motor main body 120(1)L are fluidly connected in series through a left hydraulic line formed by the left second-motor-side forward-movement high-pressure line 740L, the left second-motor-side forward-movement low-pressure line 750L, the first driving-mode switching valve 1100, the left first-motor-side forward-movement high-pressure line 720L and the left first-motor-side forward-movement low-pressure line 730L, and the right second hydraulic motor main body 120(2)R and the right first hydraulic motor main body 120(1)R are fluidly connected in series through a right hydraulic line formed by the right second-motor-side forward-movement high-pressure line 740R, the right second-motor-side forward-movement low-pressure line 750R, the first driving-mode switching valve 1100, the right first-motor-side forward-movement high-pressure line 720R and the right first-motor-side forward-movement low-pressure line 730R, in a state where the left second hydraulic motor main body 120(2)L and the right second hydraulic motor main body 120(2)R are fluidly connected in parallel with respect to the hydraulic pump main body 420 through the left second-motor-side forward-movement high-pressure line 740L and the right second-motor-side forward-movement high-pressure line 740R.

In contrast, when the parallel driving mode is selected by the first driving-mode switching valve 1100, the left second hydraulic motor main body 120(2)L, the left first hydraulic motor main body 120(1)L, the right second hydraulic motor main body 120(2)R and the right first hydraulic motor main body 120(1)R are fluidly connected in parallel with respect to the hydraulic pump main body 420 through four hydraulic lines including a left second hydraulic line formed by the left second-motor-side forward-movement high-pressure line 740L and the left second-motor-side forward-movement low-pressure line 750L, a left first hydraulic line formed by the left first-motor-side forward-movement high-pressure line 720L and the left first-motor-side forward-movement low-pressure line 730L, a right second hydraulic line formed by the right second-motor-side forward-movement high-pressure line 740R and the right second-motor-side forward-movement low-pressure line 750R, and a right first hydraulic line formed by the right first-motor-side forward-movement high-pressure line 720R and the right first-motor-side forward-movement low-pressure line 730R.

The thus configured hydraulic four-wheel-drive working vehicle 1F according to the present embodiment is capable of obtaining following effects.
In the hydraulic four-wheel-drive working vehicle, the rotation speed and the rotation torque of the hydraulic motor main body are changed by changing the suction/discharge amount of the hydraulic pump main body and/or the hydraulic motor main body that is of variable displacement type (hereinafter referred to as variable displacement member).
For instance, in the hydraulic four-wheel-drive working vehicle in which the hydraulic pump main body is of variable displacement type, the hydraulic motor main body could be rotated at a high-speed/low-torque state by increasing the suction/discharge amount of the hydraulic pump main body, and the hydraulic motor main body could be rotated at a low-speed/high-torque state by decreasing the suction/discharge amount of the hydraulic pump main body.

However, in the conventional hydraulic four-wheel-drive working vehicle, the variable range of the rotation speed/rotation torque of the hydraulic motor main body depends only on the variable range of the suction/discharge amount of the variable displacement member since the hydraulic pump main body and the hydraulic motor main body are fluidly connected to each other through a single hydraulic circuit.
For instance, it is possible to enlarge the variable range of the rotation speed/rotation torque of the hydraulic motor main body by enlarging the variable range of he suction/discharge amount of the variable displacement member. However, this method results in enlargement of the variable displacement member in size.

Specifically, the conventional hydraulic four-wheel-drive working vehicle described in the section of the Related Art includes a hydraulic pump main body of variable displacement type operatively connected to a driving power source; a pair of first right-side and left-side hydraulic motor main bodies that are operatively and respectively connected to a pair of first right-side and left-side driving wheels arranged on one side in the longitudinal direction of the vehicle; and a pair of second right-side and left-side hydraulic motor main bodies that are operatively and respectively connected to a pair of second right-side and left-side driving wheels arranged on the other side in the longitudinal direction of the vehicle; wherein the first right-side hydraulic motor main body and the second right-side hydraulic motor main body are fluidly connected in series by a right-side hydraulic line, the first left-side hydraulic motor main body and the second left-side hydraulic motor main body are fluidly connected in series by a left-side hydraulic line, and the right-side hydraulic line and the left-side hydraulic line are fluidly connected in parallel with respect to the hydraulic pump main body.

Even if any one of the four driving wheels slips, the conventional hydraulic four-wheel-drive working vehicle with the above configuration could prevent the pressurized fluid from the hydraulic pump main body from flowing in a concentrated manner to the hydraulic motor main body corresponding to the one driving wheel that has slipped, thereby ensuring driving force of the hydraulic motor main bodies corresponding to the other three driving wheels.
However, such conventional hydraulic four-wheel-drive working vehicle also can change the driving speed/driving torque of the driving wheel within only a variable range of the suction/discharge amount of the variable displacement type hydraulic pump main body, and cannot change the driving mode according to the traveling situation.

The hydraulic four-wheel-drive working vehicle 1F according to the present embodiment, on the other hand, can switch by the first driving-mode switching valve 1100 between the series driving mode in which the left second hydraulic motor main body 120(2)L and the left first hydraulic motor main body 120(1)L that are positioned on the left side are fluidly connected in series through the left hydraulic line and the right second hydraulic motor main body 120(2)R and the right first hydraulic motor main body 120(1)R that are positioned on the right side are fluidly connected in series through the right hydraulic line in a state
where the pair of left and right second hydraulic motor main bodies 120(2) are fluidly connected in parallel to the hydraulic pump main body 420, and the parallel driving mode in which four hydraulic motor main bodies of the pair of left and right second hydraulic motor main bodies 120(2) and the pair of left and right first hydraulic motor main bodies 120(1) are fluidly connected in parallel with respect to the pump main body 420, as described above.

According to such configuration, the hydraulic fluid discharged from the hydraulic pump main body 420 is supplied in a distributed manner to two systems of the left hydraulic line and the right hydraulic line when the series driving mode is selected, while the hydraulic fluid discharged from the hydraulic pump main body 420 is supplied in a distributed manner to four systems of the left second hydraulic line, the left first hydraulic line, the right second hydraulic line and the right first hydraulic line when the parallel driving mode is selected.
Therefore, it is possible to increase an amount of the hydraulic fluid supplied to the each hydraulic motor main body 120(1), 120(2) in the series driving mode more than that in the parallel driving mode, thereby rotating the each hydraulic motor main body 120(1), 120(2) at the high-speed/low-torque driving mode.

This effect will be described in detail, by taking, as an example, a case in which the hydraulic motor main bodies 120(1), 120(2) receives the same load.
Half the amount of the hydraulic fluid discharged from the hydraulic pump main body 420 is respectively supplied to the left hydraulic line and the right hydraulic line when the series driving mode is selected in the case. Since the left second hydraulic motor main body 120(2)L and the left first hydraulic motor main body 120(1)L are fluidly connected in series and the right second hydraulic motor main body 120(2)R and the right first hydraulic motor main body 120(1)R are connected in series in the series driving mode as described above, a half of the amount of the hydraulic fluid discharged from the hydraulic pump main body 420 is supplied to each of the four hydraulic motor main bodies 120(1), 120(2).

In contrast, since the four hydraulic motor main bodies 120(1), 120(2) are fluidly connected in parallel with respect to the hydraulic pump main body 420 at the parallel driving mode, a quarter of the amount of the hydraulic fluid discharged from the hydraulic pump main body 420 is supplied to each of the hydraulic motor main bodies 120(1), 120(2) when the parallel driving mode is selected in the case which the each hydraulic motor main body 120(1), 120(2) receives the same load.

Therefore, it is possible to rotate the hydraulic motor main bodies 120(1), 120(2) at the high-speed driving state that is suitable at the time when the working vehicle travels on road or the like by selecting the series driving mode, and to rotate them at the high-torque driving state that is suitable at the time when the working vehicle travels with working or the like by selecting the parallel driving mode, without enlarging the hydraulic pump main body 420 nor the first and second hydraulic motor main bodies 120(1), 120(2).

In the present embodiment, the first driving-mode switching valve 1100 includes two switching valves of four-ports/two-positions type that are commercially available as shown in Fig. 29, thereby reducing the cost.
Specifically, the first driving-mode switching valve 1100 includes a main switching valve 1110 fluidly connecting or disconnecting in a selective manner between the pair of second-motor-side forward-movement low-pressure lines 750 and the pair of first-motor-side forward-movement high-pressure lines 720, and an auxiliary switching valve 1120 separate from the main switching valve 1110.

The auxiliary switching valve 1120 is configured so as to selectively allow or prevent that the hydraulic fluid is flown from the pair of left and right second-motor-side forward-movement low-pressure lines 750 into the pump-side forward-movement low-pressure line 710, and to also selectively allow or prevent that the hydraulic fluid is flown from the first-motor-side forward-movement high-pressure bypass line 1000 into the pair of left and right first-motor-side forward-movement high-pressure lines 720.

Specifically, the working vehicle 1F includes a second-motor-side forward-movement discharge line 1200 having a first end fluidly connected to one (the left second-motor-side forward-movement low-pressure line 750L in Fig. 29) of the pair of second-motor-side forward-movement low-pressure lines 750 and a second end fluidly connected to the pump-side forward-movement low-pressure line 710.
The first-motor-side forward-movement high-pressure bypass line 1000 is configured that its forward-movement downstream side is fluidly connected to one (the left first-motor-side forward-movement high-pressure line 720L in Fig. 29) of the pair of left and right first-motor-side forward-movement high-pressure lines 720.
In the configuration, the auxiliary switching valve 1120 is configured so as to selectively take a shutoff position (shown in Fig. 29) for shutting off both of the second-motor-side forward-movement discharge line 1200 and the first-motor-side forward-movement high-pressure bypass line 1000, and a communicating position for communicating both of the second-motor-side forward-movement discharge line 1200 and the first-motor-side forward-movement high-pressure bypass line 1000.

The main switching valve 1110 is configured so as to selectively take a first position (shown in Fig. 29) for fluidly connecting the pair of second-motor-side forward-movement low-pressure lines 750 respectively to the pair of first-motor-side forward-movement high-pressure lines 720, and a second position for fluidly disconnecting the pair of second-motor-side forward-movement low-pressure lines 750 to the pair of first-motor-side forward-movement high-pressure lines 720.

In the present embodiment, the main switching valve 1110 is configured so as to fluidly connect between the pair of second-motor-side forward-movement low-pressure lines 750 and to also fluidly connect between the pair of first-motor-side forward-movement high-pressure lines 720 when positioned at the second position.

The auxiliary switching valve 1120 is position-controlled so as to respectively take the shutoff position and the communicating position when the main switching valve 1110 is positioned at the first and second positions.
Specifically, by positioning the main switching valve 1110 at the first position and the auxiliary switching valve 1120 at the shutoff position, the hydraulic fluid is flown from the pair of second-motor-side forward-movement low-pressure lines 750 respectively into the pair of left and right first-motor-side forward-movement high-pressure lines 720 in a state of preventing that the hydraulic fluid is flown from the first-motor-side forward-movement high-pressure bypass line 1000 into the pair of left and right first-motor-side forward-movement high-pressure lines 720 and also preventing that the hydraulic fluid is flown from the pair of left and right second-motor-side forward-movement low-pressure lines 750 into the pump-side forward-movement low-pressure line 710 through the second-motor-side forward-movement discharge line 1200, thereby achieving the series driving mode.

In contrast, by positioning the main switching valve 1110 at the second position and the auxiliary switching valve 1120 positioning at the communicating position, the hydraulic fluid is flown from the first-motor-side forward-movement high-pressure bypass line 1000 into the pair of left and right first-motor-side forward-movement high-pressure lines 720 and to also flow the hydraulic fluid from the pair of second-motor-side forward-movement low-pressure lines 750 into the pump-side forward-movement low-pressure line 710 through the second-motor-side forward-movement discharge line 1200, thereby achieving the series driving mode.

In the present embodiment, as shown in Fig. 29, the main switching valve 1110 and the auxiliary switching valve 1120 are of a pilot-pressure operation type that is capable of being position-controlled by a commercially available solenoid valve, thereby furthermore reducing the cost.
Specifically, the first driving-mode switching valve 1100 further includes, in addition to the main switching valve 1110 and the auxiliary switching valve 1120, a pilot line 1130 having a first end fluidly connected to a hydraulic fluid source, and a solenoid valve 1140 selectively opening or closing the pilot line 1130, wherein the main switching valve 1110 and the auxiliary switching valve 1120 are configured to operate in conjunction with each other with using a hydraulic pressure of the pilot line 1130 as a pilot pressure.
In the present embodiment, the first end of the pilot line 1130 is fluidly connected to the right second-motor-side forward-movement low-pressure line 750R.

The configuration does not need to interpose the solenoid valve into the hydraulic line through which the large amount of the hydraulic fluid flows so that the commercially available solenoid valve can be used as the solenoid valve, thereby reducing the cost of the first driving-mode switching valve 1100.
As shown in Fig. 29, the solenoid valve 1140 is position-controlled by a control device 7 arranged in the working vehicle 1F based on a manual operation on a driving-mode changeover switch 6 arranged in vicinity of a driver's seat.

In the present embodiment, the forward-movement downstream side of the first-motor-side forward-movement high-pressure bypass line 1000 is fluidly connected to one (the left first-motor-side forward-movement high-pressure line 720L in Fig. 2) of the pair of first -motor-side forward-movement high-pressure lines 720, and the forward-movement upstream side of the second-motor-side forward-movement discharge line 1200 is fluidly connected to one (the left second-motor-side forward-movement low-pressure line 750L in Fig. 2) of the pair of second-motor-side forward-movement low-pressure lines 750, as described above. The main switching valve 1110 is configured so as to fluidly connect between the pair of second-motor-side forward-movement low-pressure lines 750 and to also fluidly connect between the pair of first-motor-side forward-movement high-pressure lines 720 when positioned at the second position.

Alternatively, it is possible to fluidly connect the forward-movement downstream side of the first-motor-side forward-movement high-pressure bypass line 1000 to both of the pair of first-motor-side forward-movement high-pressure lines 720, and to also fluidly connect the forward-movement upstream side of the second-motor-side forward-movement discharge line 1200 to both of the pair of second-motor-side forward-movement low-pressure lines 750.
In the configuration, the main switching valve 1110 is configured so as to close the forward-movement upstream sides of the pair of first-motor-side forward-movement high-pressure lines 720 and to also close the forward-movement downstream sides of the pair of second-motor-side forward-movement low-pressure lines 750 when positioned at the second position.

In the preferable configuration, the working vehicle 1F includes a second driving-mode switching valve 1300 fluidly connecting and disconnecting in a selective manner between the pair of left and right second-motor-side forward-movement low-pressure lines 750 or between the pair of left and right first-motor-side forward-movement high-pressure lines 720, as shown in Fig. 29.

By including the second driving-mode switching valve 1300, it is possible at the series driving mode to selectively take a right-left differential-lock driving state (hereinafter referred to as high-speed/right-left differential-lock state) in which the pair of left and right second hydraulic motor main bodies 120(2) are independently driven to each other with the respective amounts of the hydraulic fluid that are distributed according to a load proportion between the left hydraulic line and the right hydraulic line and the pair of left and right first hydraulic motor main bodies 120(1) are independently driven with the hydraulic fluid respectively supplied from the pair of left and right second hydraulic motor main bodies 120(2), and a right-left differential driving state (hereinafter referred to as high-speed/right-left differential state) in which the pair of left and right second hydraulic motor main bodies 120(2) are driven in a hydraulically-differential manner to each other according to a load proportion between the pair of left and right second hydraulic motor main bodies 120(2) and the pair of left and right first hydraulic motor main bodies 120(1) are driven in a hydraulically-differential manner to each other according to a load proportion between the pair of left and right first hydraulic motor main bodies 120(1).

Specifically, in a case where the second driving-mode switching valve 1300 is not included, when the series driving mode is selected, the amount V of the hydraulic fluid discharged from the hydraulic pump main body 420 is divided into the left hydraulic line and the right hydraulic line according to a load proportion between the left hydraulic line and right hydraulic line (that is, a proportion between the total load of the left second hydraulic motor main body 120(2)L and the left first hydraulic motor main body 120(1)L and the total load of the right second hydraulic motor main body 120(2)R and the right first hydraulic motor main body 120(1)R).

For instance, provided that the amount VL of the hydraulic fluid is supplied to the left hydraulic fluid line, the amount VR (= V-VL) of the hydraulic fluid is supplied to the right hydraulic fluid line. Therefore, the amount VL of the hydraulic fluid is supplied to both of the left second hydraulic motor main body 120(2)L and the left first hydraulic motor main body 120(1)L which are positioned on the left side, and the amount VR of the hydraulic fluid is supplied to both of the right second hydraulic motor main body 120(2)R and the right first hydraulic motor main body 120(1)R which are positioned on the right side.

That is, in the case where the second driving-mode switching valve 1300 is not included, the working vehicle 1F is always in the high-speed/right-left differential-lock state in which the whole hydraulic fluid discharged from the left second hydraulic motor main body 120(2)L flows into the left first hydraulic motor main body 120(1)L and the whole hydraulic fluid discharged from the right second hydraulic motor main body 120(2)R flows into the right first hydraulic motor main body 120(1)R.

On the other hand, by providing the second driving-mode switching valve 1300, it is possible to selectively changeover the communication and the shutoff between the pair of left and right second-motor-side forward-movement low-pressure lines 750 or between the pair of left and right first-motor-side forward-movement high-pressure lines 720.

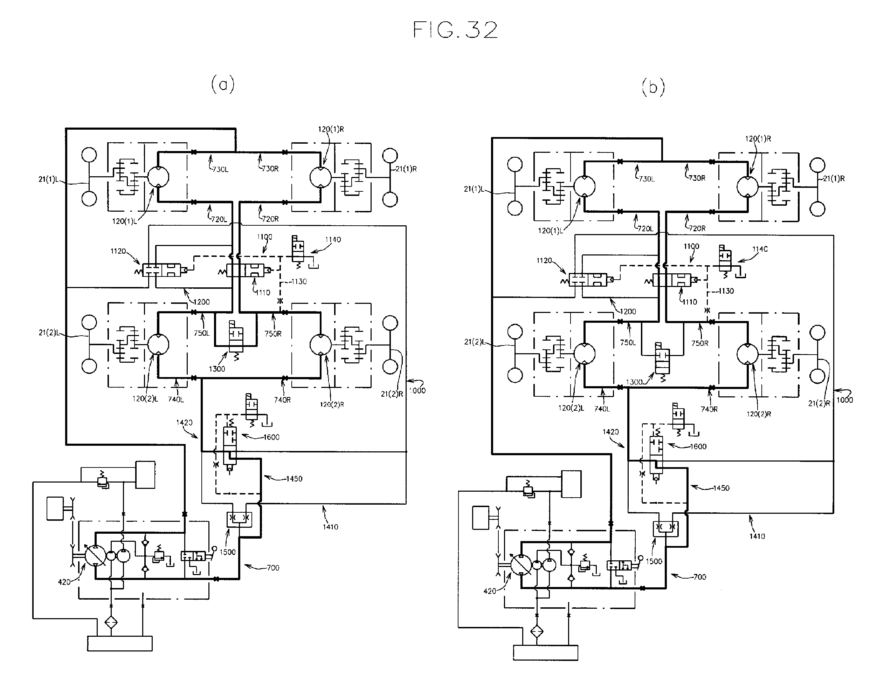

Figs. 32A and 32B are hydraulic circuit diagrams respectively showing the flow of the hydraulic fluid when the second driving-mode switching valve 1300 is positioned at the communicating position and the shutoff position in a case where the series driving mode is selected.
The flow channel through which the hydraulic fluid flows is shown with a heavy line in Fig. 32.

When the second driving-mode switching valve 1300 is positioned at the shutoff position in a case where the series driving mode is selected by the first driving-mode switching valve 1100 (in a case where the main valve 1110 is positioned at the first position and the auxiliary valve 1120 is positioned at the shutoff position in the present embodiment), the hydraulic fluid discharged from the hydraulic pump main body 420 is supplied in a distributed manner to the left hydraulic line and the right hydraulic line according to a load proportion between the left hydraulic line and the right hydraulic line, as shown in Fig. 32B. In this case, since the second driving-mode switching valve 1300 fluidly disconnects between the left hydraulic line and the right hydraulic line, all of the hydraulic fluid discharged from the left second hydraulic motor main body 120(2)L is supplied to the left first hydraulic motor main body 120(1)L, and all of the hydraulic fluid discharged from the right second hydraulic motor main body 120(2)R is supplied to the right first hydraulic motor main body 120(1)R, thereby achieving the high-speed/right-left differential-lock state.

When the second driving-mode switching valve 1300 is positioned, on the other hand, at the communicating position in the case where the series driving mode is selected, the hydraulic fluid discharged from the hydraulic pump main body 420 is supplied in a distributed manner according to a load proportion between the pair of second hydraulic motor main bodies 120(2) to the pair of second hydraulic motor main bodies 120(2), and the hydraulic fluid discharged from the pair of second hydraulic motor main bodies 120(2) is flown together through the second driving-mode switching valve 1300 and then is supplied in a distributed manner according to a load proportion between the pair of first hydraulic motor main bodies 120(1) to the pair of first hydraulic motor main bodies 120(1), as shown in Fig. 32A.

Specifically, when the second driving-mode switching valve 1300 is positioned at the communicating position at the series driving mode, it is achieved the high-speed/ right-left differential state in which the pair of left and right second hydraulic motor main bodies 120(2) are driven in a hydraulically-differential manner to each other according to a load proportion therebetween, and the pair of first hydraulic motor main bodies 120(1) are driven in a hydraulically-differential manner to each other according to a load proportion therebetween.

The second driving-mode switching valve 1300 is position-controlled by the control device 7 based on a manual operation on the driving-mode changeover switch 6 in the same manner as the first driving-mode switching valve 1100.
Although the second driving-mode switching valve 1300 is shown as an electromagnetic operation type in Fig. 29, it is of course possible that the second driving-mode switching valve 1300 is of a pilot-pressure operation type, thereby achieving the cost reduction of the second driving-mode switching valve 1300.

Furthermore, the working vehicle 1F is configured so as to be capable of selecting, at the parallel driving mode, a front-rear differential-lock driving state in which the pair of first hydraulic motor main bodies 120(1) arranged on one side in the longitudinal direction of the vehicle and the pair of second hydraulic motor main bodies 120(2) arranged on the other side in the longitudinal direction of the vehicle are independently driven to each other regardless of a load proportion among the hydraulic motor main bodies 120(1), 120(2).

Specifically, the left second hydraulic motor main body 120(2)L, the right second hydraulic motor main body 120(2)R, the left first hydraulic motor main body 120(1)L and the right first hydraulic motor main body 120(1)R are fluidly connected in parallel to the hydraulic pump main body 420 as describe above, so that the four hydraulic motor main bodies 120(1), 120(2) are driven in a hydraulically-differential manner one another at the parallel driving mode.

By the way, if one or plurality of the pair of first driving wheels 21(1) and the pair of second driving wheels 21(2) falls into a depression or a mud area so that the rotation load of the one or plurality of the driving wheels becomes extremely small in the state in which the four hydraulic motor main bodies 120(1), 120(2) are driven in a hydraulically-differential manner one another, the hydraulic fluid from the hydraulic pump main body 420 flows in a concentrated manner into the hydraulic motor main body that operatively drives the one or plurality of the driving wheels, as a result, the hydraulic fluid will not be supplied to the hydraulic motor main bodies that operatively drive the others of the driving wheels, which may make the working vehicle immovable.

This situation will now be described in more detail by taking, as an example, a case in which one or both of the pair of second driving wheels 21(2) arranged on the other side in the longitudinal direction of the vehicle falls into a depression or a mud area.
When the series driving mode is selected by the first driving-mode switching valve 600, the hydraulic fluid from hydraulic pump main body 420 is supplied in a distributed manner according to a load proportion between the whole left hydraulic line and the whole right hydraulic line to the left hydraulic line and the right hydraulic line. Therefore, even if the rotation load of one or both of the pair of second driving wheels 21(2) becomes extremely small, the amounts of the hydraulic fluid according to the load proportion are supplied respectively to the pair of left and right first hydraulic motor main bodies 120(1) that drive the pair of the first driving wheels 21(1). Accordingly, the working vehicle 1F will not be in an immovable state.

However, when the parallel driving mode is selected by the first driving-mode switching valve 600, the four hydraulic motor main body 120(1), 120(2) are fluidly connected in parallel with respect to the hydraulic pump main body 420. Therefore, if the rotation load of one or both of the pair of second driving wheels 21(2) becomes extremely small, the hydraulic fluid from the hydraulic pump main body 420 flows in a concentrated manner to the second hydraulic motor main body of which the rotation load has become small. When such situation occurs, the remaining driving wheels other than the second driving wheel 21(2) of which the rotation load has become small are in lack of the driving force.
The event that any one or plurality of the driving wheels falls into a depression or a mud area is likely to occur at the time when the working vehicle travels with working in a farm field where the parallel driving mode is frequently selected (i.e., where the high-torque drive is necessary).

In view of this point, the working vehicle 1F according to the present embodiment includes a following configuration so as to select, at the parallel driving mode, a differential driving state (hereinafter referred to as low-speed/front-rear differential/right-left differential state) or a front-rear differential-lock state (hereinafter referred to as low-speed/front-rear differential-lock/right-left differential state). When the low-speed/front-rear differential/right-left differential state is selected, the four hydraulic motor main bodies 120(1), 120(2) are driven in a hydraulically-differential manner one another by the hydraulic pump main body 420. When the low-speed/front-rear differential-lock/right-left differential state is selected, the pair of first hydraulic motor main bodies 120(1) and the pair of second hydraulic motor main bodies 120(2) are independently driven to each other with predefined amounts of the hydraulic fluid in a state where the pair of first hydraulic motor main bodies 120(1) arranged on one side in a longitudinal direction of the vehicle are driven in a hydraulically-differential manner to each other and the pair of second hydraulic motor main bodies 120(2) arranged on the other side in a longitudinal direction of the vehicle are driven in a hydraulically-differential manner to each other.

Specifically, as shown in Fig. 29, the working vehicle 1F includes, in addition to the above components, a second-motor-side line 1420 having forward-movement downstream sides fluidly connected to the pair of second-motor-side forward-movement high-pressure lines 740, a first-motor-side line 1410 having a forward-movement downstream side fluidly connected to the first motor-side high-pressure bypass line 1000, a flow dividing/combining mechanism 1500 disposed between the pump-side forward-movement high-pressure line 700 and forward-movement upstream sides of the first and second-motor-side lines 1410, 1420, a pump-side forward-movement high-pressure bypass line 1450 having a first end fluidly connected to the pump-side forward-movement high-pressure line 700 on an upstream side than the flow dividing/combining mechanism 1500 with the forward movement as a reference, and a third driving-mode switching valve 1600 for fluidly connecting or disconnecting the pump-side forward-movement high-pressure bypass line 1450 to the second-motor-side line 1420 and the first-motor-side forward-movement high-pressure bypass line 1000.

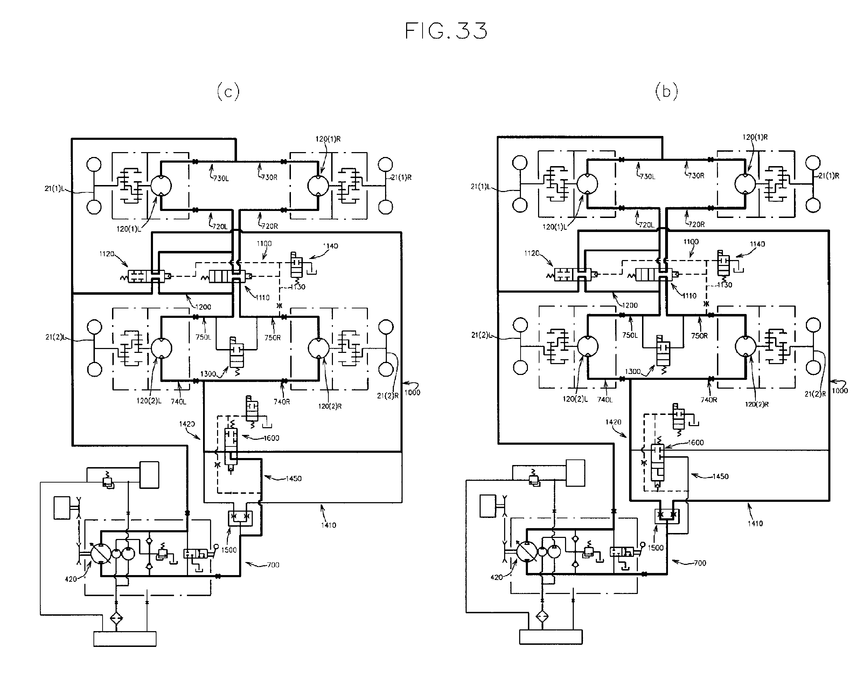

Figs. 33A and 33B are hydraulic circuit diagrams respectively showing the flow of the hydraulic fluid when the third driving-mode switching valve 1600 is positioned at a communicating position and a shutoff position in a case where the parallel driving mode is selected. In the Fig. 33, the flow channel through which the hydraulic fluid flows is shown with a heavy line.

When the third driving-mode switching valve 1600 is positioned at the communicating position in the case where the parallel driving mode is selected by the first driving-mode switching valve 1000 (where the main switching valve 1110 is positioned at the second position and the auxiliary switching valve 1120 is positioned at the communicating position in the present embodiment), the hydraulic fluid discharged from the hydraulic pump main body 420 is supplied to the second-motor-side line 1420 and the first-motor-side forward-movement high-pressure bypass line 1000 through the pump-side forward-movement high-pressure line 700, the pump-side forward-movement high-pressure bypass line 1450 and the third driving-mode switching valve 1600, as shown in Fig. 33A.
In this case, the hydraulic fluid is supplied in a distributed manner to the second-motor-side line 1420 and the first-motor-side forward-movement high-pressure bypass line 1000 according to the proportion between the total rotation load of the pair of second hydraulic motor main body 120(2) and the total rotation load of the pair of first hydraulic motor main body 120(1).

Since the second-motor-side line 1420 is fluidly connected in parallel to the pair of the second-motor-side forward-movement high-pressure lines 740, the hydraulic fluid of the second-motor-side line 1420 is respectively supplied in a distributed manner to the pair of second-motor-side forward-movement high-pressure lines 740 according to a load proportion between the pair of second hydraulic motor main bodies 120(2). The hydraulic fluid discharged from the pair of second hydraulic motor main bodies 120(2) returns to the pump-side forward-movement low-pressure line 710 through the pair of second-motor-side forward-movement low-pressure lines 750, the first driving-mode switching valve 1100 and the second-motor-side forward-movement discharge line 1200.

The first -motor-side forward-movement high-pressure bypass line 1000 is fluidly connected in parallel to the pair of first-motor-side forward-movement high-pressure lines 720 through the first driving-mode switching valve 1100. Therefore, the hydraulic fluid of the first -motor-side forward-movement high-pressure bypass line 1000 is respectively supplied in a distributed manner to the pair of first-motor-side forward-movement high-pressure lines 720 according to a load proportion between the pair of first hydraulic motor main bodies 120(1). The hydraulic fluid discharged from the pair of first hydraulic motor main bodies 120(1) returns to the pump-side forward-movement low-pressure line 710 through the pair of first-motor-side forward-movement low-pressure lines 730.

As described above, by having the third driving-mode swathing valve 1600 positioned at the communicating position when the parallel driving mode is selected, it is achieved the low-speed/front-rear differential/right-left differential state in which all of the four hydraulic motor main bodies 120(1), 120(2) are fluidly connected in parallel to the hydraulic pump main body 420.

By the way, if one or both of the pair of second driving wheels 21(2), for instance, falls into a depression so that the total rotation load of the pair of second hydraulic motor main bodies 120(2) become smaller than the total rotation load of the pair of first hydraulic motor main bodies 120(1) at the low speed/front-rear differential/ right-left differential state, the hydraulic fluid from the hydraulic pump main body 420 flows in a concentrated manner into the second-motor-side line 1420, resulting in lack of the driving force of the pair of first hydraulic motor main bodies 120(1).

On the other hand, when the third driving-mode switching valve 1600 is positioned at the shutoff position in the case where the parallel driving mode is selected, the hydraulic fluid discharged from the hydraulic pump main body 420 is supplied in a distributed manner to the second-motor-side line 1420 and the first-motor-side line 1410 according to the dividing proportion defined by the flow dividing/combining mechanism 1500, as shown by Fig. 33B.
Specifically, by having the third driving-mode switching valve 1600 positioned at the shutoff position when the parallel driving mode is selected, it is achieved the low-speed/front-rear differential-lock/right-left differential state in which predetermined amounts of the hydraulic fluid defined by the flow dividing/combining mechanism 1500 are independently and respectively supplied to the pair of first hydraulic motor main bodies 120(1) and the pair of second hydraulic motor main bodies 120(2).

In the low-speed/front-rear differential-lock/right-left differential state, even if one or both of the pair of second driving wheels 21(2) falls into a depression so that the total rotation load of the pair of second hydraulic motor main bodies 120(2) becomes smaller than the total rotation load of the pair of first hydraulic motor main bodies 120(1), the predetermined amount of the hydraulic fluid defined by the flow dividing/combining mechanism 1500 is certainly flown into the pair of first hydraulic motor main bodies 120(1). Therefore, it is possible to effectively prevent the driving force of the pair of first hydraulic motor main bodies 120(1) from being lacked.

The third driving-mode swathing valve 1600 is position-controlled by the control device 7 based on a manual operation on the driving-mode changeover switch 6 in the same manner as the first and second driving-mode switching valves 1100, 1300.
In the present embodiment, the third driving-mode switching valve 1600 is of a pilot-pressure operation type that is position-controlled by a solenoid valve as shown in Fig. 2, thereby achieving cost reduction of the third driving-mode switching valve 1600.

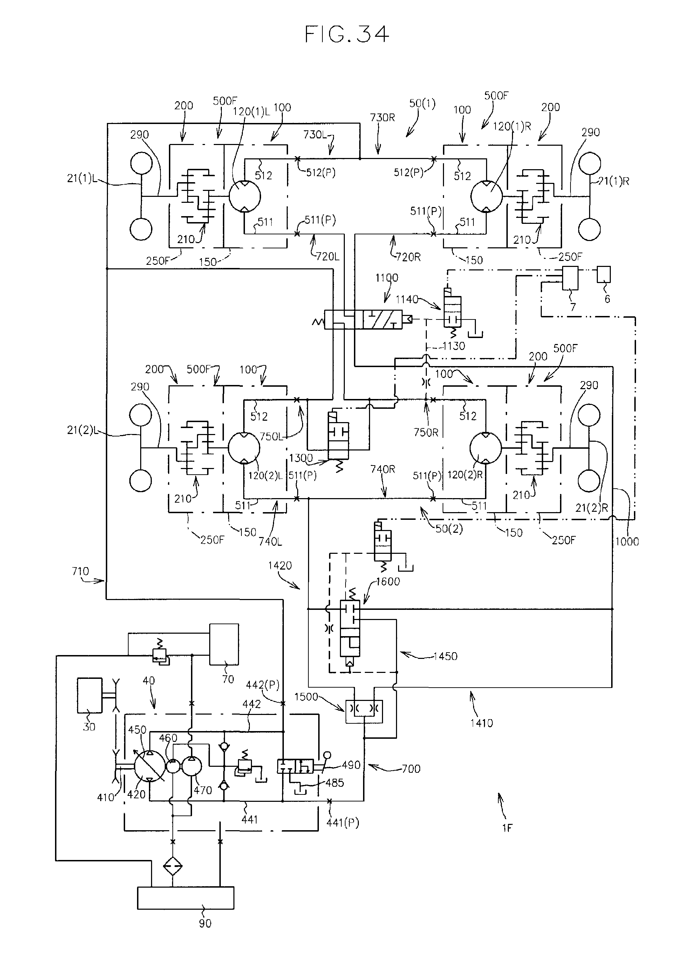

The present embodiment has been explained by taking, as an example, a case where the first driving-mode switching valve 1100 includes the main valve 1110 and the auxiliary valve 1120 that are of four-ports/two-positions type as described above, but the present invention is obviously not limited to the configuration.
For instance, as shown in Fig. 34, it is possible to utilize, as the first driving-mode switching valve 1100, a switching valve of six-ports/two-positions type configured so as to selectively take a first position for fluidly connecting the pair of second-motor-side forward-movement low-pressure lines 750 respectively to the pair of first-motor-side high-pressure lines 720 and also closing the forward-movement downstream side of the first-motor-side forward-movement high-pressure bypass line 1000 and the forward-movement upstream side of the second-motor-side forward-movement discharge line 1200, and a second position for fluidly connecting the forward-movement downstream side of the first-motor-side forward-movement high-pressure bypass line 1000 to both of the pair of first-motor-side forward-movement high-pressure lines 720 and also fluidly connecting both of the pair of second-motor-side forward-movement low-pressure lines 750 to the second-motor-side forward-movement discharge line 1200.

### Seventh embodiment

Still another embodiment of the present invention will now be described with reference to the accompanying drawings.

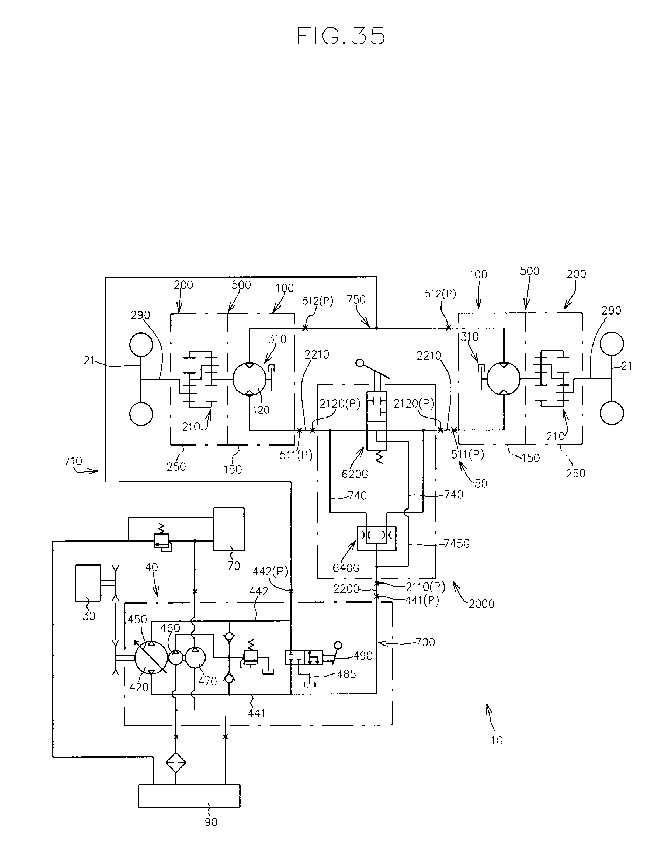

Fig. 35 shows a hydraulic circuit diagram of a hydraulic wheel-drive working vehicle 1G to which the present embodiment is applied.
In the figure, the same reference characters denote the same members as in the first to sixth embodiments, and thus the description thereof will be omitted.

The working vehicles 1A-1F are of a hydraulic four-wheel-drive working vehicle in which all the four driving wheels including a pair of left and right first wheels (the pair of left and right first driving wheels 21(1)) and a pair of left and right second wheels (the pair of left and right second driving wheels 21(2)) that are respectively arranged on one side and the other side in the longitudinal direction of the vehicle are hydraulically driven.
The working vehicle 1G according to the present embodiment is, on the other hand, of a hydraulic two-wheel-drive working vehicle in which one pair of the pair of first wheels and the pair of second wheels are driving wheels that are hydraulically driven and the other pair are non-driving wheels.

The working vehicle 1G is mainly different from the working vehicle 1A according to the first embodiment in that the hydraulic driving structure for driving the pair of left and right first driving wheels 21(1) is omitted.

Specifically, as shown in Fig. 35, the working vehicle 1G includes the driving power source 30, a pair of left and right driving wheels 21 (corresponding to the left and right second driving wheels 21(2) in the first embodiment), the hydraulic pump unit 40 including the hydraulic pump main body 420, an axle-driving device 50 (corresponding to the second axle-driving device 50(2) in the first embodiment) including a pair of left and right hydraulic motor main bodies 120 (corresponding to the left and right second hydraulic motor main bodies 120(2) in the first embodiment) fluidly connected to the hydraulic pump main body 420 so as to output rotational power for respectively driving the pair of driving wheels 21, the pump-side forward-movement high-pressure line 700, the pump-side forward-movement low-pressure line 710, a pair of left and right motor-side forward-movement high-pressure lines 740 (corresponding to the pair of second left-side and right-side hydraulic motor main body lines 740L, 740R in the first embodiment) fluidly connected in a direct or indirect manner to the pump-side forward-movement high-pressure line 700 and supplying the hydraulic fluid towards the pair of left and right hydraulic motor main bodies 120 at the forward movement of the vehicle, the motor-side forward-movement low-pressure line 750 for returning the hydraulic fluid, which has been discharged from the pair of left and right hydraulic motor main bodies 120, to the pump-side forward-movement low-pressure line 710 at the forward movement o the vehicle as a reference in a direct or indirect manner, a driving-mode switching valve 620G (corresponding to the second driving-mode switching valve 620 in the first embodiment) for fluidly connecting or disconnecting between the pair of left and right motor-side forward-movement high-pressure lines 740 on a selective basis, and a flow dividing/combining mechanism 640G (corresponding to the first flow dividing/combining mechanism 640 in the first embodiment) disposed between the pump-side forward-movement high-pressure line 700 and the pair of left and right motor-side forward-movement high-pressure lines 740, wherein at least one of the hydraulic pump main body 420 and the pair of hydraulic motor main bodies 120 is of a variable displacement type.

The working vehicle 1G further includes, as shown in Fig. 35, a motor-side forward-movement high-pressure bypass line 745G (corresponding to the second hydraulic motor main body common line 740C in the first embodiment) having a first end fluidly connected to the pump-side forward-movement high-pressure line 700 on an upstream side than the flow dividing/combining mechanism 640G with the forward movement of the vehicle as a reference, in addition to the above components.

In a same manner as the second driving-mode switching valve 620 in the first embodiment, the driving-mode switching valve 620G is configured so as to selectively take a shutoff position of fluidly disconnecting between the pair of motor-side forward-movement high-pressure lines 740 and also closing a downstream side of the motor-side forward-movement high-pressure bypass line 745G with the forward movement of the vehicle as a reference, and a communicating position of fluidly connecting the downstream side of the motor-side forward-movement high-pressure bypass line 745G to the pair of pair of motor-side forward-movement high-pressure lines 740 in a direct or indirect manner.

According to the thus configured working vehicle 1G, it is possible to change driving mode between the right-left differential driving state in which the pair of left and right driving wheels 21 are driven in a hydraulically-differential manner to each other and the right-left differential-lock driving state in which the pair of left and right driving wheels 21 are independently driven to each other with the respective amounts of hydraulic fluid defined by the flow dividing/combining mechanism 640G, and also to enhance transmission efficiency at the right-left differential driving state.

Specifically, in the conventional hydraulic wheel-drive working vehicle capable of changing driving state between the right-left differential driving state and the right-left differential-lock driving state by the driving-mode switching valve, even when the right-left differential driving state is selected, the hydraulic fluid, which the hydraulic pump main body has discharged, is supplied to the pair of left and right hydraulic motor main bodies through the flow dividing/combining mechanism that is provided for achieving the right-left differential-lock driving state, as explained in the section of the Related Art.
That is, the conventional hydraulic wheel-drive working vehicle could achieve the right-left differential driving state only in a state of being subjected to fluid load of the flow dividing/combining mechanism. For this reason, the conventional hydraulic wheel-drive working vehicle could not utilize the performance of the hydraulic motor main body in an adequate manner, resulting in worsened transmission efficiency.

On the other hand, the working vehicle 1G according to the present embodiment includes the motor-side forward-movement high-pressure bypass line 745G having the first end fluidly connected to the pump-side forward-movement high-pressure line 700 on an upstream side than the flow dividing/combining mechanism 640G with the forward movement of the vehicle as a reference, and is configured so that the driving-mode switching valve 620G selectively takes the shutoff position of fluidly disconnecting between the pair of motor-side forward-movement high-pressure lines 740 and also closing the downstream side of the motor-side forward-movement high-pressure bypass line 745G with the forward movement of the vehicle as a reference and the communicating position of fluidly connecting the forward-movement downstream side of the motor-side forward-movement high-pressure bypass line 745G to the pair of pair of motor-side forward-movement high-pressure lines 740 in a direct or indirect manner.

That is, in the working vehicle 1G according to the present embodiment, when the driving-mode switching valve 620G is positioned at the shutoff position, it is achieved the right-left differential-lock driving state in which the pair of hydraulic motor main bodies are independently driven to each other with the respective amounts of the hydraulic fluid, which the hydraulic pump main body 420 has discharged, divided by the flow dividing/combining mechanism 640G.
Further, when the driving-mode switching valve 620G is positioned at the communicating position, it is achieved the right-left differential driving state in which the hydraulic fluid from the hydraulic pump main body 420 is supplied to the pair of hydraulic motor main bodies 120 through the motor-side forward-movement high-pressure bypass line 745G and the driving-mode switching valve 620G while bypassing the flow dividing/combining mechanism 640G in a state
where the pair of hydraulic motor main bodies are fluidly connected in parallel to the hydraulic pump main body 420.
Therefore, the working vehicle 1G makes it possible to realize enhanced transmission efficiency in comparison to the conventional working vehicle in which the hydraulic fluid from the hydraulic pump main body is supplied to the pair of hydraulic motor main bodies through the flow dividing/combining mechanism even when the right-left differential driving state is selected.

In the present embodiment, the driving-mode switching valve 620G and the flow dividing/combining mechanism 640G form a single valve unit 2000.
Specifically, the working vehicle 1G according to the present embodiment includes, as shown in Fig. 35, the hydraulic pump unit 40 including the hydraulic pump main body 420, the pair of left and right wheel motor devices 500 which form the axle-driving device 50 and which are disposed away from the hydraulic pump unit 40 so as to be capable of being positioned close to the corresponding driving wheels 21, and the valve unit 2000 that is separate from the hydraulic pump unit 40 and the pair of wheel motor devices 500, wherein the hydraulic pump unit 40, the valve unit 200 and the pair of wheel motor devices 500 are fluidly connected one another through outer conduits.

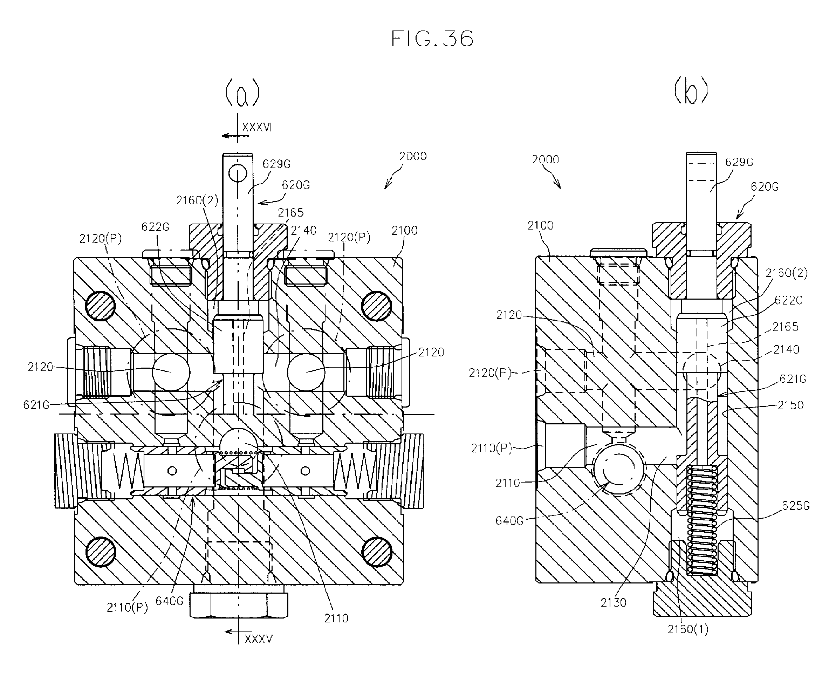

Fig. 36A shows a horizontal cross-sectional view of the valve unit 2000. Fig. 36B shows a cross-sectional view taken along a line XXXVI-XXXVI in Fig. 35A.
As shown in Figs. 36A and 36B, the valve unit 2000 includes the driving-mode switching valve 620G, the flow dividing/combining mechanism 640G, and a valve block 2100 in which the driving-mode switching valve 620G and the flow dividing/combining mechanism 640G are mounted.

As shown in Figs. 36A and 36B, the valve block 2100 is formed with a valve unit-side forward-movement high-pressure passage 2110 forming a part of the pump-side forward-movement high-pressure line 700, a pair of left and right motor-side forward-movement high-pressure passages 2120 forming the pair of left and right motor-side forward-movement high-pressure lines 740, a motor-side forward-movement high-pressure bypass passage 2130 forming the motor-side forward-movement high-pressure bypass line 745G, and a motor-side forward-movement high-pressure connecting passage 2140 which forms a motor-side forward-movement high-pressure connecting line (corresponding to the second motor-side forward-movement high-pressure connecting line 760) fluidly connecting between the pair of left and right motor-side forward-movement high-pressure passages 2120.

The valve unit-side forward-movement high-pressure passage 2110 has a first end opened to an outer surface to form a valve unit-side forward-movement high-pressure inlet port 2110(P) and a second end fluidly connected to an upstream side of the flow dividing/combining mechanism 640G with the forward movement as a reference, as shown in Figs. 36A and 36B.
As shown in Fig. 35, the valve unit-side forward-movement high-pressure inlet port 2110(P) is fluidly connected to the hydraulic fluid port 441(P) in the hydraulic pump unit 40 through an outer conduit 2200.

The pair of left and right motor-side forward-movement high-pressure passages 2120 have first ends fluidly connected to the valve unit-side forward-movement high-pressure passage 2110 through the flow dividing/combining mechanism 640G and second ends opened to an outer surface to form valve unit-side forward-movement high-pressure outlet ports 2120(P), as shown in Figs. 36A and 36B.
As shown in Fig. 35, the outer surface to form valve unit-side forward-movement high-pressure outlet ports 2120(P) are fluidly connected to the motor-side hydraulic fluid ports 511(P) in the corresponding wheel motor devices 500 through outer conduits 2210.

The motor-side forward-movement high-pressure bypass passage 2130 has a first end fluidly connected to the valve unit-side forward-movement high-pressure passage 2110 on an upstream side than the flow dividing/combining mechanism 640G with the forward movement as a reference and a second end fluidly connected to an upstream side of the driving-mode switching valve 620G with the forward movement as a reference, as shown in Figs. 35, 36A and 36B.

The driving-mode switching valve 620G shuts off the motor-side forward-movement high-pressure connecting passage 2140 and also closes the second end of the motor-side forward-movement high-pressure bypass passage 2130 when positioned at the shutoff position, and has the motor-side forward-movement high-pressure connecting passage 2140 in a communicating condition and also fluidly connects the second end of the motor-side forward-movement high-pressure bypass passage 2130 to the motor-side forward-movement high-pressure connecting passage 2140 when positioned at the communicating position.

In the present embodiment, the driving-mode switching valve 620G is configured so as to selectively take the shutoff position and the communicating position according to a manual operation.
Specifically, the driving-mode switching valve 620G includes a valve main body 621G which is mounted in a movable manner along an axis line in a mounting hole 2150 formed in the valve block 2100, a coil spring 625G which presses the valve main body 621G toward one side in the axis line, and a push pin 629G capable of operated from outside for pressing the valve main body 621G toward the other side in the axis line against a pressing force of the coil spring 625G, as shown in Fig. 36.

The mounting hole 2150 is formed so as to fluidly connect between the motor-side forward-movement high-pressure bypass passage 2130 and the motor-side forward-movement high-pressure connecting passage 2140.
The valve main body 621G is mounted in the mounting hole 2150 in a movable manner along the axis line, and includes a large-diameter portion 622 G which is liquid-tightly brought into contact with an inner surface of the mounting hole 2150.

The large-diameter portion 622G shuts off the motor-side forward-movement high-pressure connecting passage 2140 and also fluidly disconnects the motor-side forward-movement high-pressure bypass passage 2130 to the motor-side forward-movement high-pressure connecting passage 2140 when the valve main body 621G is positioned at the shutoff position, and has the motor-side forward-movement high-pressure connecting passage 2140 in the communicating condition and also fluidly connects the motor-side forward-movement high-pressure bypass passage 2130 to the motor-side forward-movement high-pressure connecting passage 2140 when the valve main body 621G is positioned at the communicating position.

The coil spring 625G presses the valve main body 621G toward either one of the communicating position or the shutoff position.
In the present embodiment, the coil spring 625G presses the valve main body 621G toward the communicating position.

Specifically, when the valve main body 621G is positioned at the shutoff position against the pressing force of the coil spring 625G through the push pin 629G, the pair of motor-side forward-movement high-pressure passages 2120 are fluidly disconnected to each other, and the motor-side forward-movement high-pressure bypass passage 2130 is fluidly disconnected to the motor-side forward-movement high-pressure connecting passage 2140, whereby the working vehicle 1G is in the right-left differential-lock driving state.

On the other hand, when no operational force is applied on the push pin 629G from outside, the valve main body 621G is positioned at the communicating position by the coil spring 625G (Fig. 36 shows this state) so that the pair of motor-side forward-movement high-pressure passages 2120 are fluidly connected to each other through the motor-side forward-movement high-pressure connecting passage 2140 and the motor-side forward-movement high-pressure bypass passage 2130 is fluidly connected to the motor-side forward-movement high pressure connecting passage 2140, whereby the working vehicle 1G is in the right-left differential driving state without being subjected to fluid load of the flow dividing/combining mechanism 640G.

A first chamber 2160(1) in which the coil spring 625 is accommodated and a second chamber 2160(2) positioned on a side opposite to the first chamber 2160(1) with the valve main body 621G being sandwiched therebetween are opened outward through a drain port (not shown) for allowing the valve main body 621G to move in the mounting hole 2150 along the axis line.
A reference numeral 2165 in Fig. 36B denotes an axial hole for fluidly connecting between the first chamber 2160(1) and the second chamber 2160(2), and the axial hole 2165 makes it possible that both the first and second chambers 2160(1), 2160(2) are opened outward only by provision of the single drain port.

In each of the above embodiments, the explanation has been made by taking, as an example, the wheel motor device 500, 500F in which the hydraulic motor unit 100 and the reducing gear unit 200 are securely connected to each other, the wheel motor device 500 being suitably applied to the working vehicle of an articulate type, but the present invention is not limited to the configuration.

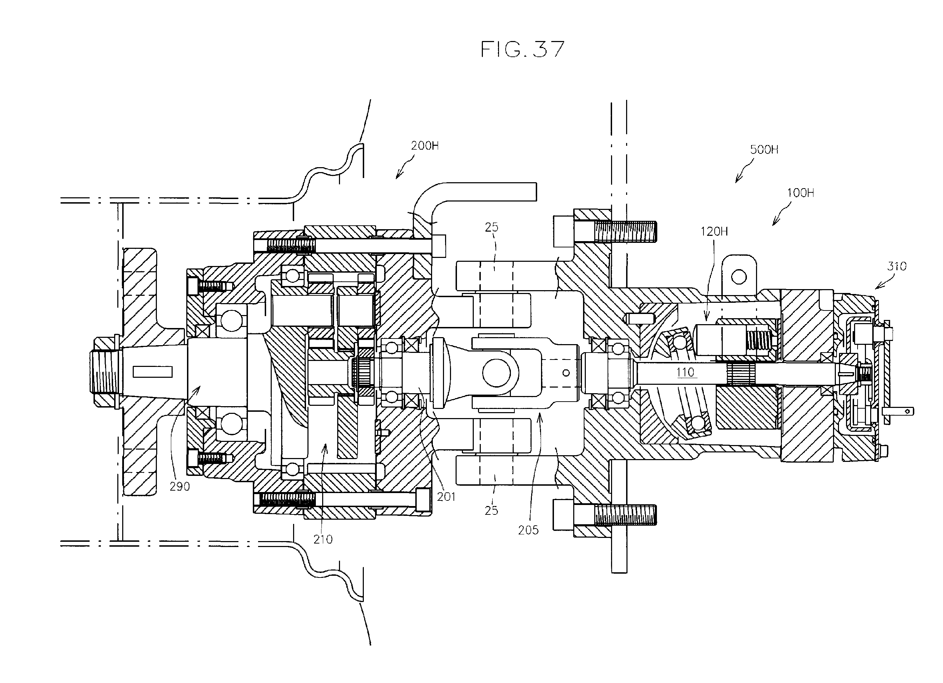

In a working vehicle in which at least one of the pair of first driving wheels 21(1) and the pair of second driving wheels 21(2) are steered by way of an Ackermann/Jandt steering mechanism, it is needed to arrange the pair of driving wheels to be steered in a swingable manner about a king pin with respect to a vehicle frame.
In a case where such steering wheel is driven, a wheel motor device 500H in which a hydraulic motor unit 100H and a reduction gear unit 200H are capable of swinging about a king pin 25 to each other, and the motor shaft 110 in the hydraulic motor unit 100H and the input shaft 201 in the reduction gear unit 200H are connected by way of a universal joint 205 to each other, could be used as shown in Fig. 37.

In the wheel motor device 500H shown in Fig. 37, the king pin 25 and the universal joint 205 are positioned at a low torque transmission region before the speed of the rotational power output from the hydraulic motor unit 100H is reduced. Therefore, it is possible to reduce the load applied on the king pin 25 and the universal joint 205, thereby miniaturizing the connecting structure for connecting the hydraulic motor unit 100H and the reduction gear unit 200H through the king pin 25 and the universal joint 205.

In the working vehicle in which at least one of the pair of first driving wheels 21(1) and the pair of second driving wheels 21(2) are steered by way of the Ackermann/Jandt steering mechanism, it is needed to compensate a difference in turning radius between the first driving wheel 21(1) and the second driving wheel 21(2) when the working vehicle is driven in the series driving mode in which the first hydraulic motor main bodies 120(1) for driving the first driving wheels 21(1) and the second hydraulic motor main bodies 120(2) for driving the second riving wheels 21(2) are fluidly connected in series with respect to the hydraulic pump main body 420.

In this regards, at least one of the hydraulic motor main bodies 120H for driving the driving wheels to be steered out of the first and second driving wheels 21(1), 21(2) is of a variable displacement type (see Fig. 37), and the suction/discharge amount of the variable displacement type hydraulic motor main body 120H is changed in conjunction with the steering angle, so that the difference in turning radius between the first and second driving wheels 21(1), 21(2) can be effectively compensated.

This specification is by no means intended to restrict the present invention to the preferred embodiments set forth therein. Various modifications to the working vehicle may be made by those skilled in the art without departing from the spirit and scope of the present invention as defined in the appended claims.

## Claims

1. A hydraulic wheel-drive working vehicle (1G) comprising a driving power source (30); a pair of left and right driving wheels (21); a hydraulic pump (420) operatively driven by the driving power source; an axle-driving device (50) including a pair of left and right hydraulic motors (120) fluidly connected to the hydraulic pump so as to output rotational power for respectively driving the pair of driving wheels; a pump-side forward-movement high-pressure line (700) into which the hydraulic pump discharges the hydraulic fluid at the forward movement of the vehicle; a pump-side forward-movement low-pressure line (710) from which the hydraulic pump suctions the hydraulic fluid at the forward movement of the vehicle; a pair of left and right motor-side forward-movement high-pressure lines (740) fluidly connected to the pump-side forward-movement high-pressure line in a direct or indirect manner and supplying the hydraulic fluid respectively towards the pair of left and right hydraulic motors at the forward movement of the vehicle; a pair of left and right motor-side forward-movement low-pressure lines (750) returning the hydraulic fluid, which has been discharged from the pair of left and right hydraulic motors at the forward movement of the vehicle, to the pump-side forward-movement low-pressure line in a direct or indirect manner; a driving-mode switching valve (620G) for selectively communicating or shutting off between the pair of left and right motor-side forward-movement high-pressure lines (740); and a flow dividing/combining mechanism (640G) disposed between the pump-side forward-movement high-pressure line and the pair of left and right motor-side forward-movement high-pressure lines, wherein at least one of the hydraulic pump and the pair of hydraulic motors are of a variable displacement type, the hydraulic wheel-drive working vehicle comprising,
a motor-side forward-movement high-pressure bypass line (745G) having a first end fluidly connected to the pump-side forward-movement high-pressure line on an upstream side than the flow dividing/combining mechanism with the forward movement of the vehicle as a reference, and
the driving-mode switching valve selectively taking a shutoff position of fluidly disconnecting between the pair of motor-side forward-movement high-pressure lines and also closing a downstream side of the motor-side forward-movement high-pressure bypass line with the forward movement of the vehicle as a reference, and a communicating position of fluidly connecting the downstream side of the motor-side forward-movement high-pressure bypass line with the forward movement of the vehicle as a reference to the pair of motor-side forward-movement high-pressure lines in a direct or indirect manner.

2. A hydraulic wheel-drive working vehicle (1G) according to claim 1, further comprising,
a hydraulic pump unit (40) including the hydraulic pump, and
a valve unit (2000) including the driving-mode switching valve and the flow dividing/combining mechanism, wherein
the axle-driving device includes a pair of left and right wheel motor devices (500) which respectively have the pair of left and right hydraulic motors and which are disposed away from the hydraulic pump unit so as to be respectively positioned close to the pair of left and right driving wheels,
the valve block is formed with a valve unit-side forward-movement high-pressure passage which forms a part of the pump-side forward-movement high-pressure line and which has a first end opened to an outer surface to form a valve unit-side forward-movement high-pressure inlet port (2110(P)), a pair of left and right motor-side forward-movement high-pressure passages which forms the pair of left and right motor-side forward-movement high-pressure lines and which has first ends fluidly connected to the valve unit-side forward-movement high-pressure passage through the flow dividing/combining mechanism and second ends opened to an outer surface to form valve unit-side forward-movement high-pressure outlet ports, a motor-side forward-movement high-pressure bypass passage which forms the motor-side forward-movement high-pressure bypass line and which has a first end fluidly connected to the valve unit-side forward-movement high-pressure passage on an upstream side than the flow dividing/combining mechanism with the forward movement as a reference and a second end fluidly connected to the driving-mode switching valve, and a motor-side forward-movement high-pressure connecting passage which fluidly connecting between the pair of left and right motor-side forward-movement high-pressure passages, and
the driving-mode switching valve shuts off the motor-side forward-movement high pressure connecting passage and also closes the second end of the motor-side forward-movement high pressure bypass passage when positioned at the shutoff position, and has the motor-side forward-movement high pressure connecting passage in a communicating condition and also fluidly connects the second end of the motor-side forward-movement high pressure bypass passage to the motor-side forward-movement high pressure connecting passage when positioned at the communicating position.
